# EUROPEAN PATENT APPLICATION

(11) **EP 4 318 263 A1**
(43) Date of publication of application: **07.02.2024**
(21) Application number: 23176649.4
(22) Date of filing: 01.06.2023
(51) Int. Cl.: G06F 16/23, G06F 16/27

(54) **INFORMATION PROCESSING PROGRAM, INFORMATION PROCESSING METHOD, AND INFORMATION PROCESSING APPARATUS**

(30) Priority: 05.08.2022 JP 2022125918
(71) Applicant: FUJITSU LIMITED, Kawasaki-shi, Kanagawa 211-8588 (JP)
(72) Inventor: NAGATA, Nami, Kawasaki-shi, Kanagawa, 211-8588 (JP); ITO, Akira, Kawasaki-shi, Kanagawa, 211-8588 (JP)
(74) Representative: Hoffmann Eitle

(57) **Abstract**

An information processing program comprising instructions which, when executed by a computer, cause the computer to execute processing including: accepting a first request of newly coupling a second block before a first block managed by the computer, among a plurality of blocks formed to include identifiers of other blocks coupled before and after each block in the block; and controlling, in a case where the first request is accepted, the plurality of blocks such that a copy of the first block is added to the plurality of blocks and coupled after the second block.

## Description

### FIELD

The embodiment discussed herein is related to an information processing program, an information processing method, and an information processing apparatus.

### BACKGROUND

In the related art, there is a system called a chain data lineage (CDL) that generates a series of blocks, which is a data block that records contents and the like of a process, formed such that each block includes identifiers of other blocks existing before and after the block. The series of blocks is also called, for example, a hash chain. For example, the respective blocks may be managed by different computers.

As the related art, for example, there is a technique in which, when a first process related to first data is executed, pointer information in which an original identifier that is an identifier of a history of a process related to the first data performed before the execution of the first process and a next identifier that is an identifier of the history of the first process are associated with each other is stored.

Examples of the related art include Japanese Laid-open Patent Publication No. 2022-035494.

### SUMMARY

### TECHNICAL PROBLEM

Meanwhile, in the related art, in some cases, it is not possible to flexibly update the hash chain. For example, due to the specification of the hash chain, since an identifier of another block existing before a block may be recorded in the block only when the block is generated, the another block may not be coupled to the block before the block afterward.

In one aspect, an object of the present disclosure is to flexibly update data.

### SOLUTION TO PROBLEM

According to an aspect of the embodiments, there is provided an information processing program comprising instructions which, when executed by a computer, cause the computer to execute processing includes: accepting a first request of newly coupling a second block before a first block managed by the computer, among a plurality of blocks formed to include identifiers of other blocks coupled before and after each block in the block; and controlling, in a case where the first request is accepted, the plurality of blocks such that a copy of the first block is added to the plurality of blocks and coupled after the second block.

### ADVANTAGEOUS EFFECTS OF INVENTION

According to one aspect, it is possible to flexibly update data.

### BRIEF DESCRIPTION OF DRAWINGS

FIG. 1 is an explanatory diagram illustrating an example of an information processing method according to an embodiment;
FIG. 2 is an explanatory diagram illustrating an example of an information processing system;
FIG. 3 is an explanatory diagram (part 1) illustrating an example of a CDL;
FIG. 4 is an explanatory diagram (part 2) illustrating the example of the CDL;
FIG. 5 is an explanatory diagram (part 3) illustrating the example of the CDL;
FIG. 6 is an explanatory diagram (part 4) illustrating the example of the CDL;
FIG. 7 is a block diagram illustrating a hardware configuration example of an information processing apparatus;
FIG. 8 is a block diagram illustrating a functional configuration example of the information processing apparatus;
FIG. 9 is a block diagram illustrating a specific example of the functional configuration of the information processing system;
FIG. 10 is an explanatory diagram illustrating a first example of an operation of the information processing apparatus;
FIG. 11 is an explanatory diagram illustrating a second example of the operation of the information processing apparatus;
FIG. 12 is an explanatory diagram illustrating an example of registering new data in a first specific example;
FIG. 13 is a flowchart illustrating an example of an own-company registration process procedure in the first specific example;
FIG. 14 is a flowchart illustrating an example of a new registration process procedure in the first specific example;
FIG. 15 is a flowchart illustrating an example of a correction registration process procedure in the first specific example;
FIG. 16 is an explanatory diagram illustrating an example of a lineage representing a branch;
FIG. 17 is an explanatory diagram illustrating an example of storing a coupling state of the lineage;
FIG. 18 is an explanatory diagram illustrating an example of a lineage representing merging;
FIG. 19 is an explanatory diagram illustrating an example of storing a coupling state of the lineage;
FIG. 20 is an explanatory diagram illustrating an example of forming a lineage representing merging;
FIG. 21 is an explanatory diagram illustrating an example of a JSON format for registration of copy data;
FIG. 22 is a flowchart illustrating an example of a copy registration process procedure in the first specific example;
FIG. 23 is an explanatory diagram illustrating an example of invalidation;
FIG. 24 is an explanatory diagram illustrating an example of a lineage representing the invalidation;
FIG. 25 is an explanatory diagram illustrating an example of storing a coupling state of the lineage;
FIG. 26 is an explanatory diagram illustrating a specific example in which registration data is invalidated;
FIG. 27 is an explanatory diagram illustrating an example of a JSON format for registration of invalidation data;
FIG. 28 is a flowchart illustrating an example of a branch registration process procedure;
FIG. 29 is a flowchart illustrating an example of a first invalidation process procedure;
FIG. 30 is a flowchart illustrating an example of a second invalidation process procedure;
FIG. 31 is an explanatory diagram (part 1) illustrating another example of the invalidation;
FIG. 32 is an explanatory diagram (part 2) illustrating the another example of the invalidation;
FIG. 33 is an explanatory diagram illustrating another specific example in which the registration data is invalidated;
FIG. 34 is a flowchart illustrating an example of a third invalidation process procedure;
FIG. 35 is a flowchart illustrating an example of a fourth invalidation process procedure;
FIG. 36 is an explanatory diagram illustrating an example of a data structure of various notifications;
FIG. 37 is an explanatory diagram illustrating an example of a data structure of a non-registration list;
FIG. 38 is an explanatory diagram illustrating an example of a data structure of a registration-completion list;
FIG. 39 is a flowchart illustrating an example of a visualization process procedure;
FIG. 40 is an explanatory diagram illustrating an example of a horizontal chain;
FIG. 41 is an explanatory diagram illustrating an example of a vertical chain;
FIG. 42 is an explanatory diagram illustrating a specific example of a block of the horizontal chain;
FIG. 43 is an explanatory diagram illustrating a specific example of a block of the vertical chain;
FIG. 44 is an explanatory diagram illustrating an example of registering new data in a second specific example;
FIG. 45 is a flowchart illustrating an example of an own-company registration process procedure in the second specific example;
FIG. 46 is a flowchart illustrating an example of a new registration process procedure in the second specific example;
FIG. 47 is a flowchart illustrating an example of a correction registration process procedure in the second specific example;
FIG. 48 is an explanatory diagram illustrating another example of the data structure of the various notifications;
FIG. 49 is an explanatory diagram illustrating an example of a data structure of a non-registration list;
FIG. 50 is an explanatory diagram illustrating an example of a data structure of a registration-completion list;
FIG. 51 is an explanatory diagram illustrating another example of forming the lineage representing merging; and
FIG. 52 is a flowchart illustrating an example of a copy registration process procedure in the second specific example.

### DESCRIPTION OF EMBODIMENTS

Hereinafter, an embodiment of an information processing program, an information processing method, and an information processing apparatus according to the present disclosure is described in detail with reference to the drawings.

### (Example of Information Processing Method According to Embodiment)

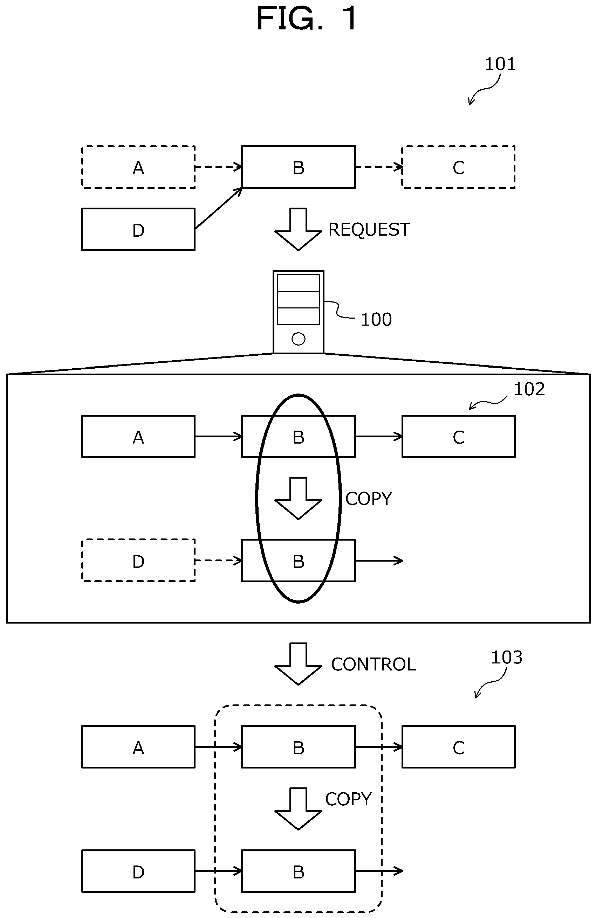

FIG. 1 is an explanatory diagram illustrating an example of an information processing method according to an embodiment. An information processing apparatus 100 is a computer capable of flexibly updating target data. For example, the information processing apparatus 100 is a server, a personal computer (PC), or the like.

For example, the target data includes a plurality of blocks. For example, the target data includes a series of blocks obtained by coupling two or more different blocks. For example, the plurality of blocks form one or more hash chains. For example, the plurality of blocks form one or more CDLs. An entity of the target data may be stored in one or more computers other than the information processing apparatus 100, for example. For example, the information processing apparatus 100 manages at least any one block of the plurality of blocks included in the target data.

For example, in a case where a new block is requested to be added after any existing block in a hash chain, an ID of the existing block is acquired, and the new block storing the ID of the existing block is generated and added after the existing block. The ID is identification information (identification). According to the addition of the new block after the existing block, an ID of the added new block is stored in the existing block. In this manner, by adding the new block, the hash chain is formed and updated.

Meanwhile, in the related art, in some cases, it is not possible to flexibly update a hash chain. For example, due to the specification of the hash chain, only when a new block is generated, an ID of an existing block existing before the new block may be stored in the new block. Therefore, even when another block is coupled afterward before the existing block, it is not possible to store an ID of the another block in the existing block. Accordingly, it is not possible to couple the another block before the existing block afterward.

For example, due to the specification of the hash chain, an existing block may not be deleted, and the existing block may not be invalidated by deleting the existing block. Therefore, when among two consecutive existing blocks, a new block to be replaced with the subsequent existing block is coupled afterward after the previous existing block, invalidation of the subsequent existing block may not be represented in the hash chain.

In the present embodiment, an information processing method capable of flexibly updating target data will be described.

In FIG. 1, target data including a plurality of blocks exists. The block is a collection of one or more pieces of data. The block includes, for example, identifiers of other blocks coupled before and after the block. For example, the plurality of blocks are formed such that each block includes identifiers of other blocks coupled before and after the block.

For example, the plurality of blocks form a hash chain. For example, the plurality of blocks form a CDL. The information processing apparatus 100 manages at least any one block of the plurality of blocks. For example, the information processing apparatus 100 manages a first block among the plurality of blocks.

In the example in FIG. 1, the target data includes a block A, a block B, a block C, and a block D. For example, the block B is coupled after the block A. The block C is coupled after the block B. For example, the block D exists independently of the other blocks. An entity of the target data may be stored in one or more computers other than the information processing apparatus 100 in a distributed manner, for example.

The information processing apparatus 100 accepts a first request to newly couple a second block before the first block. For example, the information processing apparatus 100 receives the first request from another computer to accept the first request. The another computer is, for example, a computer that generates the second block, and adds the second block to the plurality of blocks. As indicated by reference numeral 101 in the example in FIG. 1, the information processing apparatus 100 accepts a first request to newly couple the block D before the block B.

(1-2) In a case where the first request is accepted, the information processing apparatus 100 controls the plurality of blocks such that a copy of the first block is added to the plurality of blocks and coupled after the second block. As indicated by reference numeral 102 in the example in FIG. 1, the information processing apparatus 100 determines that the block D is newly coupled before the block B in a pseudo manner by coupling a copy of the block B after the block D instead of the block B, and controls the plurality of blocks.

For example, the information processing apparatus 100 controls any computer that stores an entity of the target data in a distributed manner such that the copy of the block B is coupled after the block D, instead of the block B. For example, as indicated by reference numeral 103, the any computer generates the copy of the block B instead of the block B, adds the copy to the plurality of blocks, and couples the copy of the block B after the block D, in accordance with the control of the information processing apparatus 100.

Thus, in a case where it is difficult to couple the second block before the first block due to the specification of the plurality of blocks, the information processing apparatus 100 may represent a sequence relationship between the first block and the second block, by using the copy of the first block. Accordingly, the information processing apparatus 100 may flexibly update the target data by making it possible to refer to the sequence relationship of the first block and the second block, by using the copy of the first block. For example, the information processing apparatus 100 is capable of coupling the second block afterward before the existing first block, in a pseudo manner.

Here, the case where the information processing apparatus 100 accepts the first request to newly couple the second block before the first block is described, and the embodiment is not limited thereto. For example, there may be a case where the information processing apparatus 100 accepts a second request to invalidate a third block managed by the information processing apparatus 100 among the plurality of blocks.

In this case, it is considered that the information processing apparatus 100 controls the plurality of blocks such that a fourth block indicating that the third block is to be invalidated is added to the plurality of blocks and coupled after the third block. Thus, in a case where it is difficult to delete the third block due to the specification of the plurality of blocks, the information processing apparatus 100 may represent that the third block is invalidated by using the fourth block indicating that the third block is to be invalidated. Accordingly, the information processing apparatus 100 is capable of flexibly updating the target data.

Here, although the case where the information processing apparatus 100 operates alone is described, the embodiment is not limited to this. For example, there may be a case where the information processing apparatus 100 realizes the function as the information processing apparatus 100 described above, in cooperation with another computer. For example, a plurality of computers may realize the functions as the information processing apparatus 100 described above. For example, there may be a case where the function as the information processing apparatus 100 described above is realized in a cloud.

### (Example of Information Processing System 200)

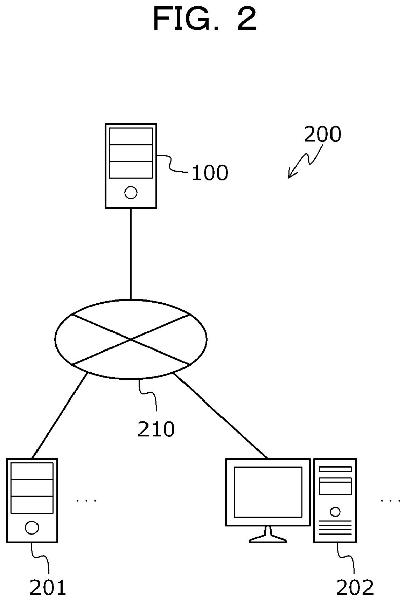

Next, a case where the information processing apparatus 100 illustrated in FIG. 1 is applied to an information processing system 200 will be described with reference to FIG. 2.

FIG. 2 is an explanatory diagram illustrating an example of the information processing system 200. In FIG. 2, the information processing system 200 includes one or more information processing apparatuses 100, one or more lineage management apparatuses 201, and one or more client apparatuses 202.

In the information processing system 200, the information processing apparatus 100 and the lineage management apparatus 201 are coupled to each other via a wired or wireless network 210. The network 210 is, for example, a local area network (LAN), a wide area network (WAN), the Internet, or the like. In the information processing system 200, the information processing apparatus 100 and the client apparatus 202 are coupled to each other via the wired or wireless network 210.

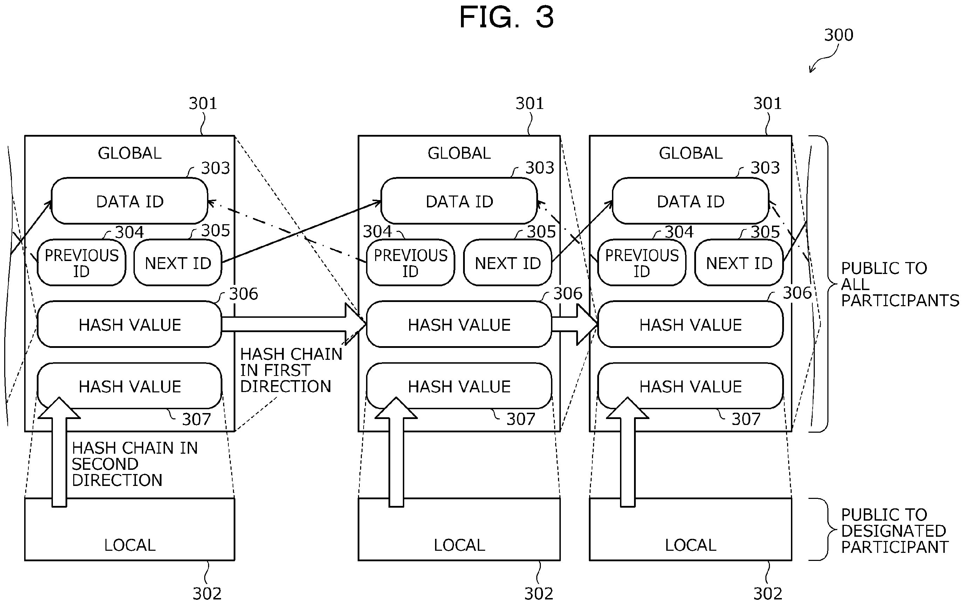

The information processing apparatus 100 is a computer capable of flexibly updating target data. The target data includes a plurality of blocks. For example, the plurality of blocks form one or more hash chains. For example, the plurality of blocks include a series of blocks serving as the hash chain. For example, the plurality of blocks form one or more CDLs. For example, the plurality of blocks include a series of blocks serving as the CDL. In the following description, it is assumed that the target data includes a plurality of blocks forming one CDL, for example. An example of the CDL will be described below with reference to FIGs. 3 to 6, for example.

The information processing apparatus 100 is capable of controlling a CDL. For example, it is assumed that the information processing apparatus 100 is capable of controlling at least any one block of the plurality of blocks forming the CDL. For example, the information processing apparatus 100 is capable of controlling the CDL by controlling any lineage management apparatus 201 that manages at least any one block of the plurality of blocks forming the CDL. For example, the information processing apparatus 100 is capable of controlling the CDL so as to add a new block to the CDL by controlling the lineage management apparatus 201.

The information processing apparatus 100 receives an update request of updating a CDL, from the client apparatus 202. For example, the update request is a coupling request for newly coupling another block before any existing block of the plurality of blocks. For example, the update request is an invalidation request of invalidating any existing block among the plurality of blocks. For example, the information processing apparatus 100 receives the coupling request, the invalidation request, or the like from the client apparatus 202.

According to the received update request, the information processing apparatus 100 controls the CDL. For example, according to the received update request, the information processing apparatus 100 controls any of the lineage management apparatuses 201 that manages at least any one block of the plurality of blocks forming the CDL. By controlling the lineage management apparatus 201 in accordance with the received update request, the information processing apparatus 100 controls the CDL, and adds the new block to the CDL.

The information processing apparatus 100 may receive a display request of displaying the CDL from the client apparatus 202. According to the received display request, the information processing apparatus 100 generates a display content representing the CDL. For example, the information processing apparatus 100 generates a display content with which a sequence relationship of the plurality of blocks forming the CDL may be specified. The information processing apparatus 100 transmits the generated display content representing the CDL to the client apparatus 202. The information processing apparatus 100 is used by a system operator. For example, the information processing apparatus 100 is a server, a PC, or the like.

The lineage management apparatus 201 is a computer for storing at least any block forming the CDL. For example, the lineage management apparatus 201 stores and manages any block handled by the information processing apparatus 100, among the plurality of blocks forming the CDL. Under the control of the information processing apparatus 100, the lineage management apparatus 201 updates the CDL. For example, the lineage management apparatus 201 adds a new block to the CDL, under the control of the information processing apparatus 100. The lineage management apparatus 201 is used by the system operator. For example, the lineage management apparatus 201 is a server, a PC, or the like.

The client apparatus 202 is a computer used by a system user. Based on an operation input by the system user, the client apparatus 202 generates an update request of updating the CDL, and transmits the generated update request to the information processing apparatus 100. Based on the operation input by the system user, the client apparatus 202 generates a display request indicating that the CDL is to be displayed, and transmits the generated display request to the information processing apparatus 100. The client apparatus 202 receives the display content representing the CDL from the information processing apparatus 100, and outputs the display content such that the system user may refer to the display content. For example, the client apparatus 202 is a PC, a tablet terminal, a smartphone, or the like.

Although the case where the information processing apparatus 100 is different from the lineage management apparatus 201 is described, the embodiment is not limited to this. For example, in some cases, the information processing apparatus 100 may have a function as the lineage management apparatus 201, and may also operate as the lineage management apparatus 201.

Although the case where the information processing apparatus 100 is different from the client apparatus 202 is described, the embodiment is not limited to this. For example, the information processing apparatus 100 may have the function as the client apparatus 202, and may also operate as the client apparatus 202.

### (Use Example of Information Processing System 200)

Next, a use example of the information processing system 200 will be described. For example, in some cases, the information processing system 200 is used for management of a supply chain. In this case, each lineage management apparatus 201 is used by a participant of the supply chain. The participant corresponds to the system operator described above. The participant is, for example, an individual, an organization, or the like. For example, a CDL is formed by a plurality of blocks such as a block corresponding to a final product, a block corresponding to a component of the final product, and a block corresponding to a material of the component. For example, the CDL manages a manufacturing process of the product.

### (Example of CDL 300)

Next, an example of a CDL 300 will be described with reference to FIGs. 3 to 6.

FIGs. 3 to 6 are explanatory diagrams illustrating an example of the CDL 300. As illustrated in FIG. 3, the CDL 300 includes one or more blocks 301 coupled to each other in a first direction and one or more blocks 302 coupled to the block 301 in a second direction. The block 301 is stored by the lineage management apparatus 201. The block 302 is stored by the lineage management apparatus 201.

The block 301 includes a data ID 303, a previous ID 304, a next ID 305, a hash value 306, and a hash value 307. The data ID 303 is identification information for identifying the block 301. The previous ID 304 is a data ID 303 of another block 301 coupled immediately before the block 301. The next ID 305 is a data ID 303 of still another block 301 coupled after the block 301.

One hash value 306 is a hash value related to the another block 301 coupled immediately before the own block 301, and is an element for enabling a hash chain to be formed in the first direction. Another hash value 307 is a hash value related to another block 302 coupled to the own block 301, and is an element for enabling a hash chain to be formed in the second direction.

Each of one or more blocks 301 forms a hash chain in the first direction, by using the hash value 306 of the block 301. Each of the blocks 301 and the block 302 coupled to the block 301 form a hash chain in the second direction, by using the hash value 307 of the block 301.

For example, the block 301 corresponds to a participant of a supply chain. The block 301 is a global block including data to be made public to all participants. For example, the data is data related to a final product, a component, a material, or the like. The block 302 is coupled after the block 301. The block 302 is a local block including data to be made public to a designated participant. For example, the data is data related to a final product, a component, a material, or the like.

At a time of adding a new block 301 to the CDL 300, the lineage management apparatus 201 sets, in the new block 301, a data ID 303 of another block 301 coupled immediately before the new block 301, as a previous ID 304. At the time of adding the new block 301 to the CDL 300, the lineage management apparatus 201 sets, in the another block 301 coupled immediately before the new block 301, a data ID 303 of the new block 301, as a next ID 305.

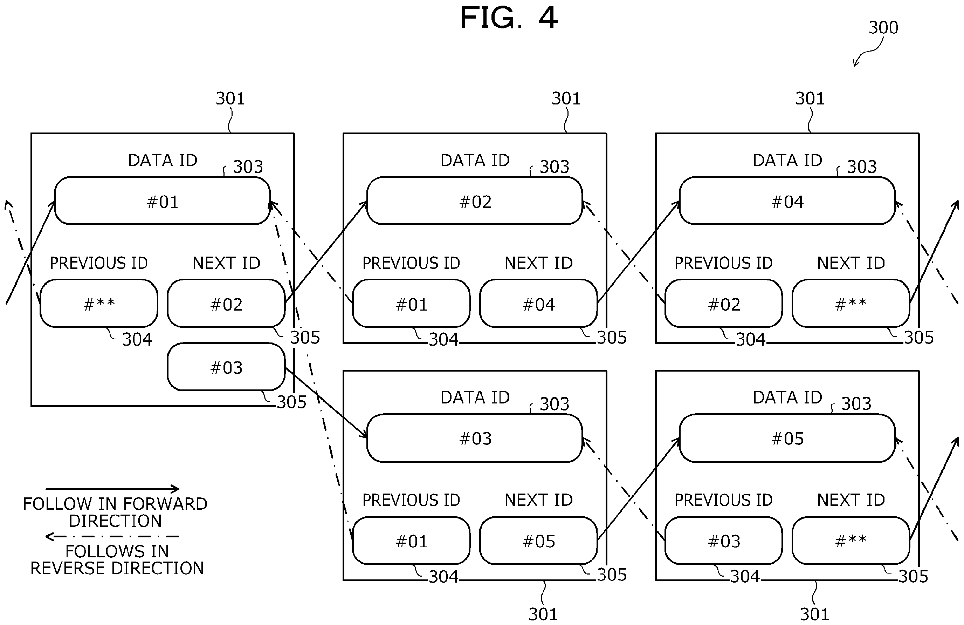

For example, the CDL 300 may include branch, merging, or the like of the block 301. By forming the hash chain with one or more blocks 302 in the first direction and forming the hash chain with the block 301 and the block 301 in the second direction, the information processing system 200 may improve tamper resistance. Next, description continues with reference to FIG. 4.

As illustrated in FIG. 4, in the CDL 300, the block 301 with a data ID 303 "#02" and the block 301 with a data ID 303 "#03" are coupled after the block 301 with a data ID 303 "#01". In the example in FIG. 4, the CDL 300 is branched from the block 301 with the data ID 303 "#01" to the block 301 with the data ID 303 "#02" and the block 301 with the data ID 303 "#03". The CDL 300 may include merging of the blocks 301 and the like.

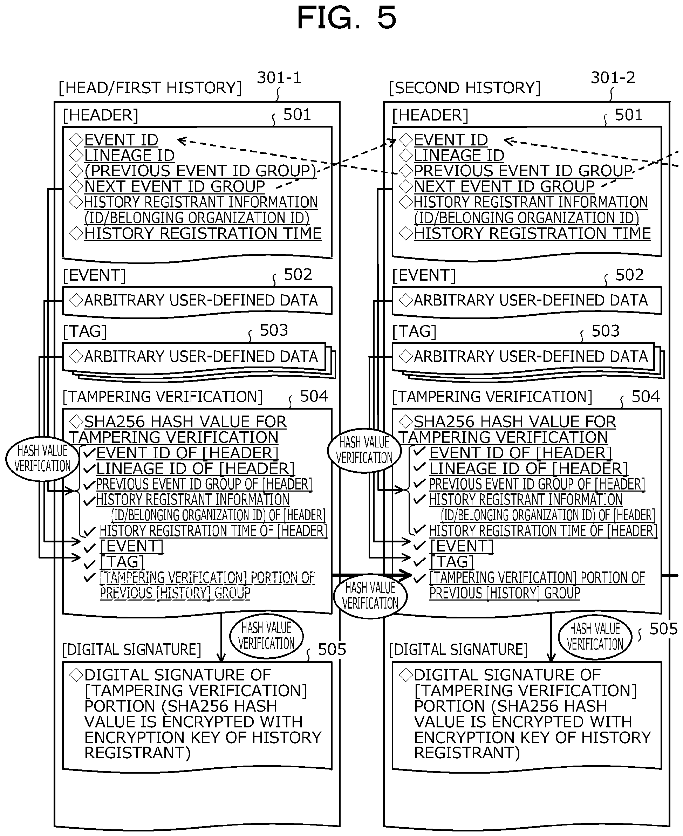

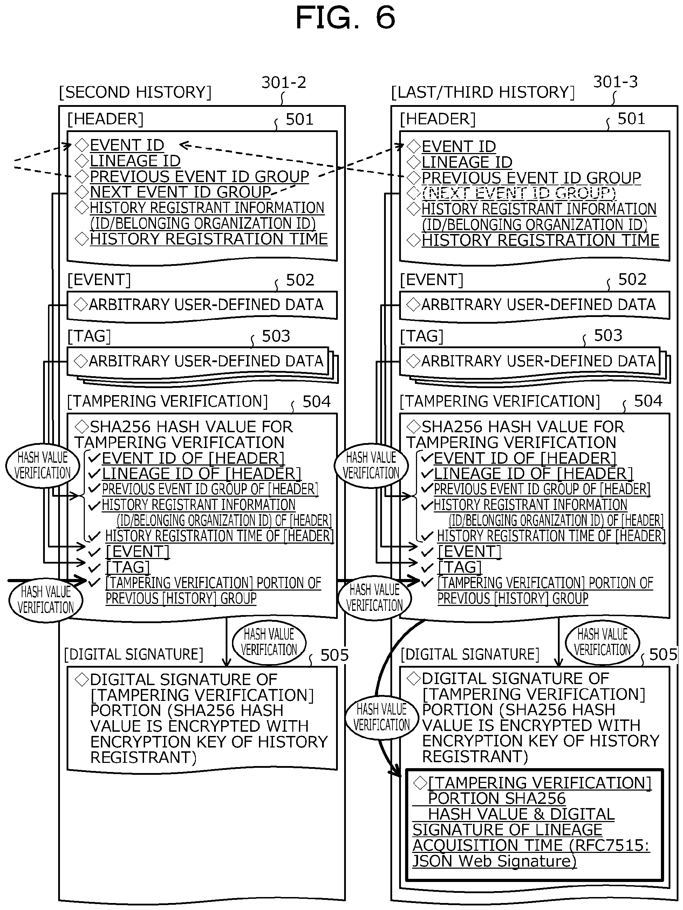

By following the previous ID 304 of each block 301, it is possible to follow two or more blocks 301 coupled in a forward direction. By following the next ID 305 of each block 301, it is possible to follow each block 301 in a backward direction. In this manner, the CDL 300 represents a sequence relationship between the blocks 301, and stores a correspondence relationship having an order relationship between pieces of data of the blocks 301 so as to have tamper resistance. Next, description continues with reference to FIGs. 5 and 6, and a specific content of the block 301 will be described.

As illustrated in FIG. 5, each block 301 forming the CDL 300 includes a header 501, an event 502, a tag 503, a tampering verification 504, and a digital signature 505. Here, it is assumed that a CDL is formed by three blocks 301.

In the following description, in some cases, the head block 301 of the CDL 300 is referred to as a "block 301-1". In the following description, in some cases, the second block 301 in the CDL 300 is referred to as a "block 301-2". In the following description, in some cases, the last block 301 of the CDL 300 is referred to as a "block 301-3".

The header 501 of the block 301-1 includes, for example, an event ID, a lineage ID, a previous event ID group, a next event ID group, history registrant information, and a history registration time. The event ID is an ID of the own block 301. The event ID corresponds to, for example, a data ID. The lineage ID is an ID of the CDL 300.

The previous event ID group includes an ID of another block 301 coupled immediately before the own block 301 corresponding to the "previous ID 304" described above. The previous event ID group is determined when the own block 301 is generated. Since the block 301-1 is the head block 301, the previous event ID group is empty in the block 301-1. The next event ID group includes an ID of still another block 301 coupled next to the own block 301 corresponding to the "next ID 305" described above. The next event ID group is empty when the own block 301 is generated, and an ID of the block 301-2 is set when the block 301-2 is generated.

The history registrant information is information indicating a supply chain participant who requests generation and addition of the block 301. The history registration time is a time when the block 301 is added to the CDL 300. The event 502 in the block 301-1 includes, for example, user-defined data indicating an event, which is designated by the participant. For example, the user-defined data may be information on a final product, a component, or a material. The event 502 in the block 301-1 corresponds to, for example, a global block. The tag 503 of the block 301-1 includes user-defined data serving as a tag, which is designated by the participant. The tag 503 of the block 301-1 corresponds to, for example, a local block.

The tampering verification 504 of the block 301-1 includes a hash value of a secure hash algorithm (SHA) 256 for tampering verification. For example, the tampering verification 504 includes a hash value of the event ID of the header 501, a hash value of the lineage ID of the header 501, and a hash value of the previous event ID group of the header 501.

For example, the tampering verification 504 includes a hash value of the history registrant information in the header 501 and a hash value of the history registration time in the header 501. For example, the tampering verification 504 includes a hash value of the event 502 and a hash value of the tag 503. For example, the tampering verification 504 may include the tampering verification 504 of another block 301 group coupled immediately before the own block 301. Since the block 301-1 is the head block 301, in the block 301-1, the tampering verification 504 may not include the tampering verification 504 of the another block 301 group.

The digital signature 505 in the block 301-1 is a digital signature for the tampering verification 504. By verifying the digital signature 505, authenticity of the tampering verification 504 may be verified. By verifying the tampering verification 504, it is possible to verify authenticity of the header 501, the event 502, and the tag 503. By the verification of the tampering verification 504, when there is the another block 301 group coupled immediately before the own block 301, it is possible to verify authenticity of the another block 301 group.

The header 501 of the block 301-2 includes, for example, an event ID, a lineage ID, a previous event ID group, a next event ID group, history registrant information, and a history registration time. The event ID is an ID of the own block 301. The lineage ID is an ID of the CDL 300.

The previous event ID group includes an ID of another block 301 coupled immediately before the own block 301 corresponding to the "previous ID 304" described above. The previous event ID group is determined when the own block 301 is generated. Since the block 301-2 is the second block 301, the ID of the block 301-1 is set in the previous event ID group, in the block 301-2. The next event ID group includes an ID of still another block 301 coupled next to the own block 301 corresponding to the "next ID 305" described above. The next event ID group is empty when the own block 301 is generated, and an ID of the block 301-3 is set when the block 301-3 is generated.

The history registrant information is information indicating a supply chain participant who requests generation and addition of the block 301. The history registration time is a time when the block 301 is added to the CDL 300. The event 502 in the block 301-2 includes, for example, user-defined data indicating an event, which is designated by the participant. For example, the user-defined data may be information on a final product, a component, or a material. The tag 503 of the block 301-2 includes user-defined data serving as a tag, which is designated by the participant.

The tampering verification 504 in the block 301-2 includes a hash value of SHA 256 for tampering verification. For example, the tampering verification 504 includes a hash value of the event ID of the header 501, a hash value of the lineage ID of the header 501, and a hash value of the previous event ID group of the header 501.

For example, the tampering verification 504 includes a hash value of the history registrant information in the header 501 and a hash value of the history registration time in the header 501. For example, the tampering verification 504 includes a hash value of the event 502 and a hash value of the tag 503. For example, the tampering verification 504 may include the tampering verification 504 of another block 301 group coupled immediately before the own block 301. Since the block 301-2 is the second block 301, in the block 301-2, the tampering verification 504 includes the tampering verification 504 of the head block 301-1.

The digital signature 505 in the block 301-2 is a digital signature for the tampering verification 504. By verifying the digital signature 505, authenticity of the tampering verification 504 may be verified. By verifying the tampering verification 504, it is possible to verify authenticity of the header 501, the event 502, and the tag 503. By the verification of the tampering verification 504, when there is the another block 301 group coupled immediately before the own block 301, it is possible to verify authenticity of the another block 301 group. Next, description continues with reference to FIG. 6.

As illustrated in FIG. 6, the header 501 of the block 301-3 includes, for example, an event ID, a lineage ID, a previous event ID group, a next event ID group, history registrant information, and a history registration time. The event ID is an ID of the own block 301. The lineage ID is an ID of the CDL 300.

The previous event ID group includes an ID of another block 301 coupled immediately before the own block 301 corresponding to the "previous ID 304" described above. The previous event ID group is determined when the own block 301 is generated. Since the block 301-3 is the third block 301, the ID of the block 301-2 is set in the previous event ID group, in the block 301-3. The next event ID group includes an ID of still another block 301 coupled next to the own block 301 corresponding to the "next ID 305" described above. The next event ID group is empty when the own block 301 is generated. Since the block 301-3 is the third block 301, the next event ID group is empty in the block 301-3.

The history registrant information is information indicating a supply chain participant who requests generation and addition of the block 301. The history registration time is a time when the block 301 is added to the CDL 300. The event 502 in the block 301-3 includes, for example, user-defined data indicating an event, which is designated by the participant. For example, the user-defined data may be information on a final product, a component, or a material. The tag 503 of the block 301-3 includes user-defined data serving as a tag, which is designated by the participant.

The tampering verification 504 in the block 301-3 includes a hash value of SHA 256 for tampering verification. For example, the tampering verification 504 includes a hash value of the event ID of the header 501, a hash value of the lineage ID of the header 501, and a hash value of the previous event ID group of the header 501.

For example, the tampering verification 504 includes a hash value of the history registrant information in the header 501 and a hash value of the history registration time in the header 501. For example, the tampering verification 504 includes a hash value of the event 502 and a hash value of the tag 503. For example, the tampering verification 504 may include the tampering verification 504 of another block 301 group coupled immediately before the own block 301. Since the block 301-3 is the third block 301, in the block 301-3, the tampering verification 504 includes the tampering verification 504 of the head block 301-1.

The digital signature 505 in the block 301-3 includes a digital signature for the tampering verification 504. When the CDL 300 is read, a hash value of SHA 256 is added such that the digital signature 505 of the block 301-3 includes the hash value of SHA 256 for the tampering verification 504. By verifying the digital signature 505, authenticity of the tampering verification 504 may be verified. By verifying the tampering verification 504, it is possible to verify authenticity of the header 501, the event 502, and the tag 503. By the verification of the tampering verification 504, when there is the another block 301 group coupled immediately before the own block 301, it is possible to verify authenticity of the another block 301 group.

In this manner, since the tampering verification 504 of the block 301 forming the CDL 300 includes the hash value of the previous event ID group when the block 301 is generated, it is difficult to guarantee authenticity of the own block 301 when the previous event ID group is updated afterward. Accordingly, there is a characteristic that it is difficult to couple another block 301 afterward immediately before the block 301. On the other hand, the another block 301 may be coupled afterward immediately after the block 301.

### (Hardware Configuration Example of Information Processing Apparatus 100)

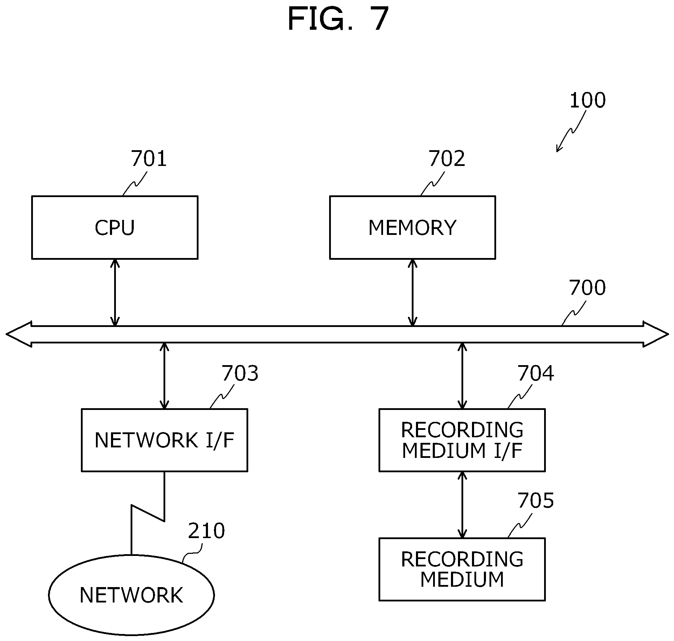

Next, a hardware configuration example of the information processing apparatus 100 will be described with reference to FIG. 7.

FIG. 7 is a block diagram illustrating the hardware configuration example of the information processing apparatus 100. In FIG. 7, the information processing apparatus 100 includes a central processing unit (CPU) 701, a memory 702, a network interface (I/F) 703, a recording medium I/F 704, and a recording medium 705. The respective components are coupled to each other through a bus 700.

The CPU 701 controls an entirety of the information processing apparatus 100. The memory 702 includes, for example, a read-only memory (ROM), a random-access memory (RAM), a flash ROM, and the like. For example, the flash ROM or the ROM stores various programs, and the RAM is used as a work area of the CPU 701. The program stored in the memory 702 is loaded by the CPU 701, and causes the CPU 701 to execute coded processes.

The network I/F 703 is coupled to the network 210 through a communication line, and is coupled to another computer via the network 210. The network I/F 703 controls the network 210 and an internal interface to control an input and an output of data from and to the another computer. The network I/F 703 is, for example, a modem, a LAN adapter, or the like.

The recording medium I/F 704 controls reading and writing of data from and to the recording medium 705 under the control of the CPU 701. The recording medium I/F 704 is, for example, a disc drive, a solid-state drive (SSD), a Universal Serial Bus (USB) port, or the like. The recording medium 705 is a nonvolatile memory that stores the data written under the control of the recording medium I/F 704. The recording medium 705 is, for example, a disc, a semiconductor memory, a USB memory, or the like. The recording medium 705 may be detachable from the information processing apparatus 100.

In addition to the components described above, the information processing apparatus 100 may include, for example, a keyboard, a mouse, a display, a printer, a scanner, a microphone, a speaker, and the like. The information processing apparatus 100 may include a plurality of recording media I/F 704 or a plurality of recording media 705. The information processing apparatus 100 may not include the recording medium I/F 704 or the recording medium 705.

### (Hardware Configuration Example of Lineage Management Apparatus 201)

A hardware configuration example of the lineage management apparatus 201 has the same manner as, for example, the hardware configuration example of the information processing apparatus 100 illustrated in FIG. 7, and thus description thereof will be omitted.

### (Hardware Configuration Example of Client Apparatus 202)

A hardware configuration example of the client apparatus 202 has the same manner as, for example, the hardware configuration example of the information processing apparatus 100 illustrated in FIG. 7, and thus description thereof will be omitted.

### (Example of Functional Configuration of Information Processing Apparatus 100)

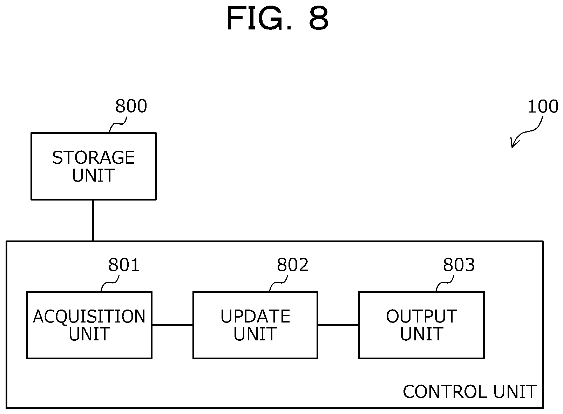

Next, an example of a functional configuration of the information processing apparatus 100 will be described with reference to FIG. 8.

FIG. 8 is a block diagram illustrating the example of the functional configuration of the information processing apparatus 100. The information processing apparatus 100 includes a storage unit 800, an acquisition unit 801, an update unit 802, and an output unit 803.

The storage unit 800 is realized by, for example, a storage region of the memory 702, the recording medium 705, or the like illustrated in FIG. 7. Hereinafter, a case in which the storage unit 800 is included in the information processing apparatus 100 will be described, and the embodiment is not limited thereto. For example, a case may be provided in which the storage unit 800 is included in an apparatus different from the information processing apparatus 100 and the information processing apparatus 100 may refer to contents stored in the storage unit 800.

The acquisition unit 801 to the output unit 803 function as an example of a control unit. For example, the functions of the acquisition unit 801 to the output unit 803 are realized by causing the CPU 701 to execute a program stored in a storage region such as the memory 702 or the recording medium 705 illustrated in FIG. 7 or by using the network I/F 703. A process result by each functional unit is stored in the storage region such as the memory 702 or the recording medium 705 illustrated in FIG. 7, for example.

The storage unit 800 stores various types of information to be referred to or updated in a process of each functional unit. At least any block included in a plurality of blocks may be stored in the storage unit 800. The plurality of blocks are formed such that each block includes identifiers of other blocks coupled before and after the block.

The plurality of blocks are, for example, one or more hash chains. The plurality of blocks are, for example, one or more CDLs. For example, the storage unit 800 stores a block handled by the information processing apparatus 100, among the plurality of blocks. The plurality of blocks may be stored in another computer other than the information processing apparatus 100. For example, the plurality of blocks may be distributed and stored by one or more lineage management apparatuses 201.

An order relationship between the blocks may be stored in the storage unit 800. For example, the storage unit 800 stores, for the plurality of blocks, an order relationship between blocks related to the blocks handled by the information processing apparatus 100. For all the plurality of blocks, the storage unit 800 may store the order relationship between the blocks.

The acquisition unit 801 acquires various types of information used for the process of each functional unit. The acquisition unit 801 stores the acquired various types of information in the storage unit 800, or outputs the information to each functional unit. The acquisition unit 801 may output the various types of information stored in the storage unit 800 to each functional unit. For example, the acquisition unit 801 acquires various types of information, based on an operation input by a user of the information processing apparatus 100. For example, the acquisition unit 801 may receive various types of information from an apparatus different from the information processing apparatus 100.

For example, the acquisition unit 801 accepts a request to execute a specific process on the plurality of blocks. For example, the acquisition unit 801 accepts a first request. The first request is a request of newly coupling a second block before a first block managed by the information processing apparatus 100, among the plurality of blocks. The second block is a block that is already included in the plurality of blocks. In some cases, the second block may be a block that is not yet included in the plurality of blocks. For example, the acquisition unit 801 acquires the first request by receiving the first request from another computer. For example, the acquisition unit 801 acquires the first request by accepting an input of the first request based on an operation input of the user of the information processing apparatus 100.

For example, the acquisition unit 801 accepts a second request. The second request is a request of invalidating a third block managed by the information processing apparatus 100, among the plurality of blocks. For example, the acquisition unit 801 acquires the second request by receiving the second request from another computer. For example, the acquisition unit 801 acquires the second request by accepting an input of the second request, based on an operation input of the user of the information processing apparatus 100.

For example, the acquisition unit 801 accepts a third request. The third request is a request of generating a second block and adding the generated second block to the plurality of blocks. For example, the acquisition unit 801 acquires the third request by receiving the third request from another computer. For example, the acquisition unit 801 acquires the third request by accepting an input of the third request, based on an operation input of the user of the information processing apparatus 100.

For example, the acquisition unit 801 accepts a display request for all or some of the plurality of blocks. For example, the acquisition unit 801 acquires the display request by receiving the display request from another computer. For example, the acquisition unit 801 acquires the display request by accepting an input of the display request, based on an operation input of the user of the information processing apparatus 100.

The acquisition unit 801 may accept a start trigger for starting a process of any one functional unit. For example, the start trigger occurs when a predetermined operation input is performed by the user of the information processing apparatus 100. The start trigger may be reception of predetermined information from another computer, for example. The start trigger may be, for example, an output of predetermined information by any functional unit.

For example, the acquisition unit 801 may accept the reception of the first request, the second request, or the third request as a start trigger for starting a process of the update unit 802. For example, the acquisition unit 801 may accept the reception of the display request as a start trigger for starting a process of the output unit 803.

In a case where the acquisition unit 801 accepts the first request, the update unit 802 controls the plurality of blocks such that a copy of the first block is added to the plurality of blocks and coupled after the second block. For example, the update unit 802 controls another computer that manages the first block, and controls the plurality of blocks such that the copy of the first block is added to the plurality of blocks and coupled after the second block. For example, the another computer is the lineage management apparatus 201.

For example, the update unit 802 may control the plurality of blocks such that the copy of the first block is added to the plurality of blocks stored in the storage unit 800 and coupled after the second block. Thus, the update unit 802 is capable of coupling the second block afterward before the first block, in a pseudo manner. The update unit 802 is capable of appropriately representing an order relationship between the first block and the second block in the plurality of blocks.

At this time, the update unit 802 may include a copy flag indicating the copy of the first block to the copy of the first block, and add the copy of the first block to the plurality of blocks. For example, the update unit 802 controls another computer that manages the first block, and controls the plurality of blocks such that the copy of the first block including the copy flag indicating the copy of the first block is added to the plurality of blocks. For example, the another computer is the lineage management apparatus 201.

For example, the update unit 802 may control the plurality of blocks such that the copy of the first block including the copy flag indicating the copy of the first block is added to the plurality of blocks stored in the storage unit 800. Thus, the update unit 802 is capable of specifying that the copy of the first block is the copy of the first block. For example, the update unit 802 may easily specify the order relationship between the first block and the second block in the plurality of blocks.

In a case where the acquisition unit 801 accepts the second request, the update unit 802 controls the plurality of blocks such that a fourth block indicating that the third block is to be invalidated is added to the plurality of blocks and coupled after the third block. For example, the update unit 802 controls another computer that manages the third block, and controls the plurality of blocks such that the fourth block indicating that the third block is to be invalidated is added to the plurality of blocks and coupled after the third block. For example, the another computer is the lineage management apparatus 201.

For example, the update unit 802 may control the plurality of blocks such that the fourth block indicating that the third block is to be invalidated is added to the plurality of blocks stored in the storage unit 800 and coupled after the third block. Thus, the update unit 802 may invalidate the third block, in a pseudo manner. Even in a case where it is difficult to delete the third block, the update unit 802 is capable of appropriately representing invalidation of the third block.

In a case where the acquisition unit 801 accepts the third request, the update unit 802 generates the second block and controls the plurality of blocks such that the generated second block is added to the plurality of blocks. For example, the update unit 802 controls another computer, and controls the plurality of blocks to add the second block to the plurality of blocks. For example, the another computer is the lineage management apparatus 201.

For example, the update unit 802 may control the plurality of blocks such that the second block is added to the plurality of blocks stored in the storage unit 800. Thus, the update unit 802 may appropriately update the plurality of blocks. A new block may be added to the plurality of blocks by the update unit 802.

The output unit 803 outputs a process result of at least any one functional unit. An output type is, for example, displaying on a display, outputting to a printer for printing, transmitting to an external apparatus through the network I/F 703, or storing in a storage region such as the memory 702 or the recording medium 705. Thus, the output unit 803 may notify the user of the information processing apparatus 100 of the process result of at least any one functional unit, and may improve convenience of the information processing apparatus 100.

The output unit 803 outputs all or some of the plurality of blocks. For example, in a case where a display request is accepted, the output unit 803 displays all or some of the plurality of blocks. For example, the output unit 803 displays all or some of the plurality of blocks in a mode in which an order relationship between the blocks may be specified. Thus, the output unit 803 enables the system user to recognize the order relationship between the blocks.

For example, when displaying all or some of the plurality of blocks, the output unit 803 specifies the copy of the first block based on the copy flag. For example, the output unit 803 displays the specified copy of the first block as the first block that is a source of the copy, or displays a correspondence with the first block that is the source of the copy in a distinguishable manner. Thus, the output unit 803 may make it easy for the system user to intuitively recognize that the second block is coupled before the first block.

For example, when displaying all or some of the plurality of blocks, the output unit 803 specifies the third block, based on the fourth block. For example, the output unit 803 excludes the specified third block from the display targets or displays the specified third block in a display mode corresponding to invalidation. Thus, the output unit 803 may make it easy for the system user to intuitively recognize that the third block is invalidated.

### (Specific Example of Functional Configuration of Information Processing System 200)

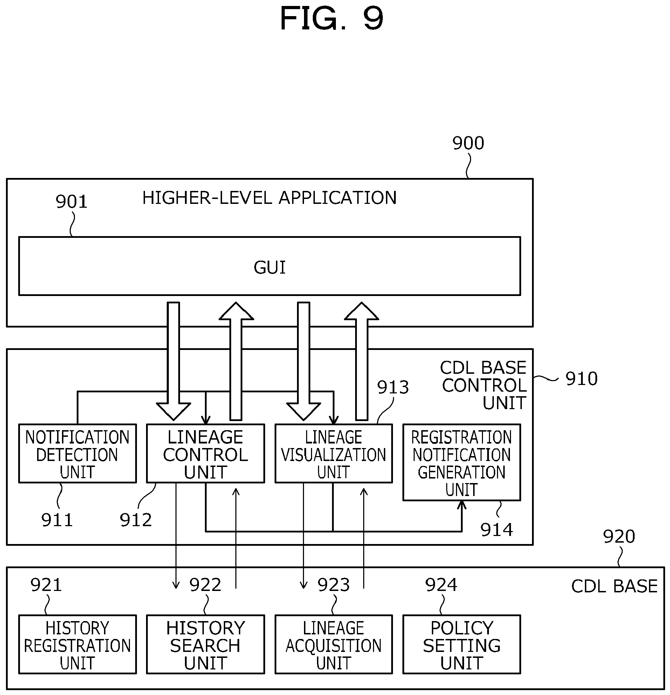

Next, a specific example of a functional configuration of the information processing system 200 will be described with reference to FIG. 9.

FIG. 9 is a block diagram illustrating the specific example of the functional configuration of the information processing system 200. In FIG. 9, the information processing system 200 is used by a plurality of organizations that are respective participants of a supply chain. The plurality of organizations have a sequence relationship.

For example, the plurality of organizations receive a product of another organization, manufacture a product of the own organization by using the product of the another organization, and provide the product of the own organization to the another organization. The plurality of organizations have a sequence relationship depending on provision or use of a product. In the following description, in some cases, a side where a product of an own organization is manufactured by using a product of another organization may be referred to as a "downstream" side as compared with the another organization.

The information processing system 200 manages a series of coupled blocks representing a supply chain. In the following description, in some cases, the series of coupled blocks is referred to as a "lineage". For example, the information processing system 200 manages a series of coupled blocks representing a relationship between products of respective participants in the supply chain. The block is, for example, data of the product.

The information processing system 200 includes a higher-level application 900 for each organization, a CDL base control unit 910 corresponding to the organization, and a CDL base 920 corresponding to the organization. For example, the higher-level application 900 is realized by the client apparatus 202. For example, the CDL base control unit 910 is realized by the information processing apparatus 100. For example, the CDL base 920 is realized by the lineage management apparatus 201. For example, the CDL base 920 is realized by an agent of the lineage management apparatus 201.

The higher-level application 900 includes a graphical user interface (GUI) 901. For example, the GUI 901 accepts an operation input of requesting data registration. For example, the GUI 901 accepts an operation input of requesting a data change. For example, the GUI 901 accepts an operation input of requesting data invalidation by a design change or the like. For example, the GUI 901 accepts an operation input of requesting a display of a lineage representing a supply chain. For example, the GUI 901 transmits a process request in accordance with the accepted operation input to the CDL base control unit 910.

The CDL base control unit 910 includes a notification detection unit 911, a lineage control unit 912, a lineage visualization unit 913, and a registration notification generation unit 914. The notification detection unit 911 detects a data registration notification addressed to an own organization. The notification detection unit 911 transmits the detected data registration notification addressed to the own organization to the lineage control unit 912. The notification detection unit 911 detects a visualization request addressed to the own organization. The notification detection unit 911 transmits the detected visualization request addressed to the own organization to the lineage visualization unit 913.

The lineage control unit 912 notifies the higher-level application 900 of a data registration notification from a previous organization. The lineage control unit 912 registers data in the CDL base 920 by using an input of the higher-level application 900 or the data registration notification from the previous organization, as a trigger. At a time of the second or subsequent data registration by the data registration notification from the previous organization, the lineage control unit 912 generates a copy of registration-completion data. According to reception of an invalidation notification, the lineage control unit 912 additionally registers an invalidation history in the registration-completion data. After the registration of the data, the lineage control unit 912 notifies the registration notification generation unit 914 of information desired by an organization that executes registration of the next data.

The lineage visualization unit 913 accepts a visualization request from the higher-level application 900. The lineage visualization unit 913 acquires a lineage, in response to the visualization request. The lineage visualization unit 913 removes invalidated data and removes copied data, in the lineage. The lineage visualization unit 913 returns the lineage. Based on the information acquired from the lineage control unit 912, the registration notification generation unit 914 generates a registration notification. The registration notification generation unit 914 transmits the generated registration notification to a subsequent organization.

The CDL base 920 includes a history registration unit 921, a history search unit 922, a lineage acquisition unit 923, and a policy setting unit 924. Under control of the lineage control unit 912, the history registration unit 921 registers data as a history in a lineage. Under the control of the lineage control unit 912, the history search unit 922 searches for data as the history included in the lineage and returns the data to the lineage control unit 912. Under control of the lineage visualization unit 913, the lineage acquisition unit 923 returns the lineage to the lineage visualization unit 913. The policy setting unit 924 sets a policy.

### (First Example of Operation of Information Processing Apparatus 100)

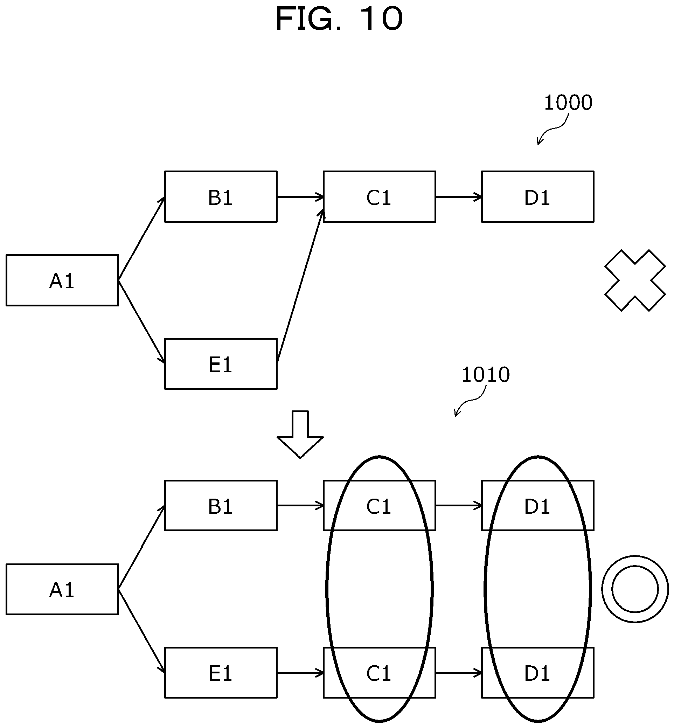

Next, a first example of an operation of the information processing apparatus 100 will be described with reference to FIG. 10. The first example is an example illustrating how the information processing apparatus 100 operates when merging branches of a lineage. The branch is a flow coupling blocks.

FIG. 10 is an explanatory diagram illustrating the first example of the operation of the information processing apparatus 100. In FIG. 10, at first, it is assumed that a lineage includes a block A1, a block B1, a block C1, a block D1, and a block E1. It is assumed that the block A1, the block B1, the block C1, and the block D1 are coupled in this order. It is assumed that the block A1 and the block E1 are coupled in this order.

Meanwhile, in some cases, it is desirable to control the lineage such that a first branch from the block B1 to the block C1 and a second branch from the block E1 to the block C1 are merged. As indicated by reference numeral 1000, in this case, since it is difficult to couple the block E1 immediately before the block C1 afterward, it is difficult to merge the first branch and the second branch. Accordingly, as indicated by reference numeral 1010, the block E1 is coupled immediately before a copy of the block C1, in a pseudo manner.

For example, the information processing apparatus 100 that manages the block C1 controls the lineage such that the copy of the block C1 is generated and added to the lineage and the copy of the block C1 is coupled immediately after the block E1. For example, the information processing apparatus 100 that manages the block D1 controls the lineage such that a copy of the block D1 is generated and added to the lineage and the copy of the block D1 is coupled immediately after the copy of the block C1.

Thus, even in a situation where it is difficult to couple a block afterward immediately before another block by the specification of the CDL, the information processing apparatus 100 may merge the first branch and the second branch, in a pseudo manner. With the information processing apparatus 100, it is possible to represent that the first branch and the second branch are merged, in the lineage.

### (Second Example of Operation of Information Processing Apparatus 100)

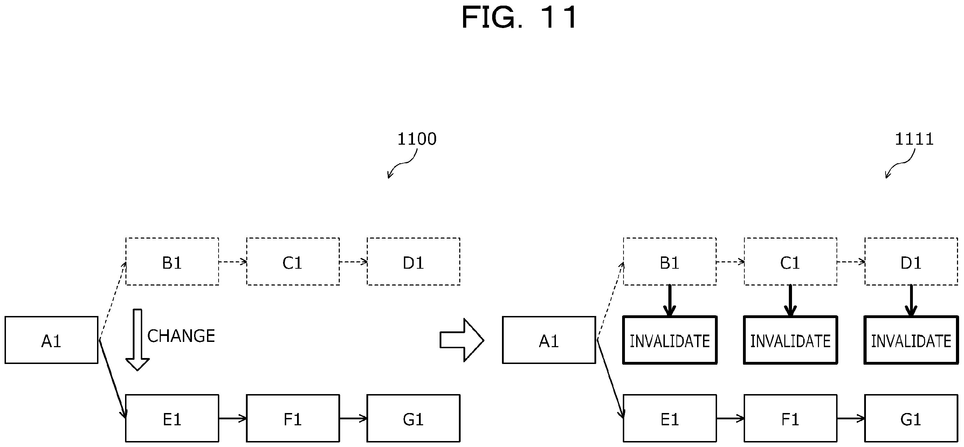

Next, a second example of an operation of the information processing apparatus 100 will be described with reference to FIG. 11. The second example is an example illustrating how the information processing apparatus 100 operates to invalidate a block of a lineage.

FIG. 11 is an explanatory diagram illustrating the second example of the operation of the information processing apparatus 100. In FIG. 11, at first, it is assumed that the lineage includes the block A1, the block B1, the block C1, and the block D1. It is assumed that the block A1, the block B1, the block C1, and the block D1 are coupled in this order.

Meanwhile, in some cases, it is desired to couple a block E1, a block F1, and a block G1 after the block A1 instead of the block B1, the block C1, and the block D1. In this case, the block B1, the block C1, and the block D1 are invalidated. For example, the block B1, the block C1, and the block D1 are invalidated by coupling a block representing invalidation immediately after each block of the block B1, the block C1, and the block D1.

For example, as indicated by reference numeral 1100, the information processing apparatus 100 that manages the block B1 controls the lineage such that the block E1 is generated and added to the lineage, and coupled immediately after the block A1. As indicated by reference numeral 1111, the information processing apparatus 100 that manages the block B1 controls the lineage such that the block representing invalidation is generated and added to the lineage, and the block representing invalidation is coupled immediately after the block B1.

For example, as indicated by reference numeral 1100, the information processing apparatus 100 that manages the block C1 controls the lineage such that the block F1 is generated and added to the lineage, and coupled immediately after the block E1. As indicated by reference numeral 1111, the information processing apparatus 100 that manages the block C1 controls the lineage such that the block representing invalidation is generated and added to the lineage, and the block representing invalidation is coupled immediately after the block C1.

For example, as indicated by reference numeral 1100, the information processing apparatus 100 that manages the block D1 controls the lineage such that the block G1 is generated and added to the lineage, and coupled immediately after the block F1. As indicated by reference numeral 1111, the information processing apparatus 100 that manages the block D1 controls the lineage such that the block representing invalidation is generated and added to the lineage, and the block representing invalidation is coupled immediately after the block D1.

Thus, even in a situation where it is difficult to delete a block by the specification of the CDL, the information processing apparatus 100 may invalidate the block. With the information processing apparatus 100, it is possible to represent that the block is invalidated in the lineage.

The information processing apparatus 100 may have both the function of realizing the first example described above and the function of realizing the second example described above. The information processing apparatus 100 may have only one of the function of realizing the first example described above and the function of realizing the second example described above.

### (First Specific Example of Operation of Information Processing Apparatus 100)

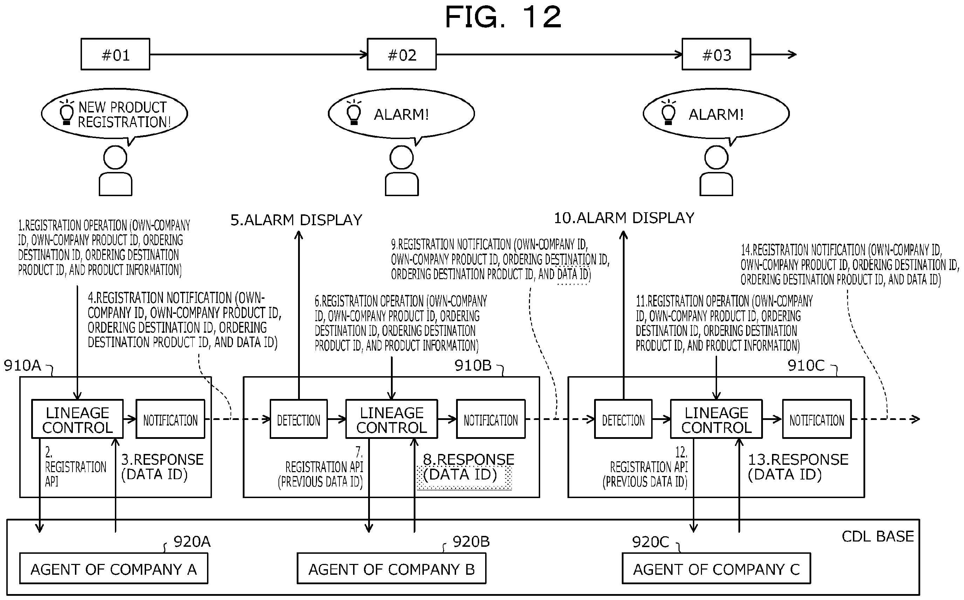

Next, a first specific example of an operation of the information processing apparatus 100 will be described with reference to FIGs. 12 to 39. In the first specific example, it is assumed that a company A, a company B, and a company C that are participants of a supply chain exist. In the following description, in some cases, the information processing apparatus 100 corresponding to a company X is referred to as an "information processing apparatus 100X". X = A, B, C, ....

In the following description, in some cases, the higher-level application 900 corresponding to the company X is referred to as a "higher-level application 900X". In the following description, in some cases, the CDL base control unit 910 corresponding to the company X is referred to as a "CDL base control unit 910X". In the following description, in some cases, the CDL base 920 corresponding to the company X is referred to as a "CDL base 920X". First, with reference to FIG. 12, description is given of an example in which the CDL base control unit 910 of the information processing apparatus 100 registers new data in a lineage, in the first specific example.

FIG. 12 is an explanatory diagram illustrating an example of registering new data in the first specific example. (12-1) It is assumed that a user of the company A wants to register, for example, data of a product of the company A using a product of the company B in the lineage, in FIG. 12. Based on an operation input by the user of the company A, a higher-level application 900A transmits a data registration request including an own-company ID, an own-company product ID, an ordering destination ID, an ordering destination product ID, and product information to a CDL base control unit 910A.

The own-company ID is identification information for identifying the company A. The own-company product ID is identification information for identifying a product of the company A for which data is registered. The ordering destination ID is identification information for identifying the company B that orders a product of another company to be used for the product of the company A. The ordering destination product ID is identification information for identifying the product of the company B. The product information is data of the product of the company A. For example, the product information includes an attribute or the like of the product of the company B to be used for the product of the company A. The attribute is, for example, a number, a price, or the like.

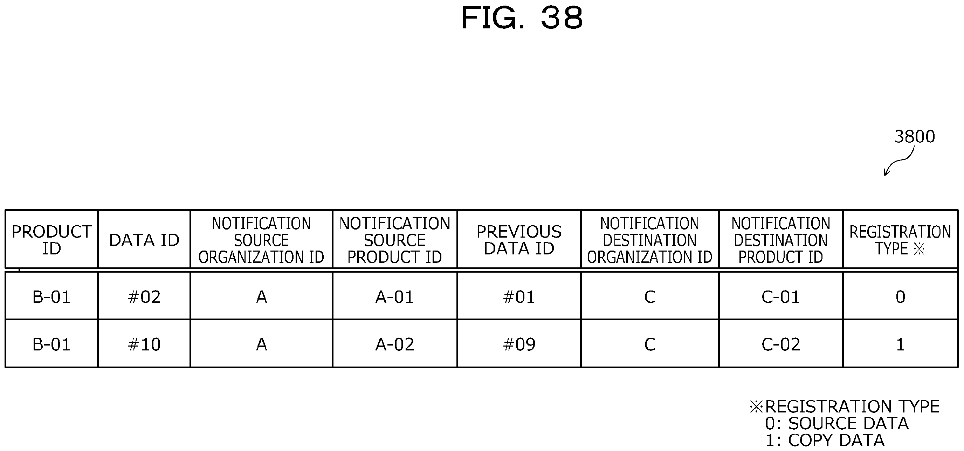

(12-2) The CDL base control unit 910A accepts the data registration request. The CDL base control unit 910A acquires the own-company ID, the own-company product ID, the ordering destination ID, the ordering destination product ID, and the product information from the data registration request. The CDL base control unit 910A refers to a registration-completion list with which registration-completion data may be specified to determine whether registration data = product information which is a target of the data registration request is new data to be registered for the first time or correction data for correcting the registration-completion data. An example of the registration-completion list will be described below with reference to FIG. 38, for example.

Here, it is assumed that the CDL base control unit 910A determines that the registration data is new data. Since the company A is on the most downstream side, the CDL base control unit 910A sets a previous data ID = empty. Since it is determined that the data is new data, the CDL base control unit 910A generates a java (registered trademark) script object notation (JSON) format for registration including registration data = product information which is a target of the data registration request and the set previous data ID = empty.

For example, the JSON format for registration is a combination of a global block including the previous data ID = empty and a local block including registration data = product information. By using the generated JSON format for registration, the CDL base control unit 910A executes a registration API for the CDL base 920A.

(12-3) The CDL base 920A accepts the JSON format for registration via the registration API. The CDL base 920A generates a new data ID, and sets the new data ID in the accepted JSON format for registration. The CDL base 920A calculates a hash value related to the global block and a hash value related to the local block in the JSON format for registration, and sets the hash values to the global block. After that, the CDL base 920A adds the JSON format for registration to the lineage. The CDL base 920A transmits a response including the generated data ID to the CDL base control unit 910A.

(12-4) When the response including the data ID is accepted, the CDL base control unit 910A determines that the registration data is registered in the lineage, by adding the local block including the registration data, which accompanies the global block, to the lineage. Since the registration data is registered in the lineage, the CDL base control unit 910A acquires the data ID included in the response. The CDL base control unit 910A transmits a registration notification including the acquired own-company ID, own-company product ID, ordering destination ID, ordering destination product ID, and data ID to the subsequent CDL base control unit 910B.

(12-5) When accepting the registration notification from the previous CDL base control unit 910A, the CDL base control unit 910B outputs an alarm to a user of the company B. By referring to the alarm, the user of the company B recognizes that the product of the company B is used for the product of the company A.

(12-6) The user of the company B wants to register, for example, data of the product of the company B using the product of the company C in the lineage. Based on an operation input by the user of the company B, a higher-level application 900B transmits a data registration request including an own-company ID, an own-company product ID, an ordering destination ID, an ordering destination product ID, and product information to a CDL base control unit 910B.

The own-company ID is identification information for identifying the company B. The own-company product ID is identification information for identifying a product of the company B for which data is to be registered. The ordering destination ID is identification information for identifying the company C that orders a product of another company to be used for the product of the company B. The ordering destination product ID is identification information for identifying the product of the company C. The product information is data of the product of the company B. For example, the product information includes an attribute or the like of the product of the company C to be used for the product of the company B. The attribute is, for example, a number, a price, or the like.

(12-7) The CDL base control unit 910B accepts the data registration request. The CDL base control unit 910B acquires the own-company ID, the own-company product ID, the ordering destination ID, the ordering destination product ID, and the product information from the data registration request. The CDL base control unit 910B refers to a registration-completion list with which registration-completion data may be specified to determine whether registration data = product information which is a target of the data registration request is new data to be registered for the first time or correction data for correcting the registration-completion data. An example of the registration-completion list will be described below with reference to FIG. 38, for example.

Here, it is assumed that the CDL base control unit 910B determines that the data is new data. Since the company B is not on the most downstream side, the CDL base control unit 910B extracts the data ID of the registration notification and acquires the data ID as a previous data ID. Since it is determined that the data is new data, the CDL base control unit 910B generates a JSON format for registration including registration data = product information which is a target of the data registration request and the set previous data ID = data ID of registration notification.

For example, the JSON format for registration is a combination of a global block including the previous data ID = data ID of registration notification and a local block including registration data = product information. By using the generated JSON format for registration, the CDL base control unit 910B executes a registration API for the CDL base 920B.

(12-8) The CDL base 920B accepts the JSON format for registration via the registration API. The CDL base 920B generates a new data ID, and sets the new data ID in the accepted JSON format for registration. The CDL base 920B calculates a hash value related to the global block and a hash value related to the local block in the JSON format for registration, and sets the hash values to the global block. After that, the CDL base 920B adds the JSON format for registration to the lineage. The CDL base 920B transmits a response including the generated data ID to the CDL base control unit 910B.

(12-9) When the response including the data ID is accepted, the CDL base control unit 910B determines that the registration data is registered in the lineage, by adding the local block including the registration data, which accompanies the global block, to the lineage. Since the registration data is registered in the lineage, the CDL base control unit 910B acquires the data ID included in the response. The CDL base control unit 910B transmits a registration notification including the acquired own-company ID, own-company product ID, ordering destination ID, ordering destination product ID, and data ID to a subsequent CDL base control unit 910C.

(12-10) When accepting the registration notification from the previous CDL base control unit 910B, the CDL base control unit 910C outputs an alarm to a user of the company C. By referring to the alarm, the user of the company C recognizes that the product of the company C is used for the product of the company B.

(12-11) The user of the company C wants to register, for example, data of the product of the company C using the product of the company D (not illustrated) in the lineage. Based on an operation input by the user of the company C, a higher-level application 900C transmits a data registration request including an own-company ID, an own-company product ID, an ordering destination ID, an ordering destination product ID, and product information to the CDL base control unit 910C.

The own-company ID is identification information for identifying the company C. The own-company product ID is identification information for identifying a product of the company C for which data is registered. The ordering destination ID is identification information for identifying the company D that orders a product of another company to be used for the product of the company C. The ordering destination product ID is identification information for identifying the product of the company D. The product information is data of the product of the company C. For example, the product information includes an attribute or the like of the product of the company D to be used for the product of the company C. The attribute is, for example, a number, a price, or the like.

(12-12) The CDL base control unit 910C accepts the data registration request. The CDL base control unit 910C acquires the own-company ID, the own-company product ID, the ordering destination ID, the ordering destination product ID, and the product information from the data registration request. The CDL base control unit 910C refers to a registration-completion list with which registration-completion data may be specified to determine whether registration data = product information which is a target of the data registration request is new data to be registered for the first time or correction data for correcting the registration-completion data. An example of the registration-completion list will be described below with reference to FIG. 38, for example.

Here, it is assumed that the CDL base control unit 910C determines that the data is new data. Since the company C is not on the most downstream side, the CDL base control unit 910C extracts the data ID of the registration notification and acquires the data ID as the previous data ID. Since it is determined that the data is new data, the CDL base control unit 910C generates a JSON format for registration including registration data = product information which is a target of the data registration request and the set previous data ID = data ID of registration notification.

For example, the JSON format for registration is a combination of a global block including the previous data ID = data ID of registration notification and a local block including registration data = product information. By using the generated JSON format for registration, the CDL base control unit 910C executes a registration API for the CDL base 920C.

(12-13) The CDL base 920C accepts the JSON format for registration via the registration API. The CDL base 920C generates a new data ID, and sets the new data ID in the accepted JSON format for registration. The CDL base 920C calculates a hash value related to the global block and a hash value related to the local block in the JSON format for registration, and sets the hash values to the global block. After that, the CDL base 920C adds the JSON format for registration to the lineage. The CDL base 920C transmits a response including the generated data ID to the CDL base control unit 910C.

(12-14) When the response including the data ID is accepted, the CDL base control unit 910C determines that the registration data is registered in the lineage, by adding the local block including the registration data, which accompanies the global block, to the lineage. Since the registration data is registered in the lineage, the CDL base control unit 910C acquires the data ID included in the response. The CDL base control unit 910C transmits a registration notification including the acquired own-company ID, own-company product ID, ordering destination ID, ordering destination product ID, and data ID to a subsequent CDL base control unit 910D (not illustrated).

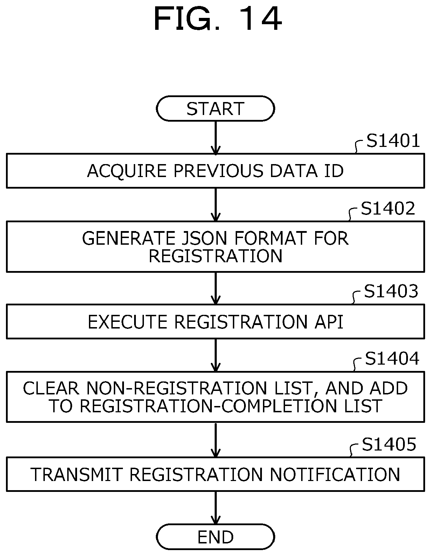

In this manner, the information processing system 200 may register new data in a lineage. For example, the information processing system 200 may add a local block including the new data, which accompanies a global block, to the lineage. A flow of a process in which the CDL base control unit 910 registers the new data in the lineage will be described below with reference to FIG. 14.

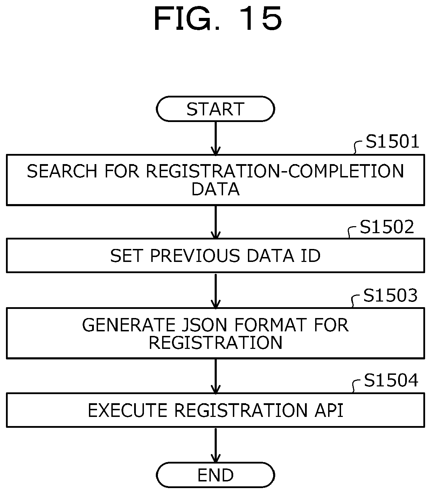

Here, the case where the CDL base control unit 910 registers the new data in the lineage is described, the embodiment is not limited thereto. For example, there may be a case where the CDL base control unit 910 updates registration-completion data with correction data in the lineage. A flow of a process in which the CDL base control unit 910 updates the registration-completion data with the correction data in the lineage will be described below with reference to FIG. 15.

### (Own-company Registration Process Procedure)

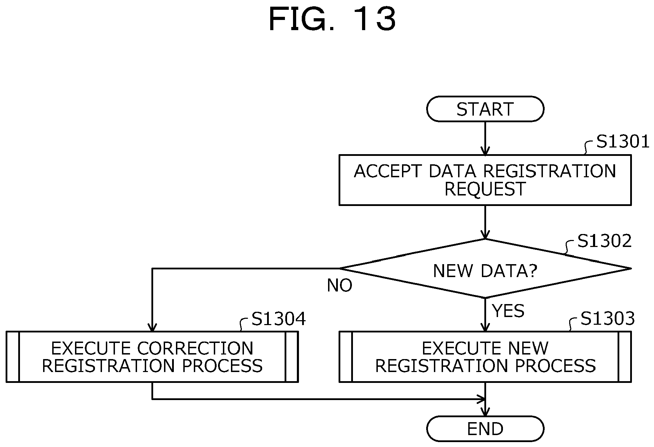

Next, an example of an own-company registration process procedure executed by the CDL base control unit 910 will be described with reference to FIG. 13. For example, an own-company registration process is realized by the CPU 701 illustrated in FIG. 7, a storage region such as the memory 702 or the recording medium 705, and the network I/F 703.

FIG. 13 is a flowchart illustrating an example of an own-company registration process procedure in the first specific example. In FIG. 13, the CDL base control unit 910 accepts a data registration request from the higher-level application 900 of an own company via an API (step S1301). The data registration request includes an own-company ID, an own-company product ID, an ordering destination ID, an ordering destination product ID, registration data, and the like. For example, the registration data includes product information and the like.

The CDL base control unit 910 determines whether or not the registration data designated by the data registration request is new data (step S1302). In a case where the registration data is new data (Yes in step S1302), the CDL base control unit 910 proceeds to the process in step S1303. On the other hand, in a case where the registration data is not new data but correction data (No in step S1302), the CDL base control unit 910 proceeds to the process in step S1304.

At step S1303, the CDL base control unit 910 executes a new registration process which will be described below in FIG. 14 (step S1303). The CDL base control unit 910 ends the own-company registration process.

At step S1304, the CDL base control unit 910 executes a correction registration process which will be described below in FIG. 15 (step S1304). The CDL base control unit 910 ends the own-company registration process.

### (New Registration Process Procedure)

Next, an example of a new registration process procedure executed by the CDL base control unit 910 will be described with reference to FIG. 14. For example, a new registration process is realized by the CPU 701 illustrated in FIG. 7, a storage region such as the memory 702 or the recording medium 705, and the network I/F 703.

FIG. 14 is a flowchart illustrating an example of a new registration process procedure in the first specific example. In FIG. 14, when there is a registration notification from the previous CDL base control unit 910 for an own-company product ID in a data registration request, the CDL base control unit 910 acquires a data ID of the registration notification as the previous data ID (step S1401). The registration notification includes an own-company ID, an own-company product ID, an ordering destination ID, an ordering destination product ID, and the data ID.

The CDL base control unit 910 records and manages the own-company ID of the registration notification in a non-registration list as a notification source organization ID. The CDL base control unit 910 records and manages the own-company product ID of the registration notification in the non-registration list as a notification source product ID. The CDL base control unit 910 records and manages the previous data ID in the non-registration list.

Next, the CDL base control unit 910 refers to the non-registration list, and generates a JSON format for registration, by using the registration data of the data registration request and the acquired previous data ID (step S1402). The CDL base control unit 910 executes a registration API by using the JSON format for registration (step S1403).

Next, the CDL base control unit 910 acquires a response to the registration API, clears the non-registration list, and adds a data ID of the response to a registration-completion list (step S1404). The CDL base control unit 910 generates a registration notification including the own-company ID, the own-company product ID, the ordering destination ID, the ordering destination product ID, and the data ID of the response, and transmits the registration notification to the subsequent CDL base control unit 910 (step S1405). After that, the CDL base control unit 910 ends the new registration process.

### (Correction Registration Process Procedure)

Next, an example of a correction registration process procedure executed by the CDL base control unit 910 will be described with reference to FIG. 15. For example, a correction registration process is realized by the CPU 701 illustrated in FIG. 7, a storage region such as the memory 702 or the recording medium 705, and the network I/F 703.

FIG. 15 is a flowchart illustrating an example of a correction registration process procedure in the first specific example. In FIG. 15, the CDL base control unit 910 refers to a registration-completion list, and searches for registration-completion data by using an own-company product ID of a data registration request as a key (step S1501).

Next, the CDL base control unit 910 acquires, as the previous data ID, a data ID of the latest registration-completion data, among the searched registration-completion data (step S1502). By using registration data in the data registration request and the acquired previous data ID, the CDL base control unit 910 generates a JSON format for registration (step S1503).

Next, the CDL base control unit 910 executes a registration API by using the generated JSON format for registration (step S1504). The CDL base control unit 910 ends the correction registration process.

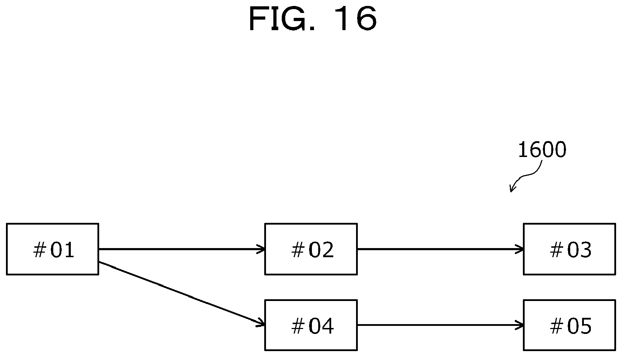

Next, an example of a lineage 1600 representing a branch will be described with reference to FIG. 16. In the following description, in some cases, a global block is simply referred to as a "block".

FIG. 16 is an explanatory diagram illustrating the example of the lineage 1600 representing the branch. As illustrated in FIG. 16, the lineage 1600 includes, for example, a block with a data ID #01, a block with a data ID #02, a block with a data ID #03, a block with a data ID #04, and a block with a data ID #05.

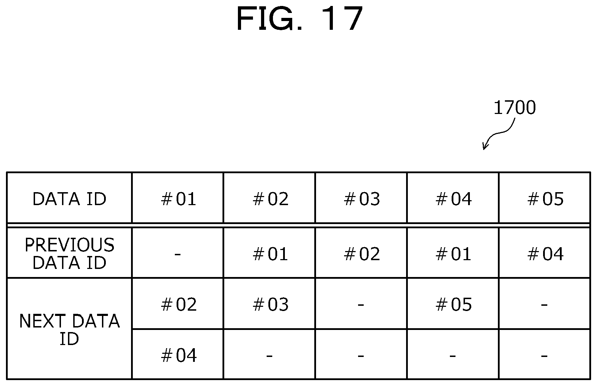

In the lineage 1600, for example, the block with the data ID #01 is a branch point. For example, the lineage 1600 branches from the block with the data ID #01 to a branch to the block with the data ID #02 and a branch to the block with the data ID #04. Next, an example in which the CDL base control unit 910 stores a coupling state of the lineage 1600 will be described with reference to FIG. 17.

FIG. 17 is an explanatory diagram illustrating an example of storing a coupling state of the lineage 1600. As illustrated in FIG. 17, the CDL base control unit 910 stores the coupling state of the lineage 1600, by using a lineage management table 1700.

The lineage management table 1700 includes fields of a data ID, a previous data ID, and a next data ID. In the lineage management table 1700, lineage management information is stored as a record, by setting information in each field for each block forming the lineage 1600.

A data ID of a block is set in the field of the data ID. A data ID of another block coupled immediately before the block described above is set in the field of the previous data ID. A data ID of still another block coupled immediately after the block described above is set in the field of the next data ID.

The lineage management table 1700 may represent that the lineage 1600 branches from the block with the data ID #01 to a branch of the block with the data ID #02 and to a branch of the block with the data ID #04.

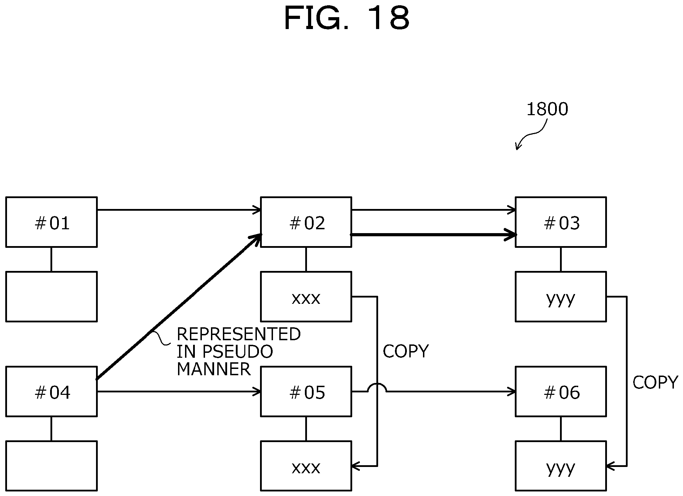

Next, an example of a lineage 1800 representing merging will be described with reference to FIG. 18.

FIG. 18 is an explanatory diagram illustrating the example of the lineage 1800 representing merging. As illustrated in FIG. 18, the lineage 1800 includes, for example, a block with a data ID #01, a block with a data ID #02, a block with a data ID #03, a block with a data ID #04, a block with a data ID #05, and a block with a data ID #06.

For example, in the lineage 1800, the block with the data ID #02 is a pseudo merging point. For example, the lineage 1800 sets the block with the data ID #02 as a pseudo merging point, by coupling the block with the data ID #02, which is a copy of the block with the data ID #05, after the block with the data ID #04.

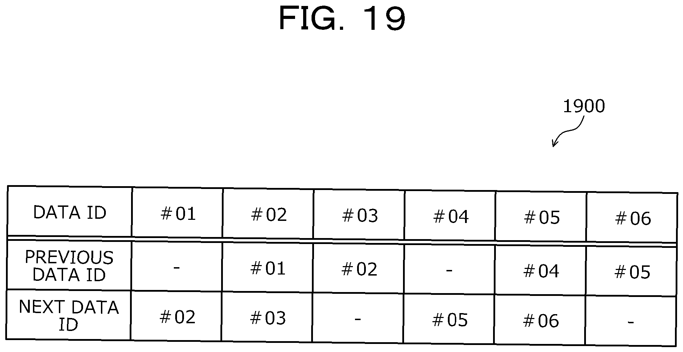

For example, the lineage 1800 merges a branch from the block with the data ID #01 to the block with the data ID #02 and a branch from the block with the data ID #04 to the block with the data ID #02, in a pseudo manner. Next, an example in which the CDL base control unit 910 stores a coupling state of the lineage 1800 will be described with reference to FIG. 19.

FIG. 19 is an explanatory diagram illustrating an example of storing a coupling state of the lineage 1800. As illustrated in FIG. 19, the CDL base control unit 910 stores the coupling state of the lineage 1800, by using a lineage management table 1900. A data structure of the lineage management table 1900 has the same manner as the data structure of the lineage management table 1700, and thus description thereof will be omitted.

The lineage management table 1900 may represent that the lineage 1800 couples the block with the data ID #05, which is the copy of the block with the data ID #02, after the block with the data ID #04.

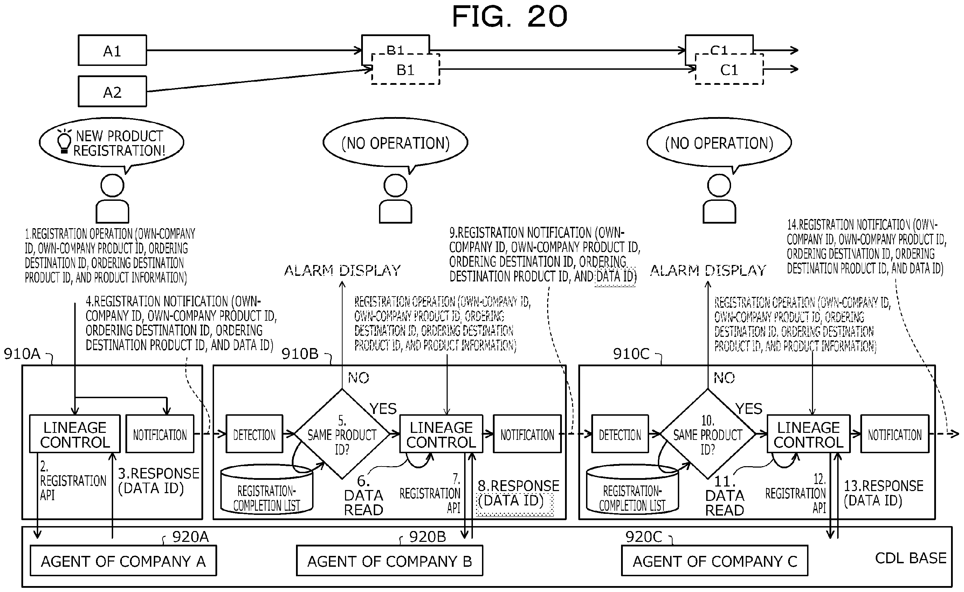

Next, an example in which the information processing system 200 forms a lineage representing merging will be described with reference to FIG. 20. For example, the CDL base control unit 910 controls the lineage such that a copy of a block is added to the lineage and the merging is represented.

FIG. 20 is an explanatory diagram illustrating an example of forming a lineage representing merging. (20-1) It is assumed that a user of the company A wants to register, for example, data of a product A2 of the company A using a product B1 of the company B in the lineage, in FIG. 20. The product B1 of the company B is also used for a product A1 of the company A. Therefore, it is desirable to form the lineage representing the merging. Based on an operation input by the user of the company A, the higher-level application 900A transmits a data registration request including an own-company ID, an own-company product ID, an ordering destination ID, an ordering destination product ID, and product information to the CDL base control unit 910A.

(20-2) The CDL base control unit 910A accepts the data registration request. The CDL base control unit 910A acquires an own-company ID, an own-company product ID, an ordering destination ID, an ordering destination product ID, and product information from the data registration request. The CDL base control unit 910A refers to a registration-completion list with which registration-completion data may be specified to determine whether registration data = product information which is a target of the data registration request is new data to be registered for the first time or correction data for correcting the registration-completion data. An example of the registration-completion list will be described below with reference to FIG. 38, for example.

Here, it is assumed that the CDL base control unit 910A determines that the registration data is new data. Since the company A is on the most downstream side, the CDL base control unit 910A sets a previous data ID = empty. Since it is determined that the data is new data, the CDL base control unit 910A generates a JSON format for registration including registration data = product information which is a target of the data registration request and the set previous data ID = empty.

For example, the JSON format for registration is a combination of a global block including the previous data ID = empty and a local block including registration data = product information. By using the generated JSON format for registration, the CDL base control unit 910A executes a registration API for the CDL base 920A.

(20-3) The CDL base 920A accepts the JSON format for registration via the registration API. The CDL base 920A generates a new data ID, and sets the new data ID in the accepted JSON format for registration. The CDL base 920A calculates a hash value related to the global block and a hash value related to the local block in the JSON format for registration, and sets the hash values to the global block. After that, the CDL base 920A adds the JSON format for registration to the lineage. The CDL base 920A transmits a response including the generated data ID to the CDL base control unit 910A.

(20-4) When the response including the data ID is accepted, the CDL base control unit 910A determines that the registration data is registered in the lineage, by adding the local block including the registration data, which accompanies the global block, to the lineage. Since the registration data is registered in the lineage, the CDL base control unit 910A acquires the data ID included in the response. The CDL base control unit 910A transmits a registration notification including the acquired own-company ID, own-company product ID, ordering destination ID, ordering destination product ID, and data ID to the subsequent CDL base control unit 910B.

(20-5) The CDL base control unit 910B accepts the registration notification from the previous CDL base control unit 910A. By using the ordering destination product ID of the registration notification as a key, the CDL base control unit 910B searches the registration-completion list for a product ID that coincides with the ordering destination product ID of the registration notification.

When the product ID that coincides with the ordering destination product ID of the registration notification is not found, the CDL base control unit 910B outputs an alarm to a user of the company B. On the other hand, when the CDL base control unit 910B finds a product ID that coincides with the ordering destination product ID of the registration notification, the CDL base control unit 910B determines to generate a copy of the existing block so as to represent merging, and continues the process without outputting an alarm to the user of the company B. Here, it is assumed that the CDL base control unit 910B finds the product ID that coincides with the ordering destination product ID of the registration notification.

(20-6) The CDL base control unit 910B reads and acquires a copy source data ID, an own-company product ID, an ordering destination ID, and an ordering destination product ID, from the registration-completion list by using the found product ID as a key. The copy source data ID is a data ID corresponding to the found product ID. The own-company product ID is the found product ID. The ordering destination ID is a notification destination organization ID corresponding to the found product ID. The ordering destination product ID is a notification destination product ID corresponding to the found product ID. The CDL base control unit 910B acquires the own-company ID.

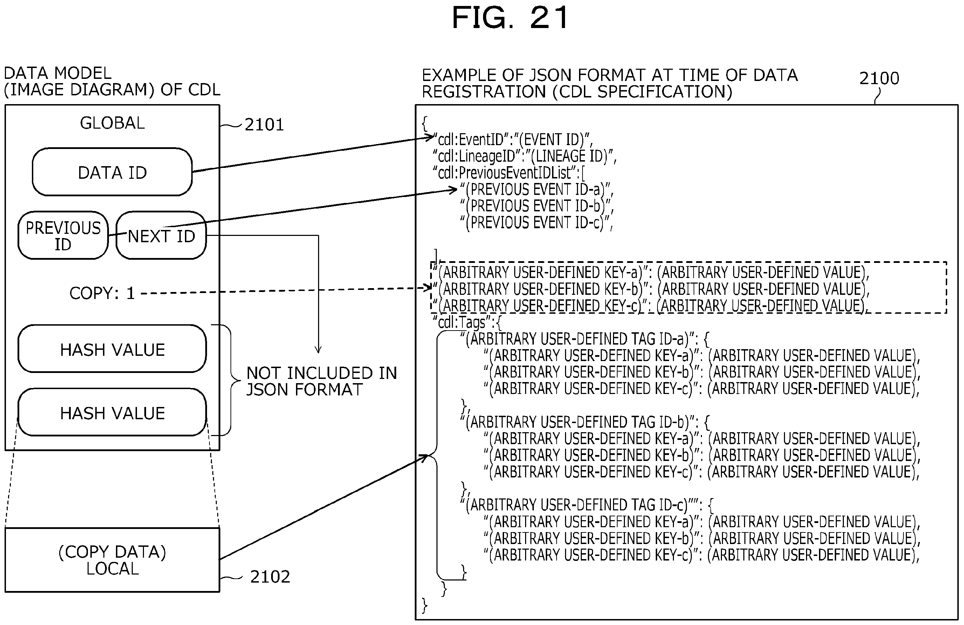

(20-7) Since the company B is not on the most downstream side, the CDL base control unit 910B extracts the data ID of the registration notification and acquires the data ID as the previous data ID. The CDL base control unit 910B generates a JSON format for registration of copy data including the set previous data ID = the data ID of the registration notification and a copy of a local block representing the copy data, which accompanies a block of the copy source data ID. An example of the JSON format for registration of copy data will be described below with reference to FIG. 21, for example.

For example, the JSON format for registration is a combination of a global block in which the previous data ID = the data ID of the registration notification is included and the copy flag: 1 is set, and a copy of a local block accompanying the block of the copy source data ID. By using the generated JSON format for registration, the CDL base control unit 910B executes a registration API for the CDL base 920B.

(20-8) The CDL base 920B accepts the JSON format for registration via the registration API. The CDL base 920B generates a new data ID, and sets the new data ID in the accepted JSON format for registration. The CDL base 920B calculates a hash value related to the global block and a hash value related to the local block in the JSON format for registration, and sets the hash values to the global block. After that, the CDL base 920B adds the JSON format for registration to the lineage. The CDL base 920B transmits a response including the generated data ID to the CDL base control unit 910B.

(20-9) When the response including the data ID is accepted, the CDL base control unit 910B determines that the copy data is registered in the lineage, by adding the local block including the copy data, which accompanies the global block, to the lineage. Since the copy data is registered in the lineage, the CDL base control unit 910B determines that merging is represented in the lineage. Since the copy data is registered in the lineage, the CDL base control unit 910B acquires the data ID included in the response. The CDL base control unit 910B transmits a registration notification including the acquired own-company ID, own-company product ID, ordering destination ID, ordering destination product ID, and data ID to the subsequent CDL base control unit 910C.

(20-10) The CDL base control unit 910C accepts the registration notification from the previous CDL base control unit 910B. By using the ordering destination product ID of the registration notification as a key, the CDL base control unit 910C searches the registration-completion list for a product ID that coincides with the ordering destination product ID of the registration notification.

When the product ID that coincides with the ordering destination product ID of the registration notification is not found, the CDL base control unit 910C outputs an alarm to a user of the company C. On the other hand, when the CDL base control unit 910C finds a product ID that coincides with the ordering destination product ID of the registration notification, the CDL base control unit 910C determines to generate a copy of the existing block so as to represent merging, and continues the process without outputting an alarm to the user of the company C. Here, it is assumed that the CDL base control unit 910C finds the product ID that coincides with the ordering destination product ID of the registration notification.

(20-11) The CDL base control unit 910C reads and acquires a copy source data ID, an own-company product ID, an ordering destination ID, and an ordering destination product ID, from the registration-completion list by using the found product ID as a key. The copy source data ID is a data ID corresponding to the found product ID. The own-company product ID is the found product ID. The ordering destination ID is a notification destination organization ID corresponding to the found product ID. The ordering destination product ID is a notification destination product ID corresponding to the found product ID. The CDL base control unit 910C acquires the own-company ID.

(20-12) Since the company C is not on the most downstream side, the CDL base control unit 910C extracts the data ID of the registration notification and acquires the data ID as the previous data ID. The CDL base control unit 910C generates a JSON format for registration of copy data including the set previous data ID = the data ID of the registration notification and a copy of a local block representing the copy data, which accompanies a block of the copy source data ID.

For example, the JSON format for registration is a combination of a global block in which the previous data ID = the data ID of the registration notification is included and the copy flag: 1 is set, and a copy of a local block accompanying the block of the copy source data ID. By using the generated JSON format for registration, the CDL base control unit 910C executes a registration API for the CDL base 920C.

(20-13) The CDL base 920C accepts the JSON format for registration via the registration API. The CDL base 920C generates a new data ID, and sets the new data ID in the accepted JSON format for registration. The CDL base 920C calculates a hash value related to the global block and a hash value related to the local block in the JSON format for registration, and sets the hash values to the global block. After that, the CDL base 920C adds the JSON format for registration to the lineage. The CDL base 920C transmits a response including the generated data ID to the CDL base control unit 910C.

(20-14) When the response including the data ID is accepted, the CDL base control unit 910C determines that the copy data is registered in the lineage, by adding the local block including the copy data, which accompanies the global block, to the lineage. Since the copy data is registered in the lineage, the CDL base control unit 910C determines that merging is represented in the lineage. Since the copy data is registered in the lineage, the CDL base control unit 910C acquires the data ID included in the response. The CDL base control unit 910C transmits a registration notification including the acquired own-company ID, own-company product ID, ordering destination ID, ordering destination product ID, and data ID to the subsequent CDL base control unit 910D (not illustrated).

In this manner, even when it is difficult to directly represent merging of branches in a lineage, the information processing system 200 may represent the merging of the branches, in a pseudo manner. Therefore, with the information processing system 200, it is possible to flexibly update a CDL. The information processing system 200 may represent the merging of the branches without outputting an alarm to a user of the company B and a user of the company C. Therefore, the information processing system 200 may reduce an operation load on the user. Next, an example of a JSON format 2100 for registration of copy data will be described with reference to FIG. 21.

FIG. 21 is an explanatory diagram illustrating an example of the JSON format 2100 for registration of copy data. As illustrated in FIG. 21, the JSON format 2100 for registration of copy data includes a global block in which a copy flag: 1 is set. For example, when a value of the copy flag is 1, the copy flag indicates a copy. A data ID, a previous data ID, and the like of the global block in the JSON format 2100 for registration of copy data may be different from a data ID, a previous data ID, and the like of an original global block.

The JSON format 2100 for registration of copy data includes a copy of a local block accompanying the original global block. The JSON format 2100 for registration of copy data does not include a next data ID, a hash value related to a global block, and a hash value related to a local block.

The next data ID, the hash value related to the global block, and the hash value related to the local block are set by the CDL base 920. By setting the next data ID, the hash value related to the global block, and the hash value related to the local block, a specific global block 2101 and a specific local block 2102 to be added to the lineage are generated.

### (Copy Registration Process Procedure)

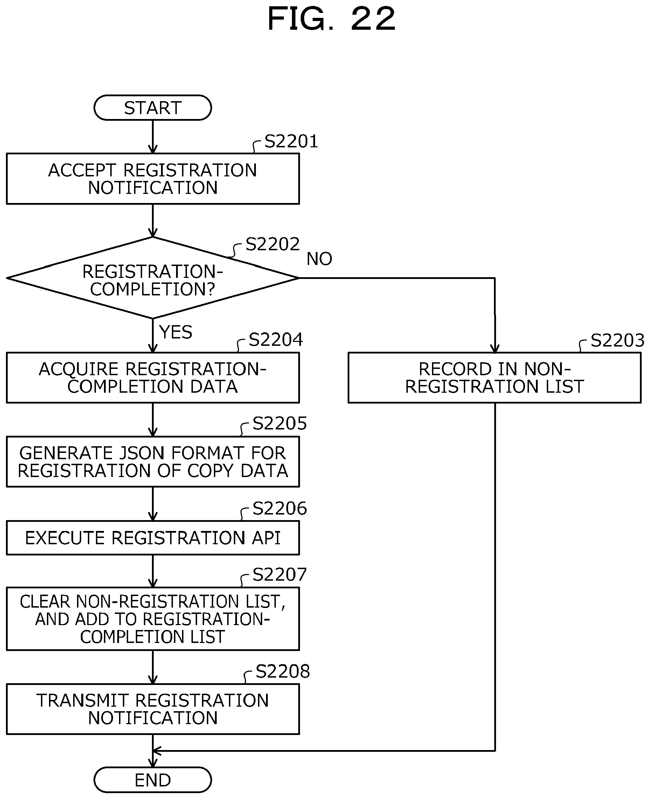

Next, an example of a copy registration process procedure executed by the CDL base control unit 910 will be described with reference to FIG. 22. For example, a copy registration process is realized by the CPU 701 illustrated in FIG. 7, a storage region such as the memory 702 or the recording medium 705, and the network I/F 703.

FIG. 22 is a flowchart illustrating an example of a copy registration process procedure in the first specific example. In FIG. 22, the CDL base control unit 910 accepts a registration notification from the previous CDL base control unit 910 (step S2201). The registration notification includes an own-company ID, an own-company product ID, an ordering destination ID, an ordering destination product ID, and a data ID.

Next, the CDL base control unit 910 refers to a registration-completion list to determine whether or not the data ID of the registration notification is registered (step S2202). In a case where the data ID of the registration notification is not registered (No in step S2202), the CDL base control unit 910 proceeds to the process in step S2203. On the other hand, in a case where the data ID of the registration notification is already registered (Yes in step S2202), the CDL base control unit 910 proceeds to the process in step S2204.

At step S2203, the CDL base control unit 910 records the data ID of the registration notification in a non-registration list (step S2203). For example, the CDL base control unit 910 records and manages the own-company ID, the own-company product ID, the data ID, and the like of the registration notification in the non-registration list. The CDL base control unit 910 ends the copy registration process.

At step S2204, the CDL base control unit 910 acquires registration-completion data included in a local block by using a registration-completion data ID as a key (step S2204). Next, the CDL base control unit 910 acquires copy data obtained by copying the registration-completion data, and generates a JSON format for registration of the acquired copy data (step S2205). The CDL base control unit 910 executes a registration API by using the JSON format for registration of copy data (step S2206).

Next, the CDL base control unit 910 acquires a response to the registration API, clears the non-registration list, and adds a data ID of the response to the registration-completion list (step S2207). The CDL base control unit 910 generates a registration notification including the own-company ID, the own-company product ID, the ordering destination ID, the ordering destination product ID, and the data ID of the response, and transmits the registration notification to the subsequent CDL base control unit 910 (step S2208). The CDL base control unit 910 ends the copy registration process.

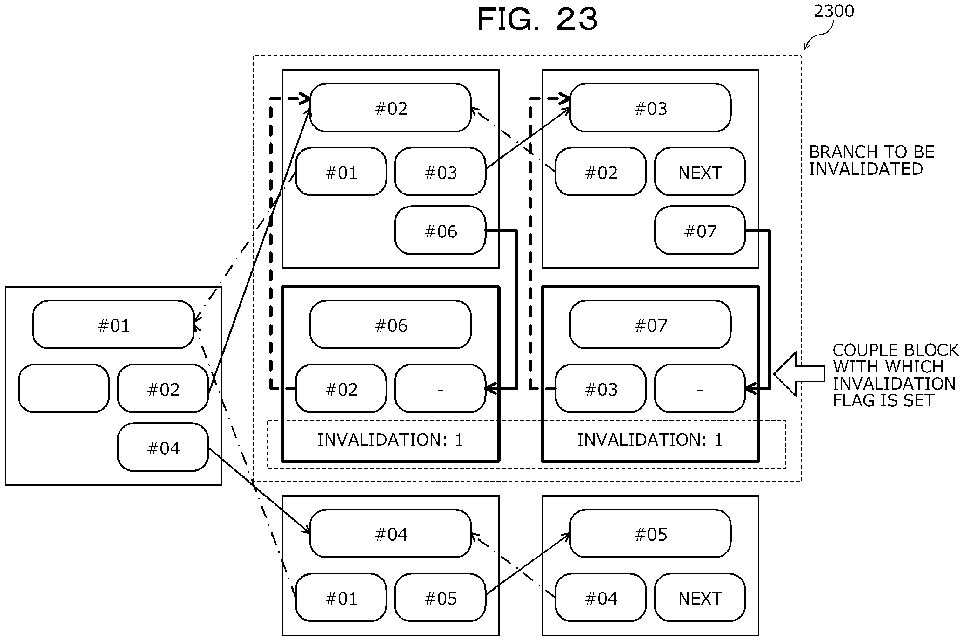

Next, an example in which the CDL base control unit 910 invalidates registration-completion data of a lineage will be described with reference to FIG. 23.

FIG. 23 is an explanatory diagram illustrating an example of invalidation. For example, in FIG. 23, it is assumed that a lineage 2300 includes a block with a data ID #01, a block with a data ID #02, and a block with a data ID #03. For example, it is assumed that a block with a data ID #04 and a block with a data ID #05 are added to the lineage 2300.

A case is conceivable in which, instead of adding the block with the data ID #04 and the block with the data ID #05 to the lineage 2300, it is desired to invalidate registration data of the block with the data ID #02 and registration data of the block with the data ID #03. Therefore, the block with the data ID #02 including the registration data and the block with the data ID #03 including the registration data are invalidated, and a branch from the block with the data ID #02 to the block with the data ID #03 is invalidated.

For example, in this case, it is considered that the CDL base control unit 910 that manages the block with the data ID #01 transmits an invalidation notification to the CDL base control unit 910 that manages the block with the data ID #02.

For example, in response to the invalidation notification, the CDL base control unit 910 that manages the block with the data ID #02 controls the lineage such that a block with a data ID #06 having an invalidation flag of 1 is coupled immediately after the block with the data ID #02. As a next data ID of the block with the data ID #02, the CDL base control unit 910 sets the data ID #06 of the coupled block with the data ID #06. The CDL base control unit 910 transmits an invalidation notification to the CDL base control unit 910 that manages the subsequent block with the data ID #03.

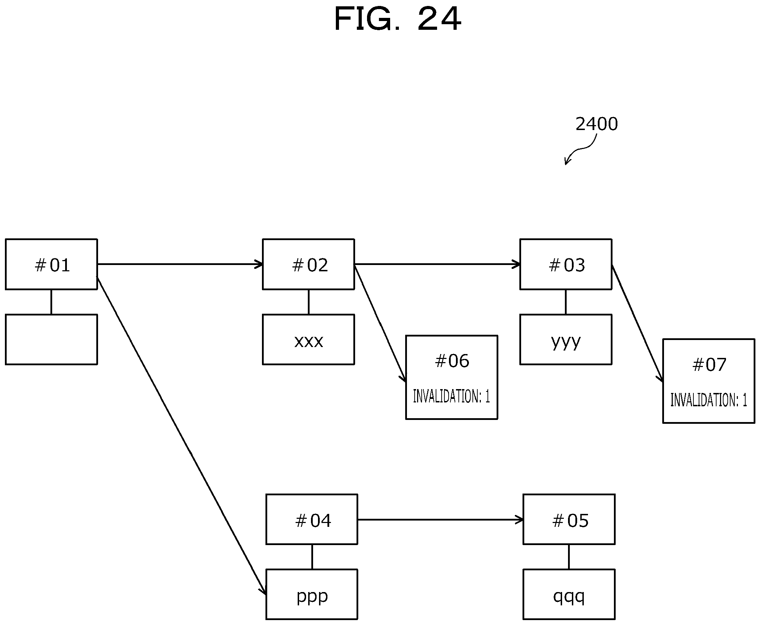

In the same manner, for example, in response to the invalidation notification, the CDL base control unit 910 that manages the block with the data ID #03 controls the lineage such that a block with a data ID #07 having an invalidation flag of 1 is coupled immediately after the block with the data ID #03. As a next data ID of the block with the data ID #03, the CDL base control unit 910 sets the data ID #07 of the coupled block with the data ID #07. In this manner, the information processing system 200 may invalidate registration-completion data of the lineage without deleting a block including the registration-completion data. Next, an example of a lineage 2400 representing invalidation will be described with reference to FIG. 24.

FIG. 24 is an explanatory diagram illustrating an example of the lineage 2400 representing invalidation. As illustrated in FIG. 24, it is assumed that the lineage 2400 includes, for example, a block with a data ID #01, a block with a data ID #02, and a block with a data ID #03. For example, a case is conceivable in which, instead of adding a block with a data ID #04 and a block with a data ID #05 to the lineage 2400, it is desired to invalidate the block with the data ID #02 and the block with the data ID #03.

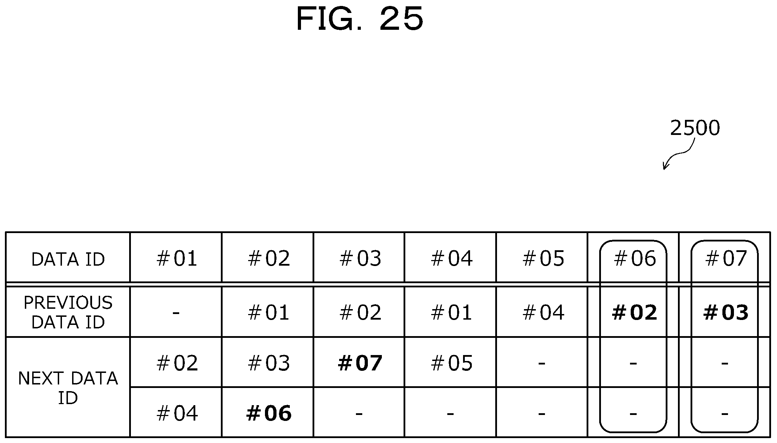

For example, the lineage 2400 represents that the block with the data ID #02 is invalidated by coupling a block with a data ID #06 representing invalidation immediately after the block with the data ID #02. In the same manner, for example, the lineage 2400 represents that the block with the data ID #03 is invalidated by coupling a block with a data ID #07 representing invalidation immediately after the block with the data ID #03. Next, an example in which the CDL base control unit 910 stores a coupling state of the lineage 2400 will be described with reference to FIG. 25.

FIG. 25 is an explanatory diagram illustrating an example of storing a coupling state of the lineage 2400. As illustrated in FIG. 25, the CDL base control unit 910 stores a coupling state of the lineage 2400 by using a lineage management table 2500. A data structure of the lineage management table 2500 has the same manner as the data structure of the lineage management table 1700, and thus description thereof will be omitted.

For example, the lineage management table 2500 may represent that the lineage 2400 couples the block with the data ID #06 immediately after the block with the data ID #02. The lineage management table 2500 may represent that the lineage 2400 couples the block with the data ID #07 immediately after the block with the data ID #03.

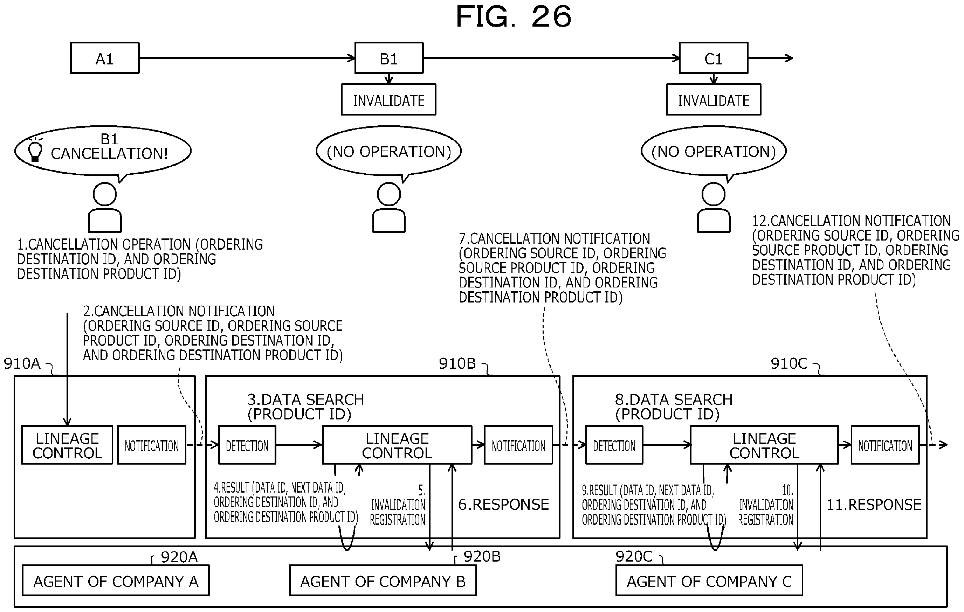

Next, a specific example in which the information processing system 200 invalidates registration data will be described with reference to FIG. 26. For example, the CDL base control unit 910 controls the lineage such that a new block representing invalidation is added to the lineage to represent the invalidation of the registration data.

FIG. 26 is an explanatory diagram illustrating a specific example in which registration data is invalidated. (26-1) It is assumed that, for example, since a user of the company A no longer uses the product B1 of the company B for the product A1 of the company A, the user of the company A wants to invalidate registration-completion data of the product B1 of the company B, in FIG. 26. Therefore, it is desirable to invalidate a block including the registration data of the product B1 of the company B. Based on an operation input by the user of the company A, the higher-level application 900A transmits a cancellation request including an ordering destination ID and an ordering destination product ID to the CDL base control unit 910A.

(26-2) The CDL base control unit 910A accepts the cancellation request. The CDL base control unit 910A acquires the ordering destination ID and the ordering destination product ID from the cancellation request. The CDL base control unit 910A acquires an own-company ID of the company A as an ordering source ID. The CDL base control unit 910A acquires an own-company product ID of the company A as an ordering source product ID. The CDL base control unit 910A transmits a cancellation notification including the acquired ordering source ID, ordering source product ID, ordering destination ID, and ordering destination product ID to the subsequent CDL base control unit 910B.

(26-3) The CDL base control unit 910B accepts the cancellation notification from the previous CDL base control unit 910A. By using the ordering destination product ID of the cancellation notification as a key, the CDL base control unit 910B searches a registration-completion list for a product ID that coincides with the ordering destination product ID of the cancellation notification.

When the product ID that coincides with the ordering destination product ID of the cancellation notification is not found, the CDL base control unit 910B outputs an alarm to a user of the company B. On the other hand, when the product ID that coincides with the ordering destination product ID of the cancellation notification is found, the CDL base control unit 910B sets a block including registration-completion data corresponding to the found product ID as a target to be invalidated. Here, it is assumed that the CDL base control unit 910B finds the product ID that coincides with the ordering destination product ID of the cancellation notification.

(26-4) The CDL base control unit 910B reads and acquires a data ID, an ordering destination ID, and an ordering destination product ID corresponding to the product ID from the registration-completion list by using the found product ID as a key. The ordering destination ID is a notification destination organization ID corresponding to the found product ID. The ordering destination product ID is a notification destination product ID corresponding to the found product ID. By using the found product ID as a key, the CDL base control unit 910C may acquire the next data ID.

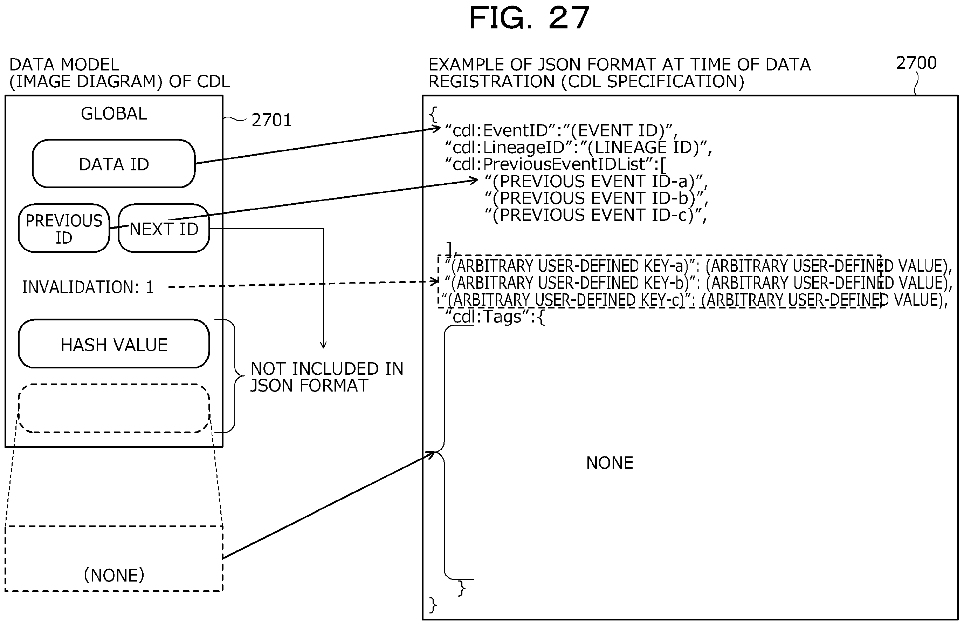

(26-5) The CDL base control unit 910B acquires the data ID corresponding to the product ID as the previous data ID. The CDL base control unit 910B generates a JSON format for registration of invalidation data including the set previous data ID. An example of the JSON format for registration of invalidation data will be described below with reference to FIG. 27, for example.

For example, the JSON format for registration of invalidation data includes a global block in which the previous data ID is included and an invalidation flag: 1 is set. For example, the JSON format for registration of invalidation data may not include a local block. By using the generated JSON format for registration of invalidation data, the CDL base control unit 910B executes a registration API for the CDL base 920B.

(26-6) The CDL base 920B accepts the JSON format for registration of invalidation data via the registration API. The CDL base 920B generates a new data ID, and sets the new data ID in the accepted JSON format for registration of invalidation data. The CDL base 920B calculates a hash value related to the global block in the JSON format for registration of invalidation data, and sets the hash value to the global block. After that, the CDL base 920B adds the JSON format for registration of invalidation data to the lineage. The CDL base 920B transmits a response including the generated data ID to the CDL base control unit 910B.

(26-7) When the response including the data ID is accepted, the CDL base control unit 910B determines that the existing block of the lineage is invalidated by adding a block of the invalidation data to the lineage. Since the existing block is invalidated, the CDL base control unit 910B determines that the invalidation of the registration-completion data of the existing block is represented in the lineage.

The CDL base control unit 910B transmits a cancellation notification including the ordering source ID, the ordering source product ID, the ordering destination ID, and the ordering destination product ID to the subsequent CDL base control unit 910C. The ordering source ID is an own-company ID. The ordering source product ID is a found product ID. The ordering destination ID is a notification destination organization ID corresponding to the found product ID. The ordering destination product ID is a notification destination product ID corresponding to the found product ID.

(26-8) The CDL base control unit 910C accepts the cancellation notification from the previous CDL base control unit 910B. By using the ordering destination product ID of the cancellation notification as a key, the CDL base control unit 910C searches a registration-completion list for a product ID that coincides with the ordering destination product ID of the cancellation notification.

When the product ID that coincides with the ordering destination product ID of the cancellation notification is not found, the CDL base control unit 910C outputs an alarm to a user of the company C. On the other hand, when the product ID that coincides with the ordering destination product ID of the cancellation notification is found, the CDL base control unit 910C sets a block including registration-completion data corresponding to the found product ID as a target to be invalidated. Here, it is assumed that the CDL base control unit 910C finds the product ID that coincides with the ordering destination product ID of the cancellation notification.

(26-9) The CDL base control unit 910C reads and acquires a data ID, an ordering destination ID, and an ordering destination product ID corresponding to the product ID from the registration-completion list by using the found product ID as a key. The ordering destination ID is a notification destination organization ID corresponding to the found product ID. The ordering destination product ID is a notification destination product ID corresponding to the found product ID. By using the found product ID as a key, the CDL base control unit 910C may acquire the next data ID.

(26-10) The CDL base control unit 910C acquires the data ID corresponding to the product ID as the previous data ID. The CDL base control unit 910C generates a JSON format for registration of invalidation data including the set previous data ID. An example of the JSON format for registration of invalidation data will be described below with reference to FIG. 27, for example.

For example, the JSON format for registration of invalidation data includes a global block in which the previous data ID is included and an invalidation flag: 1 is set. For example, the JSON format for registration of invalidation data may not include a local block. By using the generated JSON format for registration of invalidation data, the CDL base control unit 910C executes a registration API for the CDL base 920C.

(26-11) The CDL base 920C accepts the JSON format for registration of invalidation data via the registration API. The CDL base 920C generates a new data ID, and sets the new data ID in the accepted JSON format for registration of invalidation data. The CDL base 920C calculates a hash value related to the global block in the JSON format for registration of invalidation data, and sets the hash value to the global block. After that, the CDL base 920C adds the JSON format for registration of invalidation data to the lineage. The CDL base 920C transmits a response including the generated data ID to the CDL base control unit 910C.

(26-12) When the response including the data ID is accepted, the CDL base control unit 910C determines that the existing block of the lineage is invalidated by adding a block of the invalidation data to the lineage. Since the existing block is invalidated, the CDL base control unit 910C determines that the invalidation of the registration-completion data of the existing block is represented in the lineage.

The CDL base control unit 910C transmits a cancellation notification including the ordering source ID, the ordering source product ID, the ordering destination ID, and the ordering destination product ID to the subsequent CDL base control unit 910D (not illustrated). The ordering source ID is an own-company ID. The ordering source product ID is a found product ID. The ordering destination ID is a notification destination organization ID corresponding to the found product ID. The ordering destination product ID is a notification destination product ID corresponding to the found product ID.

In this manner, even in a case where it is difficult to directly delete a block in a lineage, the information processing system 200 may represent that registration-completion data of the block is invalidated. Therefore, with the information processing system 200, it is possible to flexibly update a CDL. The information processing system 200 may represent that the registration-completion data of the block is invalidated without outputting an alarm to the user of the company B and the user of the company C. Therefore, the information processing system 200 may reduce an operation load on the user. Next, an example of the JSON format 2700 for registration of invalidation data will be described with reference to FIG. 27.

FIG. 27 is an explanatory diagram illustrating an example of a JSON format 2700 for registration of invalidation data. As illustrated in FIG. 27, the JSON format 2700 for registration of invalidation data includes a global block in which an invalidation flag: 1 is set. For example, when a value of the invalidation flag is 1, registration-completion data of a block coupled immediately before the block indicates invalid. The JSON format 2700 for registration of invalidation data may not include a local block.

The JSON format 2700 for registration of invalidation data does not include a next data ID, a hash value related to a global block, and a hash value related to a local block. The hash value related to the global block is set by the CDL base 920. By setting the hash value related to the global block, a specific global block 2701 to be added to a lineage is generated.

### (Branch Registration Process Procedure)

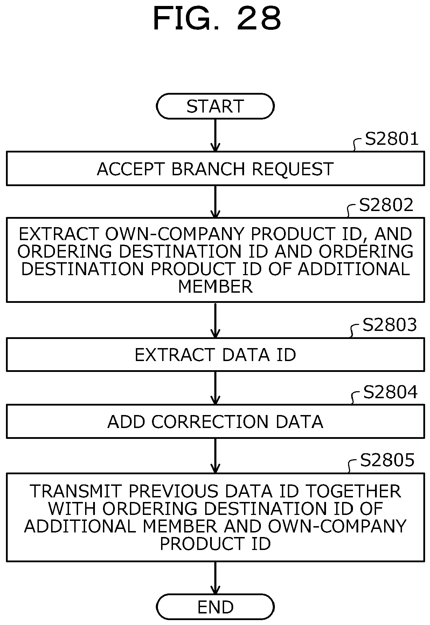

Next, an example of a branch registration process procedure executed by the CDL base control unit 910 will be described with reference to FIG. 28. For example, a branch registration process is realized by the CPU 701 illustrated in FIG. 7, a storage region such as the memory 702 or the recording medium 705, and the network I/F 703.

FIG. 28 is a flowchart illustrating an example of the branch registration process procedure. In FIG. 28, the CDL base control unit 910 accepts a branch request (step S2801). For example, the branch request includes an own-company product ID of a branch target, an ordering destination ID of an additional member, an ordering destination product ID of the additional member, and the like.

Next, the CDL base control unit 910 extracts the own-company product ID of the branch target, and the ordering destination ID and the ordering destination product ID of the additional member from a parameter of the branch request (step S2802). By using the own-company product ID as a key, the CDL base control unit 910 extracts a data ID with which it is possible to specify a block serving as a branch point (step S2803).

Next, the CDL base control unit 910 adopts the extracted data ID as a previous data ID, generates correction data for correcting information on an existing block serving as a branch destination instead of the block serving as the new branch destination, and adds the correction data to a lineage (step S2804). For example, the correction data is added to the lineage with the correction registration process described above.

The CDL base control unit 910 acquires the extracted data ID or the data ID included in a response to the correction registration process as the previous data ID. The CDL base control unit 910 transmits the acquired previous data ID together with the ordering destination ID of the additional member and the own-company product ID to the subsequent CDL base control unit 910 (step S2805). After that, the CDL base control unit 910 ends the branch registration process.

### (First Invalidation Process Procedure)

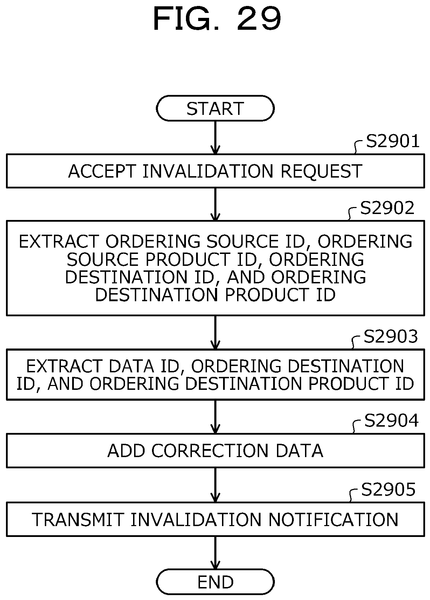

Next, an example of a first invalidation process procedure executed by the CDL base control unit 910 will be described with reference to FIG. 29. For example, a first invalidation process is realized by the CPU 701 illustrated in FIG. 7, a storage region such as the memory 702 or the recording medium 705, and the network I/F 703.

FIG. 29 is a flowchart illustrating an example of the first invalidation process procedure. In FIG. 29, the CDL base control unit 910 accepts an invalidation request from the higher-level application 900 of an own company (step S2901).

For example, the invalidation request includes an ordering source product ID with which it is possible to specify a block including registration-completion data of an ordering source product, which is a starting point of a branch formed by a block including registration-completion data of an invalidation target, and an ordering source ID. For example, the invalidation request includes an ordering destination ID corresponding to the registration-completion data of the invalidation target, an ordering destination product ID corresponding to the registration-completion data of the invalidation target, and the like.

Next, the CDL base control unit 910 extracts the ordering source ID, the ordering source product ID, the ordering destination ID, and the ordering destination product ID from a parameter of the invalidation request (step S2902). By using the acquired ordering destination product ID as a key, the CDL base control unit 910 searches for the registration-completion data and extracts a data ID, an ordering destination ID, and an ordering destination product ID of the found registration-completion data (step S2903).

Next, the CDL base control unit 910 adopts the extracted data ID as a previous data ID, generates correction data for correcting information on an existing block serving as a branch destination, and adds the correction data to a lineage (step S2904). For example, the correction data is added to the lineage with the correction registration process described above.

Based on the extracted ordering source ID, ordering source product ID, ordering destination ID, and ordering destination product ID, the CDL base control unit 910 transmits an invalidation notification to the subsequent CDL base control unit 910 (step S2905). The invalidation notification includes the ordering source ID, the ordering source product ID, the ordering destination ID, and the ordering destination product ID. After that, the CDL base control unit 910 ends the first invalidation process.

### (Second Invalidation Process Procedure)

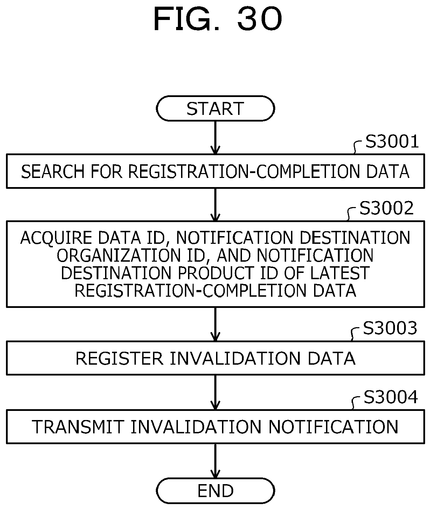

Next, an example of a second invalidation process procedure executed by the CDL base control unit 910 will be described with reference to FIG. 30. For example, a second invalidation process is realized by the CPU 701 illustrated in FIG. 7, a storage region such as the memory 702 or the recording medium 705, and the network I/F 703.

FIG. 30 is a flowchart illustrating an example of the second invalidation process procedure. In FIG. 30, the CDL base control unit 910 refers to a registration-completion list, and searches for registration-completion data by using the ordering source product ID and the ordering destination product ID of an invalidation notification received from the previous CDL base control unit 910 as keys (step S3001). For example, the invalidation notification includes an ordering source ID, an ordering source product ID, an ordering destination ID, an ordering destination product ID, and the like.

Next, the CDL base control unit 910 refers to the registration-completion list to acquire a data ID, a notification destination organization ID, and a notification destination product ID of the latest registration-completion data in the searched registration-completion data (step S3002). The CDL base control unit 910 adopts the ordering destination ID and the ordering destination product ID of the invalidation notification, as a next ordering source ID and a next ordering source product ID. The CDL base control unit 910 adopts the acquired notification destination organization ID and notification destination product ID, as a next ordering destination ID and a next ordering destination product ID.

The CDL base control unit 910 adopts the acquired data ID as the previous data ID, and registers invalidation data in a lineage, by using the adopted previous data ID, ordering source ID, ordering source product ID, ordering destination ID, and ordering destination product ID (step S3003). For example, the CDL base control unit 910 generates a JSON format for registration of the invalidation data, by using the previous data ID, the ordering source ID, the ordering source product ID, the ordering destination ID, and the ordering destination product ID, executes a registration API, and registers the invalidation data in the lineage.

Next, based on the adopted ordering source ID, ordering source product ID, ordering destination ID, and ordering destination product ID, the CDL base control unit 910 transmits an invalidation notification to the subsequent CDL base control unit 910 (step S3004). The invalidation notification includes the ordering source ID, the ordering source product ID, the ordering destination ID, and the ordering destination product ID. The CDL base control unit 910 ends the second invalidation process.

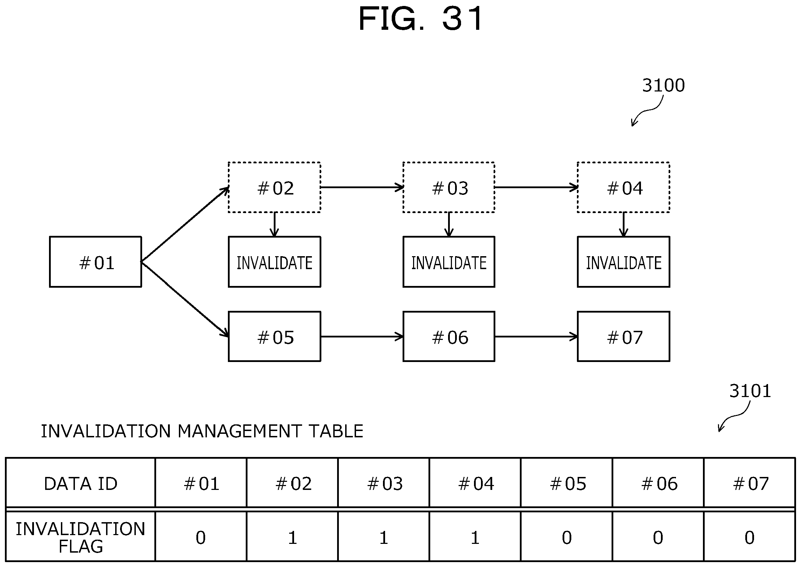

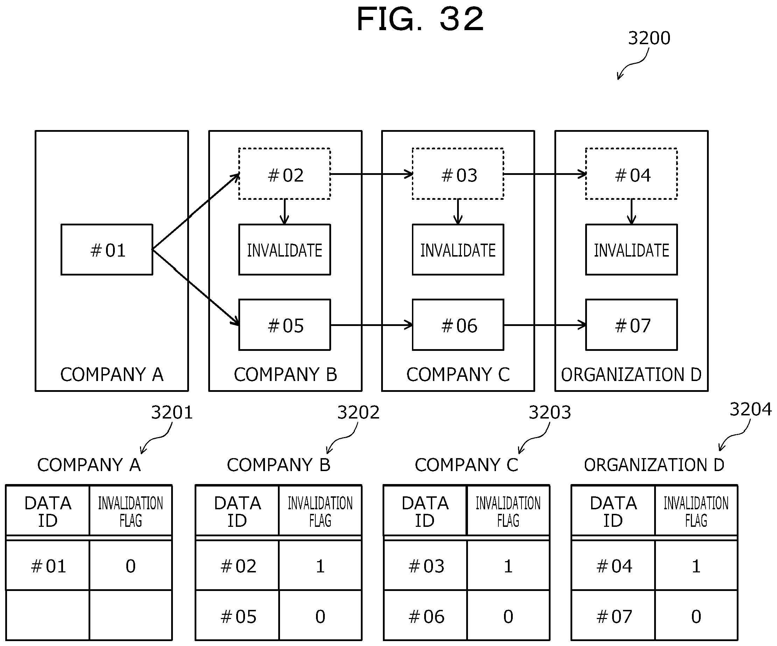

Next, another example in which the CDL base control unit 910 invalidates registration-completion data of a lineage will be described with reference to FIGs. 31 and 32.

FIGs. 31 and 32 are explanatory diagrams illustrating the another example of invalidation. As illustrated in FIG. 31, it is assumed that it is desired to invalidate a block with a data ID #02, a block with a data ID #03, and a block with a data ID #04 of a lineage 3100.

Meanwhile, a case is conceivable in which the CDL base control unit 910 uses an invalidation management table 3101 to represent that the block with the data ID #02, the block with the data ID #03, and the block with the data ID #04 are invalidated. In this case, the CDL base control unit 910 may not couple a block indicating invalidation to the block with the data ID #02, the block with the data ID #03, and the block with the data ID #04.

The invalidation management table 3101 includes fields of a data ID and an invalidation flag. By setting information in each field for each block forming the lineage, the invalidation management table 3101 stores invalidation management information as a record.

A data ID of a block is set in the field of the data ID. An invalidation flag indicating whether or not to invalidate the block described above is set in the field of the invalidation flag. For example, the invalidation flag indicates invalidation when a value is 1. For example, when the value of the invalidation flag is 0, the invalidation flag indicates that invalidation is not performed. Next, description continues with reference to FIG. 32.

The case where the CDL base control unit 910 manages the invalidation presence or absence of all the blocks of the lineage 3100 by using the invalidation management table 3101 is described with reference to the example in FIG. 31. Meanwhile, as illustrated in FIG. 32, there may be a case where the CDL base control unit 910 uses invalidation management tables 3201 to 3204 and the like to manage the invalidation presence or absence of a block corresponding to an own company in a lineage 3200.

As illustrated in FIG. 32, it is assumed that a block with a data ID #01 in the lineage 3200 corresponds to the company A. The block with the data ID #02 and a block with a data ID #05 in the lineage 3200 correspond to the company B. The block with the data ID #03 and a block with a data ID #06 in the lineage 3200 correspond to the company C. The block with the data ID #04 and a block with a data ID #07 in the lineage 3200 correspond to the company D. It is assumed that it is desired to invalidate the block with the data ID #02, the block with the data ID #03, and the block with the data ID #04 of the lineage 3200.

Meanwhile, the CDL base control unit 910B of the company B uses an invalidation management table 3202 to represent that the block with the data ID #02 is invalidated. By using an invalidation management table 3203, the CDL base control unit 910C of the company C represents that the block with the data ID #03 is invalidated. By using an invalidation management table 3204, the CDL base control unit 910D of the company D represents that the block with the data ID #04 is invalidated.

For example, data structures of the invalidation management tables 3201 to 3204 have the same manner as the data structure of the invalidation management table 3101, and thus description thereof will be omitted. In this manner, the information processing system 200 may invalidate registration-completion data of the lineage without deleting a block including the registration-completion data.

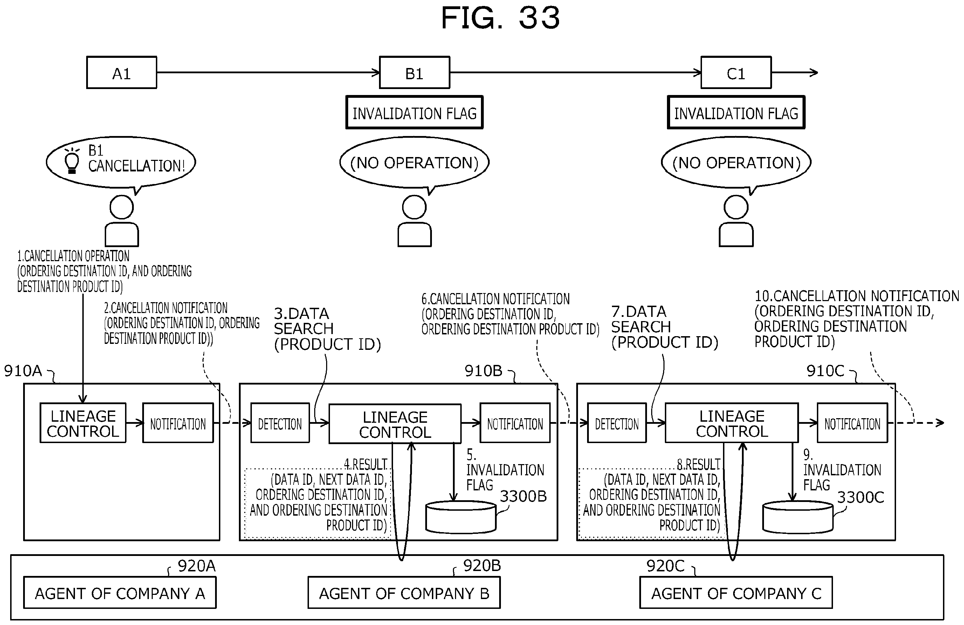

Next, another specific example in which the information processing system 200 invalidates registration data will be described with reference to FIG. 33. For example, it is represented that the CDL base control unit 910 invalidates registration data by using an invalidation management table.

FIG. 33 is an explanatory diagram illustrating the another specific example of invalidation of registration data. (33-1) It is assumed that, for example, since a user of the company A no longer uses the product B1 of the company B for the product A1 of the company A, the user of the company A wants to invalidate registration-completion data of the product B1 of the company B, in FIG. 33. Therefore, it is desirable to invalidate a block including the registration data of the product B1 of the company B. Based on an operation input by the user of the company A, the higher-level application 900A transmits a cancellation request including an ordering destination ID and an ordering destination product ID to the CDL base control unit 910A.

(33-2) The CDL base control unit 910A accepts the cancellation request. The CDL base control unit 910A acquires the ordering destination ID and the ordering destination product ID from the cancellation request. The CDL base control unit 910A transmits a cancellation notification including the acquired ordering destination ID and ordering destination product ID to the subsequent CDL base control unit 910B.

(33-3) The CDL base control unit 910B accepts the cancellation notification from the previous CDL base control unit 910A. By using the ordering destination product ID of the cancellation notification as a key, the CDL base control unit 910B searches a registration-completion list for a product ID that coincides with the ordering destination product ID of the cancellation notification.

When the product ID that coincides with the ordering destination product ID of the cancellation notification is not found, the CDL base control unit 910B outputs an alarm to a user of the company B. On the other hand, when the product ID that coincides with the ordering destination product ID of the cancellation notification is found, the CDL base control unit 910B sets a block including registration-completion data corresponding to the found product ID as a target to be invalidated. Here, it is assumed that the CDL base control unit 910B finds the product ID that coincides with the ordering destination product ID of the cancellation notification.

(33-4) The CDL base control unit 910B reads and acquires a data ID, an ordering destination ID, and an ordering destination product ID corresponding to the product ID from the registration-completion list by using the found product ID as a key. The ordering destination ID is a notification destination organization ID corresponding to the found product ID. The ordering destination product ID is a notification destination product ID corresponding to the found product ID. By using the found product ID as a key, the CDL base control unit 910B may acquire the next data ID.

(33-5) The CDL base control unit 910B stores the acquired data ID and an invalidation flag: 1 in association with each other, by using an invalidation management table 3300B for the company B. In this manner, the CDL base control unit 910B represents that the registration-completion data of the block having the acquired data ID is invalidated.

(33-6) The CDL base control unit 910B transmits a cancellation notification including the ordering destination ID and the ordering destination product ID to the subsequent CDL base control unit 910C. The ordering destination ID is a notification destination organization ID corresponding to the found product ID. The ordering destination product ID is a notification destination product ID corresponding to the found product ID.

(33-7) The CDL base control unit 910C accepts the cancellation notification from the previous CDL base control unit 910B. By using the ordering destination product ID of the cancellation notification as a key, the CDL base control unit 910C searches a registration-completion list for a product ID that coincides with the ordering destination product ID of the cancellation notification.

When the product ID that coincides with the ordering destination product ID of the cancellation notification is not found, the CDL base control unit 910C outputs an alarm to a user of the company C. On the other hand, when the product ID that coincides with the ordering destination product ID of the cancellation notification is found, the CDL base control unit 910C sets a block including registration-completion data corresponding to the found product ID as a target to be invalidated. Here, it is assumed that the CDL base control unit 910C finds the product ID that coincides with the ordering destination product ID of the cancellation notification.

(33-8) The CDL base control unit 910C reads and acquires a data ID, an ordering destination ID, and an ordering destination product ID corresponding to the product ID from the registration-completion list by using the found product ID as a key. The ordering destination ID is a notification destination organization ID corresponding to the found product ID. The ordering destination product ID is a notification destination product ID corresponding to the found product ID. By using the found product ID as a key, the CDL base control unit 910C may acquire the next data ID.

(33-9) The CDL base control unit 910C stores the acquired data ID and an invalidation flag: 1 in association with each other, by using an invalidation management table 3300C for the company C. In this manner, the CDL base control unit 910C represents that the registration-completion data of the block having the acquired data ID is invalidated.

(33-10) The CDL base control unit 910C transmits a cancellation notification including the ordering destination ID and the ordering destination product ID to the subsequent CDL base control unit 910D. The ordering destination ID is a notification destination organization ID corresponding to the found product ID. The ordering destination product ID is a notification destination product ID corresponding to the found product ID.

In this manner, even in a case where it is difficult to directly delete a block in a lineage, the information processing system 200 may represent that registration-completion data of the block is invalidated. Therefore, with the information processing system 200, it is possible to flexibly update a CDL. The information processing system 200 may represent that the registration-completion data of the block is invalidated without outputting an alarm to the user of the company B and the user of the company C. Therefore, the information processing system 200 may reduce an operation load on the user.

### (Third Invalidation Process Procedure)

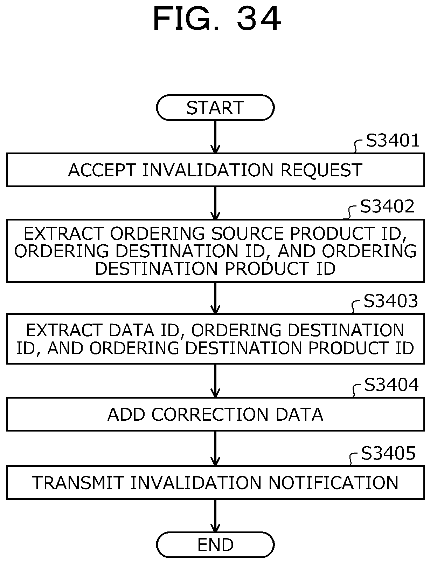

Next, an example of a third invalidation process procedure executed by the CDL base control unit 910 will be described with reference to FIG. 34. For example, a third invalidation process is realized by the CPU 701 illustrated in FIG. 7, a storage region such as the memory 702 or the recording medium 705, and the network I/F 703. For example, the third invalidation process is executed instead of the first invalidation process.

FIG. 34 is a flowchart illustrating an example of the third invalidation process procedure. In FIG. 34, the CDL base control unit 910 accepts an invalidation request from the higher-level application 900 of an own company (step S3401).

For example, the invalidation request includes an ordering source product ID with which it is possible to specify a block including registration-completion data of an ordering source product, which is a starting point of a branch formed by a block including registration-completion data of an invalidation target. For example, the invalidation request includes an ordering destination ID corresponding to the registration-completion data of the invalidation target, and an ordering destination product ID corresponding to the registration-completion data of the invalidation target.

Next, the CDL base control unit 910 extracts the ordering source product ID, the ordering destination ID, and the ordering destination product ID from a parameter of the invalidation request (step S3402). By using the ordering source product ID as a key, the CDL base control unit 910 searches for the registration-completion data and extracts a data ID, an ordering destination ID, and an ordering destination product ID of the found registration-completion data (step S3403).

Next, the CDL base control unit 910 adopts the extracted data ID as a previous data ID, generates correction data for correcting information on an existing block serving as a branch destination, and adds the correction data to a lineage (step S3404). For example, the correction data is added to the lineage with the correction registration process described above.

Based on the extracted ordering source ID, ordering source product ID, ordering destination ID, and ordering destination product ID, the CDL base control unit 910 transmits an invalidation notification to the subsequent CDL base control unit 910 (step S3405). The invalidation notification includes the ordering source ID, the ordering source product ID, the ordering destination ID, and the ordering destination product ID. After that, the CDL base control unit 910 ends the third invalidation process.

### (Fourth Invalidation Process Procedure)

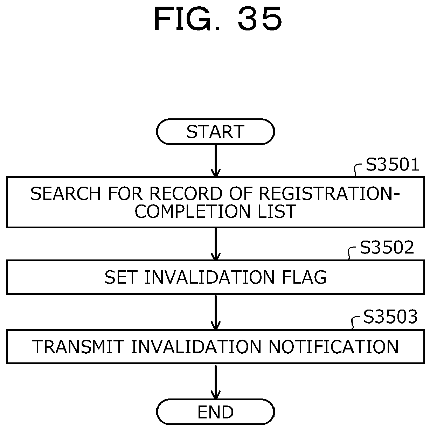

Next, an example of a fourth invalidation process procedure executed by the CDL base control unit 910 will be described with reference to FIG. 35. For example, a fourth invalidation process is realized by the CPU 701 illustrated in FIG. 7, a storage region such as the memory 702 or the recording medium 705, and the network I/F 703. For example, the fourth invalidation process is executed instead of the second invalidation process.

FIG. 35 is a flowchart illustrating an example of the fourth invalidation process procedure. In FIG. 35, the CDL base control unit 910 searches for a record in a registration-completion list by using, as keys, an ordering source ID, an ordering source product ID, an ordering destination ID, and an ordering destination product ID of an invalidation notification received from the previous CDL base control unit 910 (step S3501).

Next, the CDL base control unit 910 sets an invalidation flag to 1 in a data ID of the searched record, and records the record by using an invalidation management table (step S3502). The CDL base control unit 910 adopts the ordering destination ID and the ordering destination product ID of the invalidation notification, as a next ordering source ID and a next ordering source product ID. The CDL base control unit 910 adopts a notification destination organization ID and a notification destination product ID of the searched record, as a next ordering destination ID and a next ordering destination product ID.

Based on the adopted ordering source ID, ordering source product ID, ordering destination ID, and ordering destination product ID, the CDL base control unit 910 transmits an invalidation notification to the subsequent CDL base control unit 910 (step S3503). After that, the CDL base control unit 910 ends the fourth invalidation process.

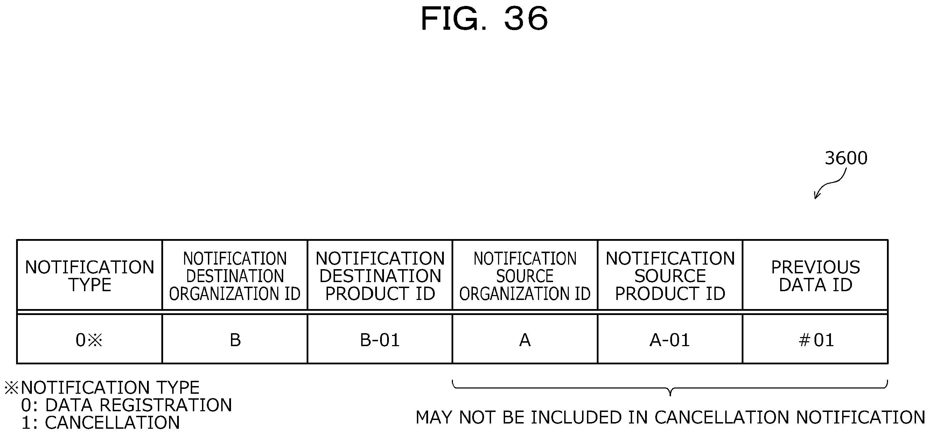

Next, examples of various data structures in the first specific example will be described with reference to FIGs. 36 to 38. First, an example of a data structure of various notifications such as a data registration notification and a cancellation notification will be described with reference to FIG. 36.

FIG. 36 is an explanatory diagram illustrating an example of a data structure of various notifications. As illustrated in FIG. 36, a notification 3600 used as a data registration notification or a cancellation notification has fields of a notification type, a notification destination organization ID, a notification destination product ID, a notification source organization ID, a notification source product ID, and a previous data ID.

Flag information indicating whether the notification 3600 is a data registration notification or a cancellation notification is set in the field of the notification type. For example, when a value of the flag information is 0, the flag information indicates a data registration notification. For example, when the value of the flag information is 1, the flag information indicates a cancellation notification.

The notification destination organization ID for identifying a notification destination of the notification 3600 is set in the field of the notification destination organization ID. The notification destination product ID for identifying a product of the notification destination of the notification 3600 is set in the field of the notification destination product ID. For example, the notification destination product ID identifies the product at the notification destination of the notification 3600, which is used for a product corresponding to a block added to a lineage at a notification source of the notification 3600. For example, the notification destination product ID identifies a product, which is to be invalidated, of the notification destination of the notification 3600.

The notification source organization ID for identifying the notification source of the notification 3600 is set in the field of the notification source organization ID. The field of the notification source organization ID may be empty in a case where the notification 3600 is a cancellation notification. The notification source product ID for identifying a product of the notification source of the notification 3600 is set in the field of the notification source product ID. For example, the notification source product ID identifies the product corresponding to the block added to the lineage at the notification source of the notification 3600. The field of the notification source product ID may be empty in a case where the notification 3600 is a cancellation notification.

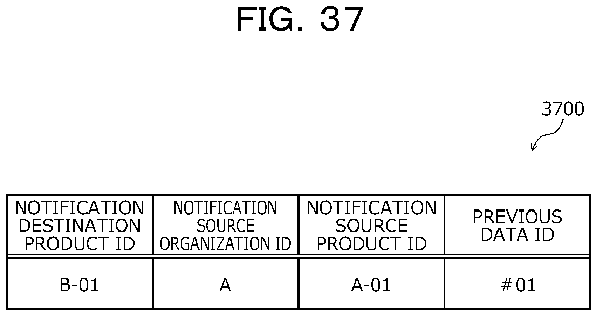

A data ID of the block at the notification source of the notification 3600 is set in the field of the previous data ID. For example, the previous data ID is a data ID of the block added to the lineage at the notification source of the notification 3600. The field of the previous data ID may be empty in a case where the notification 3600 is a cancellation notification. Next, an example of a data structure of a non-registration list 3700 will be described with reference to FIG. 37.

FIG. 37 is an explanatory diagram illustrating the example of the data structure of the non-registration list 3700. As illustrated in FIG. 37, the non-registration list 3700 includes fields of a notification destination product ID, a notification source organization ID, a notification source product ID, and a previous data ID. In the non-registration list 3700, non-registration data management information is stored as a record by setting information in each field for each registration data.

An ordering destination product ID of a registration notification is set as a notification destination product ID in the field of the notification destination product ID. An ordering destination product ID of the registration notification is set as a notification destination organization ID in the field of the notification source organization ID. An own-company product ID of the registration notification is set as a notification source product ID in the field of the notification source product ID. A data ID of the registration notification is set as a previous data ID in the field of the previous data ID. Next, an example of a data structure of a registration-completion list 3800 will be described with reference to FIG. 38.

FIG. 38 is an explanatory diagram illustrating an example of a data structure of the registration-completion list 3800. As illustrated in FIG. 38, the registration-completion list 3800 includes fields of a product ID, a data ID, a notification source organization ID, a notification source product ID, a previous data ID, a notification destination organization ID, a notification destination product ID, and a registration type. In the registration-completion list 3800, registration-completion data management information is stored as a record by setting information in each field for each registration-completion data.

A product ID corresponding to the registration-completion data is set in the field of the product ID. A data ID corresponding to the registration-completion data and set in a block including the registration-completion data is set in the field of the data ID. An own-company ID of a registration notification referred to when the registration-completion data is registered is set in the field of the notification source organization ID. An own-company product ID of the registration notification referred to when the registration-completion data is registered is set in the field of the notification source product ID.

A data ID of a block, which is coupled immediately before a block of the registration-completion data, managed by the previous CDL base control unit 910 which is the notification source described above is set in the field of the previous data ID. An ordering destination ID of the registration notification is set as a notification destination organization ID in the field of the notification destination organization ID. An ordering destination product ID of a registration notification is set as a notification destination product ID in the field of the notification destination product ID.

Flag information indicating whether or not a type of the registration-completion data is copy data is set in the field of the registration type. For example, when a value of the flag information is 1, the flag information indicates copy data. For example, when the value is 0, the flag information indicates source data instead of the copy data. The source data is original data that is not a copy of other data.

### (Visualization Process Procedure)

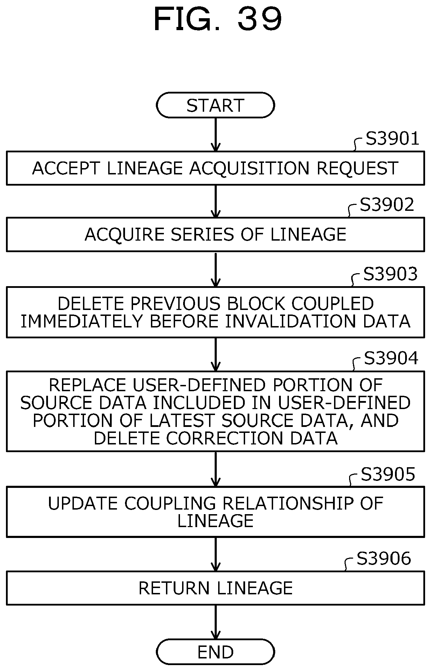

Next, an example of a visualization process procedure executed by the CDL base control unit 910 will be described with reference to FIG. 39. For example, a visualization process is realized by the CPU 701 illustrated in FIG. 7, a storage region such as the memory 702 or the recording medium 705, and the network I/F 703.

FIG. 39 is a flowchart illustrating the example of the visualization process procedure. In FIG. 39, the CDL base control unit 910 accepts a lineage acquisition request from the higher-level application 900 of an own company (step S3901). For example, the lineage acquisition request includes a product ID or the like with which a lineage may be specified.

Next, the CDL base control unit 910 acquires a series of lineages, by using the product ID or the like designated in the lineage acquisition request as a key (step S3902). The CDL base control unit 910 extracts a block having an invalidation flag: 1 included in the acquired lineage, and deletes a previous block coupled immediately before the extracted block from the acquired lineage (step S3903).

Next, the CDL base control unit 910 extracts a block of correction data included in the acquired lineage, replaces a user-defined portion of source data included in a user-defined portion of the latest data with the correction data, and deletes the correction data (step S3904).

Next, among the product IDs included in the acquired lineage, the CDL base control unit 910 specifies a product ID having a copy based on a registration-completion list, adopts the specified product ID as a merging point, and updates a coupling relationship of the acquired lineage (step S3905).

The CDL base control unit 910 returns the lineage to a request source of the lineage acquisition request (step S3906). After that, the CDL base control unit 910 ends the visualization process.

### (Second Specific Example of Operation of Information Processing Apparatus 100)

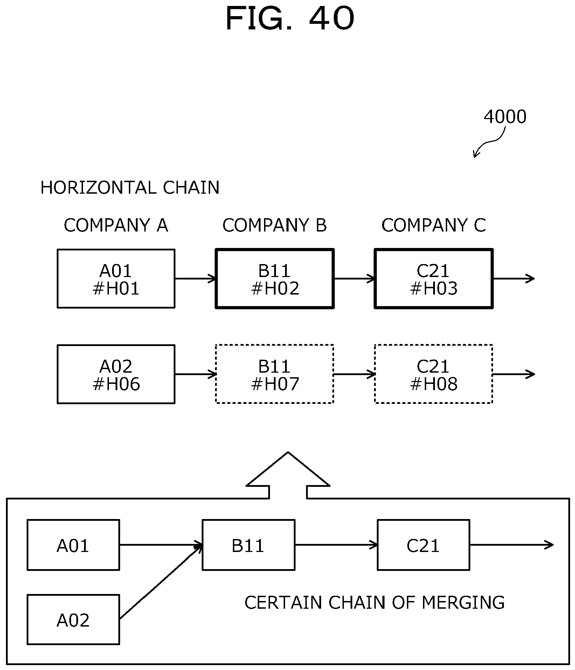

Next, a second specific example of the operation of the information processing apparatus 100 will be described with reference to FIGs. 40 to 52. The first specific example is a specific example of a case where user-defined information is included in a local block accompanying a global block.

Meanwhile, the second specific example is a specific example in which the local block accompanying the global block does not directly include the user-defined information but includes an identifier of the user-defined information. According to this, it is possible to suppress an increase in data volume of a lineage in a case where a copy of the local block is generated.

In the second specific example, the information processing system 200 uses a first lineage representing a sequence relationship of products related to participants of a supply chain and a second lineage representing a change history of information related to the product for each participant. In the following description, in some cases, the first lineage is referred to as a "horizontal chain". In the following description, in some cases, the second lineage is referred to as a "vertical chain". Description continues with reference to FIG. 40, and an example of a horizontal chain 4000 will be described.

FIG. 40 is an explanatory diagram illustrating an example of the horizontal chain 4000. In FIG. 40, since a product A01 of the company A and a product A02 of the company A use a product B11 of the company B, it is desirable that the horizontal chain 4000 represent merging of branches. Meanwhile, the horizontal chain 4000 includes a block of the product A01 with a data ID #H01, a block of the product B11 with a data ID #H02, a block of a product C21 with a data ID #H03, and a block of the product A02 with a data ID #H06.

To represent the merging, the horizontal chain 4000 includes a block of the product B11 with a data ID #H07 and a block of the product C21 with a data ID #H08. The block of the product B11 with the data ID #H07 corresponds to a copy of the block of the product B11 with the data ID #H02. The block of the product C21 with the data ID #H08 corresponds to a copy of the block of the product C21 with the data ID #H03.

The horizontal chain 4000 sequentially couples the block of the product A01 with the data ID #H01, the block of the product B11 with the data ID #H02, and the block of the product C21 with the data ID #H03. The horizontal chain 4000 sequentially couples the block of the product A02 with the data ID #H06, the block of the product B11 with the data ID #H07, and the block of the product C21 with the data ID #H08.

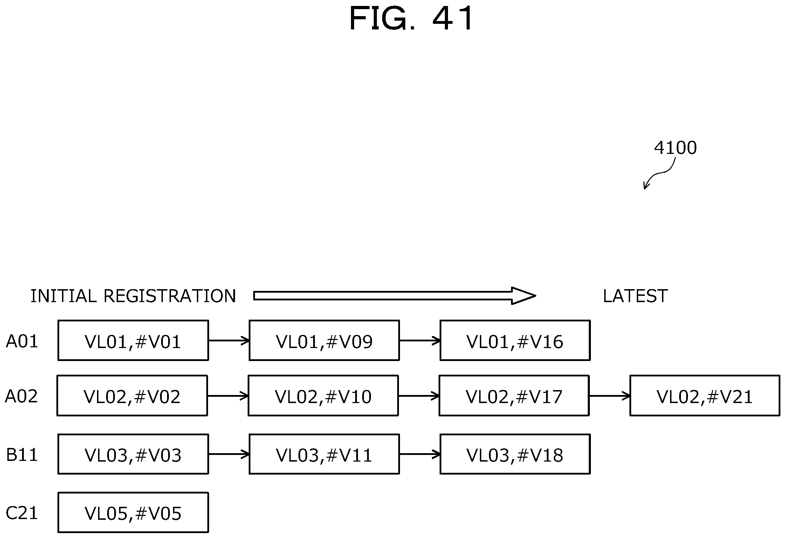

In this manner, the horizontal chain 4000 may represent merging of branches. Each block of the horizontal chain 4000 refers to a block of a vertical chain 4100 via a local block accompanying the block. Next, an example of the vertical chain 4100 will be described with reference to FIG. 41.

FIG. 41 is an explanatory diagram illustrating an example of the vertical chain 4100. As illustrated in FIG. 41, the vertical chain 4100 includes, for each product, a series of blocks corresponding to the product. For example, the vertical chain 4100 sequentially couples a block with a data ID #V01 including data VL01, a block with a data ID #V09 including the data VL01, and a block with a data ID #V16 including the data VL01.

For example, the data VL01 is data corresponding to the product A01. The data VL01 of the block with the data ID #V09 is data obtained by correcting the data VL01 of the block with the data ID #V01. The data VL01 of the block with the data ID #V16 is data obtained by correcting the data VL01 of the block with the data ID #V09.

For example, the vertical chain 4100 sequentially couples a block with a data ID #V02, a block with a data ID #V10, a block with a data ID #V17, and a block with a data ID #V21. Each of the block with the data ID #V02, the block with the data ID #V10, the block with the data ID #V17, and the block with the data ID #V21 includes data VL02.

For example, the data VL02 is data corresponding to the product A02. The data VL02 of the block with the data ID #V10 is data obtained by correcting the data VL02 of the block with the data ID #V02. The data VL02 of the block with the data ID #V17 is data obtained by correcting the data VL02 of the block with the data ID #V10. The data VL02 of the block with the data ID #V21 is data obtained by correcting the data VL02 of the block with the data ID #V17.

For example, the vertical chain 4100 sequentially couples a block with a data ID #V03 including data VL03, a block with a data ID #V11 including the data VL03, and a block with a data ID #V18 including the data VL03.

The data VL03 is data corresponding to the product 811. The data VL03 of the block with the data ID #V11 is data obtained by correcting the data VL03 of the block with the data ID #V03. The data VL03 of the block with the data ID #V18 is data obtained by correcting the data VL03 of the block with the data ID #V11.

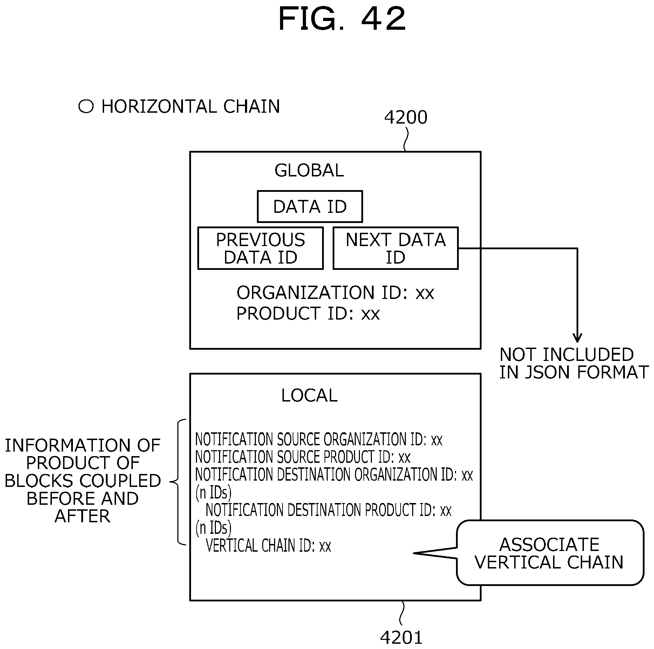

For example, the vertical chain 4100 includes a block with a data ID #V05 including data VL05. The data VL05 is data corresponding to the product C21. In this manner, the vertical chain 4100 may represent, for each product, a change history of information on the product. The series of blocks of the vertical chain 4100 are associated with each block of the horizontal chain 4000 such that the series of blocks of the vertical chain 4100 may be referred to by the block. Next, a specific example of a block 4200 of the horizontal chain 4000 will be described with reference to FIG. 42.

FIG. 42 is an explanatory diagram illustrating the specific example of the block 4200 of the horizontal chain 4000. As illustrated in FIG. 42, the block 4200 is a global block. The block 4200 includes a data ID, a previous data ID, a next data ID, an organization ID, a product ID, and the like. The data ID is identification information for identifying the block 4200.

The previous data ID is identification information for identifying another block coupled immediately before the block 4200. The next data ID is identification information for identifying still another block coupled immediately after the block 4200. The next data ID may be empty when the block 4200 is added to the horizontal chain 4000. The organization ID is identification information for identifying an organization corresponding to the block 4200. The product ID is identification information for identifying a product corresponding to the block 4200.

A local block 4201 is coupled to the block 4200. The block 4201 includes a notification source organization ID, a notification source product ID, n notification destination organization IDs, n notification destination product IDs, and a vertical chain ID. The notification source organization ID is identification information for identifying an organization corresponding to a block with the previous data ID. The notification source product ID is identification information for identifying a product corresponding to the block with the previous data ID.

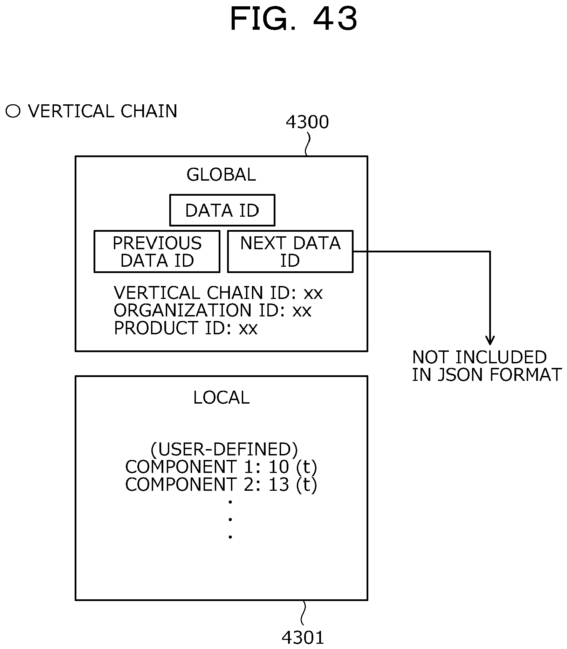

The notification destination organization ID is identification information for identifying an organization corresponding to a block with a next data ID. The notification destination product ID is identification information for identifying a product corresponding to the block with the next data ID. The vertical chain ID is identification information for identifying the vertical chain 4100. Next, a specific example of a block 4300 of the vertical chain 4100 will be described with reference to FIG. 43.

FIG. 43 is an explanatory diagram illustrating the specific example of the block 4300 of the vertical chain 4100. As illustrated in FIG. 43, the block 4300 is a global block. The block 4300 includes a data ID, a previous data ID, a next data ID, a vertical chain ID, an organization ID, a product ID, and the like. The data ID is identification information for identifying the block 4300.

The previous data ID is identification information for identifying another block coupled immediately before the block 4300. The next data ID is identification information for identifying still another block coupled immediately after the block 4300. The next data ID may be empty when the block 4300 is added to the vertical chain 4100. The vertical chain ID is identification information for identifying the vertical chain 4100.

The organization ID is identification information for identifying an organization corresponding to the block 4300. The product ID is identification information for identifying a product corresponding to the block 4300. A local block 4301 is coupled to the block 4300. The block 4301 includes user-defined data. The user-defined data is, for example, the number of components to be used in the product corresponding to the block 4300.

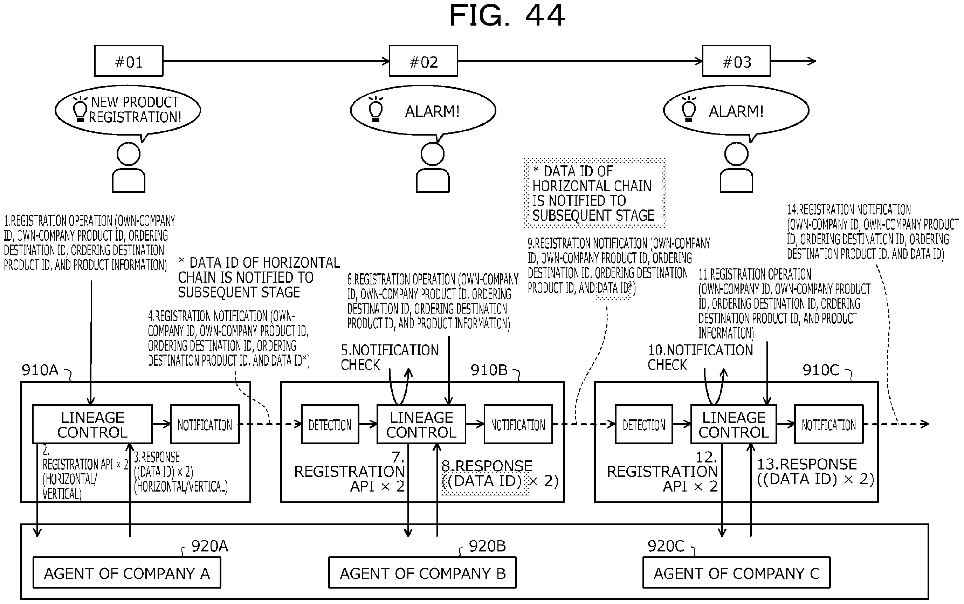

Next, an example in which the CDL base control unit 910 of the information processing apparatus 100 registers new data in a lineage in the second specific example will be described with reference to FIG. 44.

FIG. 44 is an explanatory diagram illustrating an example in which new data is registered in the second specific example. (44-1) It is assumed that a user of the company A wants to register, for example, data of a product of the company A using a product of the company B in the lineage, in FIG. 44. Based on an operation input by the user of the company A, the higher-level application 900A transmits a data registration request including an own-company ID, an own-company product ID, an ordering destination ID, an ordering destination product ID, and product information to the CDL base control unit 910A.

The own-company ID is identification information for identifying the company A. The own-company product ID is identification information for identifying a product of the company A for which data is registered. The ordering destination ID is identification information for identifying the company B that orders a product of another company to be used for the product of the company A. The ordering destination product ID is identification information for identifying the product of the company B. The product information is data of the product of the company A. For example, the product information includes an attribute or the like of the product of the company B to be used for the product of the company A. The attribute is, for example, a number, a price, or the like.

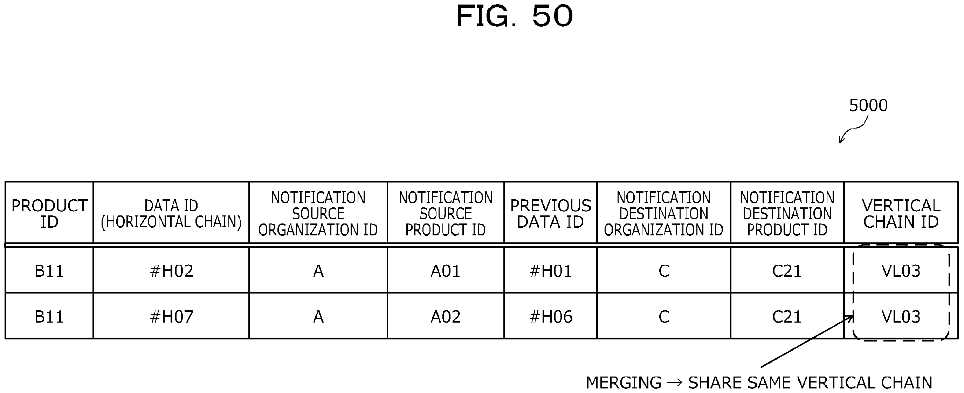

(44-2) The CDL base control unit 910A accepts the data registration request. The CDL base control unit 910A acquires an own-company ID, an own-company product ID, an ordering destination ID, an ordering destination product ID, and product information from the data registration request. The CDL base control unit 910A refers to a registration-completion list with which registration-completion data may be specified to determine whether registration data = product information which is a target of the data registration request is new data to be registered for the first time or correction data for correcting the registration-completion data. An example of the registration-completion list will be described below with reference to FIG. 50, for example.

Here, it is assumed that the CDL base control unit 910A determines that the registration data is new data. Since the company A is on the most downstream side, the CDL base control unit 910A sets a previous data ID = empty. The CDL base control unit 910A acquires a vertical chain ID corresponding to the own-company product ID. Since the registration data is determined to be new data, the CDL base control unit 910A generates a JSON format for registration of a horizontal chain including the previous data ID = empty and the vertical chain ID and a JSON format for registration of a vertical chain including the registration data = product information.

For example, the JSON format for registration of the horizontal chain is a combination of a global block including the previous data ID = empty and a local block including the vertical chain ID. The JSON format for registration of the vertical chain is, for example, a combination of a global block and a local block including the registration data = product information. By using the generated JSON format for registration of the horizontal chain, the CDL base control unit 910A executes a registration API for the CDL base 920A. By using the generated JSON format for registration of the vertical chain, the CDL base control unit 910A executes the registration API for the CDL base 920A.

(44-3) The CDL base 920A accepts the JSON format for registration of the horizontal chain via the registration API. The CDL base 920A generates a new data ID, and sets the new data ID in the accepted JSON format for registration of the horizontal chain. The CDL base 920A calculates a hash value related to the global block and a hash value related to the local block in the JSON format for registration of the horizontal chain, and sets the hash values to the global block. After that, the CDL base 920A adds the JSON format for registration of the horizontal chain to the horizontal chain as a new block. The CDL base 920A transmits a response including the generated data ID related to the block added to the horizontal chain to the CDL base control unit 910A.

In the same manner, the CDL base 920A accepts the JSON format for registration of the vertical chain via the registration API. The CDL base 920A generates a new data ID, and sets the new data ID in the accepted JSON format for registration of the vertical chain. The CDL base 920A calculates a hash value related to the global block and a hash value related to the local block in the JSON format for registration of the vertical chain, and sets the hash values to the global block. After that, the CDL base 920A adds the JSON format for registration of the vertical chain to the vertical chain as a new block. The CDL base 920A transmits a response including the generated data ID related to the block added to the vertical chain to the CDL base control unit 910A.

(44-4) The CDL base control unit 910A accepts the response including the data ID related to the block added to the horizontal chain. The CDL base control unit 910A accepts the response including the data ID related to the block added to the vertical chain. Upon accepting the response including the data ID related to the block added to the horizontal chain and the response including the data ID related to the block added to the vertical chain, the CDL base control unit 910A determines that the registration data is registered in the vertical chain.

Since the registration data is registered in the vertical chain, the CDL base control unit 910A acquires the data ID related to the block added to the horizontal chain from the response including the data ID related to the block added to the horizontal chain. The CDL base control unit 910A transmits a registration notification including the acquired own-company ID, own-company product ID, ordering destination ID, ordering destination product ID, and data ID related to the block added to the horizontal chain, to the subsequent CDL base control unit 910B.

(44-5) When accepting the registration notification from the previous CDL base control unit 910A, the CDL base control unit 910B outputs an alarm to a user of the company B. By referring to the alarm, the user of the company B recognizes that the product of the company B is used for the product of the company A.

(44-6) The user of the company B wants to register, for example, data of the product of the company B using a product of the company C in the lineage. Based on an operation input by the user of the company B, the higher-level application 900B transmits a data registration request including an own-company ID, an own-company product ID, an ordering destination ID, an ordering destination product ID, and product information to the CDL base control unit 910B.

The own-company ID is identification information for identifying the company B. The own-company product ID is identification information for identifying a product of the company B for which data is to be registered. The ordering destination ID is identification information for identifying the company C that orders a product of another company to be used for the product of the company B. The ordering destination product ID is identification information for identifying the product of the company C. The product information is data of the product of the company B. For example, the product information includes an attribute or the like of the product of the company C to be used for the product of the company B. The attribute is, for example, a number, a price, or the like.

(44-7) The CDL base control unit 910B accepts the data registration request. The CDL base control unit 910B acquires the own-company ID, the own-company product ID, the ordering destination ID, the ordering destination product ID, and the product information from the data registration request. The CDL base control unit 910B refers to a registration-completion list with which registration-completion data may be specified to determine whether registration data = product information which is a target of the data registration request is new data to be registered for the first time or correction data for correcting the registration-completion data. An example of the registration-completion list will be described below with reference to FIG. 50, for example.

Here, it is assumed that the CDL base control unit 910B determines that the data is new data. Since the company B is not on the most downstream side, the CDL base control unit 910B extracts the data ID of the registration notification and acquires the data ID as a previous data ID. The CDL base control unit 910B acquires a vertical chain ID corresponding to the own-company product ID. Since the registration data is determined to be new data, the CDL base control unit 910B generates a JSON format for registration of a horizontal chain including the previous data ID and the vertical chain ID and a JSON format for registration of a vertical chain including the registration data = product information.

For example, the JSON format for registration of the horizontal chain is a combination of a global block including the previous data ID and a local block including the vertical chain ID. The JSON format for registration of the vertical chain is, for example, a combination of a global block and a local block including the registration data = product information. By using the generated JSON format for registration of the horizontal chain, the CDL base control unit 910A executes a registration API for the CDL base 920A. By using the generated JSON format for registration of the vertical chain, the CDL base control unit 910A executes the registration API for the CDL base 920A.

(44-8) The CDL base 920B accepts the JSON format for registration of the horizontal chain via the registration API. The CDL base 920B generates a new data ID, and sets the new data ID in the accepted JSON format for registration of the horizontal chain. The CDL base 920B calculates a hash value related to the global block and a hash value related to the local block in the JSON format for registration of the horizontal chain, and sets the hash values to the global block. After that, the CDL base 920B adds the JSON format for registration of the horizontal chain to the horizontal chain as a new block. The CDL base 920B transmits a response including the generated data ID related to the block added to the horizontal chain to the CDL base control unit 910B.

In the same manner, the CDL base 920B accepts the JSON format for registration of the vertical chain via the registration API. The CDL base 920B generates a new data ID, and sets the new data ID in the accepted JSON format for registration of the vertical chain. The CDL base 920B calculates a hash value related to the global block and a hash value related to the local block in the JSON format for registration of the vertical chain, and sets the hash values to the global block. After that, the CDL base 920B adds the JSON format for registration of the vertical chain to the vertical chain as a new block. The CDL base 920B transmits a response including the generated data ID related to the block added to the vertical chain to the CDL base control unit 910B.

(44-9) The CDL base control unit 910B accepts the response including the data ID related to the block added to the horizontal chain. The CDL base control unit 910B accepts the response including the data ID related to the block added to the vertical chain. Upon accepting the response including the data ID related to the block added to the horizontal chain and the response including the data ID related to the block added to the vertical chain, the CDL base control unit 910B determines that the registration data is registered in the vertical chain.

Since the registration data is registered in the vertical chain, the CDL base control unit 910B acquires the data ID related to the block added to the horizontal chain from the response including the data ID related to the block added to the horizontal chain. The CDL base control unit 910B transmits a registration notification including the acquired own-company ID, own-company product ID, ordering destination ID, ordering destination product ID, and data ID related to the block added to the horizontal chain, to the subsequent CDL base control unit 910C.

(44-10) When accepting the registration notification from the previous CDL base control unit 910B, the CDL base control unit 910C outputs an alarm to a user of the company C. By referring to the alarm, the user of the company C recognizes that the product of the company C is used for the product of the company B.

(44-11) The user of the company C wants to register, for example, data of the product of the company C using a product of the company D in the lineage. Based on an operation input by the user of the company C, the higher-level application 900C transmits a data registration request including an own-company ID, an own-company product ID, an ordering destination ID, an ordering destination product ID, and product information to the CDL base control unit 910C.

The own-company ID is identification information for identifying the company C. The own-company product ID is identification information for identifying a product of the company C for which data is registered. The ordering destination ID is identification information for identifying the company D that orders a product of another company to be used for the product of the company C. The ordering destination product ID is identification information for identifying the product of the company D. The product information is data of the product of the company C. For example, the product information includes an attribute or the like of the product of the company D to be used for the product of the company C. The attribute is, for example, a number, a price, or the like.

(44-12) The CDL base control unit 910C accepts the data registration request. The CDL base control unit 910C acquires the own-company ID, the own-company product ID, the ordering destination ID, the ordering destination product ID, and the product information from the data registration request. The CDL base control unit 910C refers to a registration-completion list with which registration-completion data may be specified to determine whether registration data = product information which is a target of the data registration request is new data to be registered for the first time or correction data for correcting the registration-completion data. An example of the registration-completion list will be described below with reference to FIG. 50, for example.

Here, it is assumed that the CDL base control unit 910C determines that the data is new data. Since the company C is not on the most downstream side, the CDL base control unit 910C extracts the data ID of the registration notification and acquires the data ID as the previous data ID. The CDL base control unit 910C acquires a vertical chain ID corresponding to the own-company product ID. Since the registration data is determined to be new data, the CDL base control unit 910C generates a JSON format for registration of a horizontal chain including the previous data ID and the vertical chain ID and a JSON format for registration of a vertical chain including the registration data = product information.

For example, the JSON format for registration of the horizontal chain is a combination of a global block including the previous data ID and a local block including the vertical chain ID. The JSON format for registration of the vertical chain is, for example, a combination of a global block and a local block including the registration data = product information. By using the generated JSON format for registration of the horizontal chain, the CDL base control unit 910B executes a registration API for the CDL base 920B. By using the generated JSON format for registration of the vertical chain, the CDL base control unit 910B executes a registration API for the CDL base 920B.

(44-13) The CDL base 920C accepts the JSON format for registration of the horizontal chain via the registration API. The CDL base 920C generates a new data ID, and sets the new data ID in the accepted JSON format for registration of the horizontal chain. The CDL base 920C calculates a hash value related to the global block and a hash value related to the local block in the JSON format for registration of the horizontal chain, and sets the hash values to the global block. After that, the CDL base 920C adds the JSON format for registration of the horizontal chain to the horizontal chain as a new block. The CDL base 920C transmits a response including the generated data ID related to the block added to the horizontal chain to the CDL base control unit 910C.

In the same manner, the CDL base 920C accepts the JSON format for registration of the vertical chain via the registration API. The CDL base 920C generates a new data ID, and sets the new data ID in the accepted JSON format for registration of the vertical chain. The CDL base 920C calculates a hash value related to the global block and a hash value related to the local block in the JSON format for registration of the vertical chain, and sets the hash values to the global block. After that, the CDL base 920C adds the JSON format for registration of the vertical chain to the vertical chain as a new block. The CDL base 920C transmits a response including the generated data ID related to the block added to the vertical chain to the CDL base control unit 910C.

(44-14) The CDL base control unit 910C accepts the response including the data ID related to the block added to the horizontal chain. The CDL base control unit 910C accepts the response including the data ID related to the block added to the vertical chain. Upon accepting the response including the data ID related to the block added to the horizontal chain and the response including the data ID related to the block added to the vertical chain, the CDL base control unit 910C determines that the registration data is registered in the vertical chain.

Since the registration data is registered in the vertical chain, the CDL base control unit 910C acquires the data ID related to the block added to the horizontal chain from the response including the data ID related to the block added to the horizontal chain. The CDL base control unit 910C transmits a registration notification including the acquired own-company ID, own-company product ID, ordering destination ID, ordering destination product ID, and data ID related to the block added to the horizontal chain, to the subsequent CDL base control unit 910D.

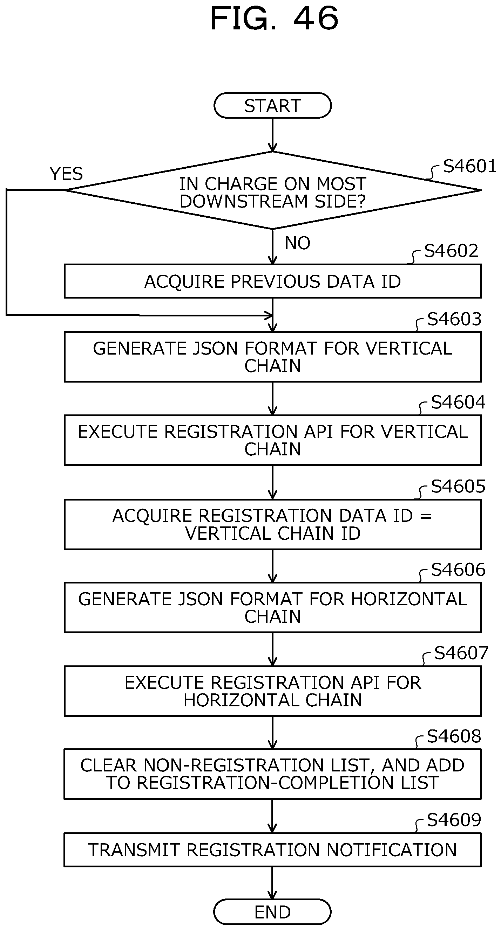

In this manner, the information processing system 200 may register new data in a lineage. For example, the information processing system 200 may add new data to a vertical chain of a lineage. A flow of a process in which the CDL base control unit 910 registers the new data in the lineage will be described below with reference to FIG. 46.

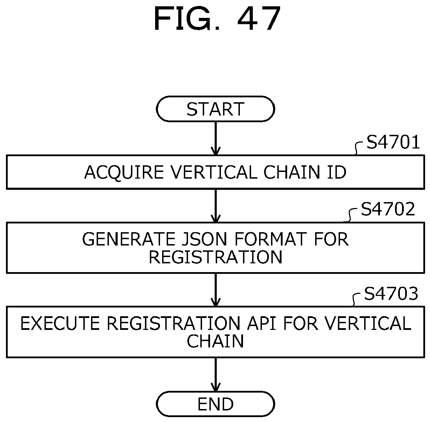

Here, the case where the CDL base control unit 910 registers the new data in the lineage is described, the embodiment is not limited thereto. For example, there may be a case where the CDL base control unit 910 updates registration-completion data with correction data in the lineage. A flow of a process in which the CDL base control unit 910 updates the registration-completion data with the correction data in the lineage will be described below with reference to FIG. 47.

### (Own-company Registration Process Procedure)

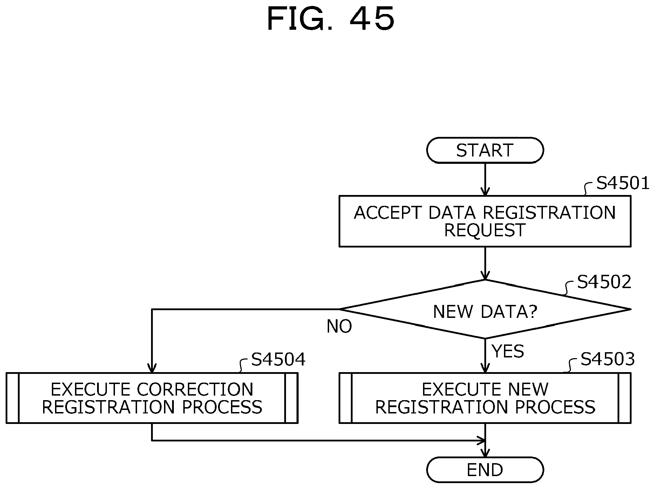

Next, an example of an own-company registration process procedure executed by the CDL base control unit 910 will be described with reference to FIG. 45. For example, an own-company registration process is realized by the CPU 701 illustrated in FIG. 7, a storage region such as the memory 702 or the recording medium 705, and the network I/F 703.

FIG. 45 is a flowchart illustrating an example of an own-company registration process procedure in the second specific example. In FIG. 45, the CDL base control unit 910 accepts a data registration request from the higher-level application 900 of an own company via an API (step S4501). The data registration request includes an own-company ID, an own-company product ID, an ordering destination ID, an ordering destination product ID, registration data, and the like. For example, the registration data includes product information and the like.

The CDL base control unit 910 determines whether or not the registration data designated by the data registration request is new data (step S4502). In a case where the registration data is new data (Yes in step S4502), the CDL base control unit 910 proceeds to the process in step S4503. On the other hand, in a case where the registration data is not new data but correction data (No in step S4502), the CDL base control unit 910 proceeds to the process in step S4504.

At step S4503, the CDL base control unit 910 executes a new registration process which will be described below in FIG. 46 (step S4503). The CDL base control unit 910 ends the own-company registration process.

At step S4504, the CDL base control unit 910 executes a correction registration process which will be described below in FIG. 47 (step S4504). The CDL base control unit 910 ends the own-company registration process.

### (New Registration Process Procedure)

Next, an example of a new registration process procedure executed by the CDL base control unit 910 will be described with reference to FIG. 46. For example, a new registration process is realized by the CPU 701 illustrated in FIG. 7, a storage region such as the memory 702 or the recording medium 705, and the network I/F 703.

FIG. 46 is a flowchart illustrating an example of a new registration process procedure in the second specific example. In FIG. 46, the CDL base control unit 910 determines whether or not the information processing apparatus 100 is in charge on the most downstream side (step S4601). In a case of the charge on the most downstream side (Yes in step S4601), the CDL base control unit 910 proceeds to the process in step S4603. On the other hand, in a case where the information processing apparatus 100 is not the charge on the most downstream side (No in step S4601), the CDL base control unit 910 proceeds to the process in step S4602.

At step S4602, when there is a registration notification from the previous CDL base control unit 910 for a product ID designated via an API, the CDL base control unit 910 acquires a previous data ID from the registration notification (step S4602). The registration notification includes an own-company ID, an own-company product ID, an ordering destination ID, an ordering destination product ID, and a data ID. The CDL base control unit 910 proceeds to the process in step S4603.

At step S4603, the CDL base control unit 910 generates a JSON format for a vertical chain by using registration data of a data registration request and the acquired previous data ID (step S4603). By using the JSON format for the vertical chain, the CDL base control unit 910 executes a registration API for the vertical chain (step S4604).

Next, the CDL base control unit 910 acquires a response of the registration API, and acquires registration data ID = vertical chain ID of the response (step S4605). Next, by using the acquired registration data ID and the acquired previous data ID, the CDL base control unit 910 generates a JSON format for a horizontal chain (step S4606). By using the JSON format for the horizontal chain, the CDL base control unit 910 executes a registration API for the horizontal chain (step S4607).

Next, the CDL base control unit 910 acquires a response of the registration API, clears a non-registration list, and adds a registration data ID of the response to a registration-completion list (step S4608). The CDL base control unit 910 generates a registration notification including the own-company ID, the own-company product ID, the ordering destination ID, the ordering destination product ID, and the data ID of the response, and transmits the registration notification to the subsequent CDL base control unit 910 (step S4609). After that, the CDL base control unit 910 ends the new registration process.

### (Correction Registration Process Procedure)

Next, an example of a correction registration process procedure executed by the CDL base control unit 910 will be described with reference to FIG. 47. For example, a correction registration process is realized by the CPU 701 illustrated in FIG. 7, a storage region such as the memory 702 or the recording medium 705, and the network I/F 703.

FIG. 47 is a flowchart illustrating an example of a correction registration process procedure in the second specific example. In FIG. 47, the CDL base control unit 910 refers to a registration-completion list, searches for registration-completion data using an own-company product ID of a data registration request as a key, and acquires a vertical chain ID from the searched registration-completion data (step S4701).

Next, the CDL base control unit 910 generates a JSON format for registration, by using the acquired vertical chain ID and registration data of the data registration request (step S4702). The CDL base control unit 910 executes a registration API for the vertical chain (step S4703). After that, the CDL base control unit 910 ends the correction registration process.

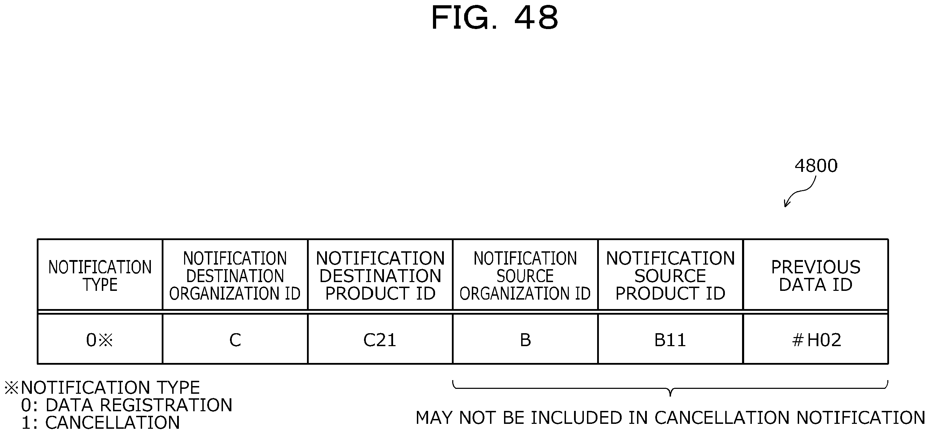

Next, an example of a format in the second specific example will be described with reference to FIGs. 48 to 50. Examples of various data structures in the second specific example will be described. First, an example of a data structure of various notifications such as a data registration notification and a cancellation notification will be described with reference to FIG. 48.

FIG. 48 is an explanatory diagram illustrating an example of a data structure of various notifications. As illustrated in FIG. 48, a notification 4800 used as a data registration notification or a cancellation notification has fields of a notification type, a notification destination organization ID, a notification destination product ID, a notification source organization ID, a notification source product ID, and a previous data ID.

Flag information indicating whether the notification 4800 is a data registration notification or a cancellation notification is set in the field of the notification type. For example, when a value of the flag information is 0, the flag information indicates a data registration notification. For example, when the value of the flag information is 1, the flag information indicates a cancellation notification.

The notification destination organization ID for identifying a notification destination of the notification 4800 is set in the field of the notification destination organization ID. The notification destination product ID for identifying a product of the notification destination of the notification 4800 is set in the field of the notification destination product ID. For example, the notification destination product ID identifies the product at the notification destination of the notification 4800, which is used for a product corresponding to a block added to a lineage at a notification source of the notification 4800. For example, the notification destination product ID identifies a product, which is to be invalidated, of the notification destination of the notification 4800.

The notification source organization ID for identifying the notification source of the notification 4800 is set in the field of the notification source organization ID. The field of the notification source organization ID may be empty in a case where the notification 4800 is a cancellation notification. The notification source product ID for identifying a product of the notification source of the notification 4800 is set in the field of the notification source product ID. For example, the notification source product ID identifies the product corresponding to the block added to the lineage at the notification source of the notification 4800. The field of the notification source product ID may be empty in a case where the notification 4800 is a cancellation notification.

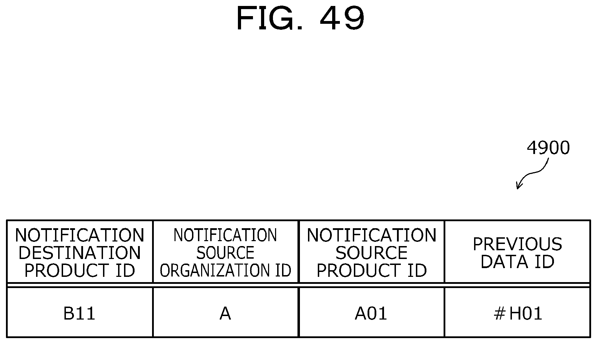

A data ID of the block at the notification source of the notification 4800 is set in the field of the previous data ID. For example, the previous data ID is a data ID of the block added to the lineage at the notification source of the notification 4800. The field of the previous data ID may be empty in a case where the notification 4800 is a cancellation notification. Next, an example of a data structure of a non-registration list 4900 will be described with reference to FIG. 49.

FIG. 49 is an explanatory diagram illustrating the example of the data structure of the non-registration list 4900. As illustrated in FIG. 49, the non-registration list 4900 includes fields of a notification destination product ID, a notification source organization ID, a notification source product ID, and a previous data ID. In the non-registration list 4900, non-registration data management information is stored as a record by setting information in each field for each registration data.

An ordering destination product ID of a registration notification is set as a notification destination product ID in the field of the notification destination product ID. An ordering destination product ID of the registration notification is set as a notification destination organization ID in the field of the notification source organization ID. An own-company product ID of the registration notification is set as a notification source product ID in the field of the notification source product ID. A data ID of the registration notification is set as a previous data ID in the field of the previous data ID. Next, an example of a data structure of a registration-completion list 5000 will be described with reference to FIG. 50.

FIG. 50 is an explanatory diagram of an example of a data structure of the registration-completion list 5000. As illustrated in FIG. 50, the registration-completion list 5000 includes fields of a product ID, a data ID, a notification source organization ID, a notification source product ID, a previous data ID, a notification destination organization ID, a notification destination product ID, and a vertical chain ID. In the registration-completion list 5000, registration-completion data management information is stored as a record by setting information in each field for each registration-completion data.

A product ID corresponding to the registration-completion data is set in the field of the product ID. A data ID set in a block corresponding to the registration-completion data in a horizontal chain is set in the field of the data ID. For example, the data ID set in the block corresponding to a vertical chain including the registration-completion data in the horizontal chain is set in the field of the data ID. An own-company ID of a registration notification referred to when the registration-completion data is registered is set in the field of the notification source organization ID. An own-company product ID of the registration notification referred to when the registration-completion data is registered is set in the field of the notification source product ID.

A data ID of a block, which is coupled immediately before the block of the data ID described above, managed by the previous CDL base control unit 910 which is the notification source described above is set in the field of the previous data ID. An ordering destination ID of the registration notification is set as a notification destination organization ID in the field of the notification destination organization ID. An ordering destination product ID of a registration notification is set as a notification destination product ID in the field of the notification destination product ID.

Identification information for identifying the vertical chain including the registration-completion data is set in the field of the vertical chain ID. When there are a plurality of different records including the same vertical chain ID, registration data corresponding to a record other than the oldest record among the plurality of records corresponds to copy data.

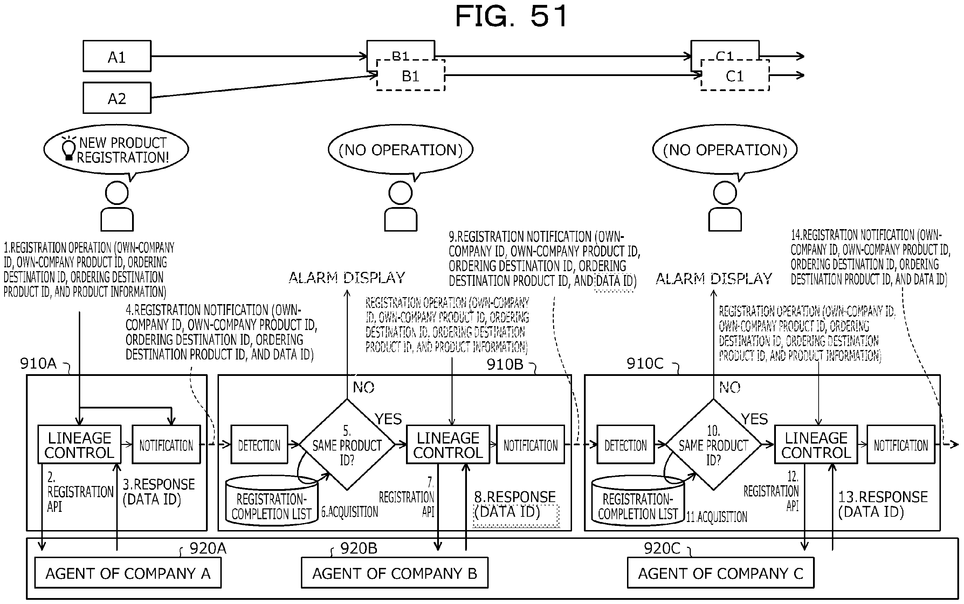

Next, an example in which the information processing system 200 forms a lineage representing merging will be described with reference to FIG. 51. For example, the CDL base control unit 910 controls the lineage such that a copy of a block is added to the lineage and the merging is represented.

FIG. 51 is an explanatory diagram illustrating an example of forming a lineage representing merging. (51-1) It is assumed that a user of the company A wants to register, for example, data of the product A2 of the company A using the product B1 of the company B in the lineage, in FIG. 51. The product B1 of the company B is also used for the product A1 of the company A. Therefore, it is desirable to form the lineage representing the merging. Based on an operation input by the user of the company A, the higher-level application 900A transmits a data registration request including an own-company ID, an own-company product ID, an ordering destination ID, an ordering destination product ID, and product information to the CDL base control unit 910A.

(51-2) The CDL base control unit 910A accepts the data registration request. The CDL base control unit 910A acquires an own-company ID, an own-company product ID, an ordering destination ID, an ordering destination product ID, and product information from the data registration request. The CDL base control unit 910A refers to a registration-completion list with which registration-completion data may be specified to determine whether registration data = product information which is a target of the data registration request is new data to be registered for the first time or correction data for correcting the registration-completion data. An example of the registration-completion list will be described below with reference to FIG. 38, for example.

Here, it is assumed that the CDL base control unit 910A determines that the registration data is new data. Since the company A is on the most downstream side, the CDL base control unit 910A sets a previous data ID = empty. The CDL base control unit 910A acquires a vertical chain ID corresponding to the own-company product ID. Since the registration data is determined to be new data, the CDL base control unit 910A generates a JSON format for registration of a horizontal chain including the previous data ID = empty and the vertical chain ID and a JSON format for registration of a vertical chain including the registration data = product information.

For example, the JSON format for registration of the horizontal chain is a combination of a global block including the previous data ID = empty and a local block including the vertical chain ID. The JSON format for registration of the vertical chain is, for example, a combination of a global block and a local block including the registration data = product information. By using the generated JSON format for registration of the horizontal chain, the CDL base control unit 910A executes a registration API for the CDL base 920A. By using the generated JSON format for registration of the vertical chain, the CDL base control unit 910A executes the registration API for the CDL base 920A.

(51-3) The CDL base 920A accepts the JSON format for registration of the horizontal chain via the registration API. The CDL base 920A generates a new data ID, and sets the new data ID in the accepted JSON format for registration of the horizontal chain. The CDL base 920A calculates a hash value related to the global block and a hash value related to the local block in the JSON format for registration of the horizontal chain, and sets the hash values to the global block. After that, the CDL base 920A adds the JSON format for registration of the horizontal chain to the horizontal chain as a new block. The CDL base 920A transmits a response including the generated data ID related to the block added to the horizontal chain to the CDL base control unit 910A.

(51-4) The CDL base control unit 910A accepts the response including the data ID related to the block added to the horizontal chain. The CDL base control unit 910A accepts the response including the data ID related to the block added to the vertical chain. Upon accepting the response including the data ID related to the block added to the horizontal chain and the response including the data ID related to the block added to the vertical chain, the CDL base control unit 910A determines that the registration data is registered in the vertical chain.

Since the registration data is registered in the vertical chain, the CDL base control unit 910A acquires the data ID related to the block added to the horizontal chain from the response including the data ID related to the block added to the horizontal chain. The CDL base control unit 910A transmits a registration notification including the acquired own-company ID, own-company product ID, ordering destination ID, ordering destination product ID, and data ID related to the block added to the horizontal chain, to the subsequent CDL base control unit 910B.

(51-5) The CDL base control unit 910B accepts the registration notification from the previous CDL base control unit 910A. The registration notification includes an own-company ID, an own-company product ID, an ordering destination ID, an ordering destination product ID, and a data ID related to the block added to the horizontal chain. By using the ordering destination product ID of the registration notification as a key, the CDL base control unit 910B searches the registration-completion list for a product ID that coincides with the ordering destination product ID of the registration notification.

When the product ID that coincides with the ordering destination product ID of the registration notification is not found, the CDL base control unit 910B outputs an alarm to a user of the company B. On the other hand, when the CDL base control unit 910B finds a product ID that coincides with the ordering destination product ID of the registration notification, the CDL base control unit 910B determines to generate a copy of the existing block so as to represent merging, and continues the process without outputting an alarm to the user of the company B. Here, it is assumed that the CDL base control unit 910B finds the product ID that coincides with the ordering destination product ID of the registration notification.

(51-6) The CDL base control unit 910B reads and acquires a copy source data ID, an own-company product ID, an ordering destination ID, and an ordering destination product ID, from the registration-completion list by using the found product ID as a key. The copy source data ID is a data ID corresponding to the found product ID. The own-company product ID is the found product ID. The ordering destination ID is a notification destination organization ID corresponding to the found product ID. The ordering destination product ID is a notification destination product ID corresponding to the found product ID. The CDL base control unit 910B acquires the own-company ID.

(51-7) Since the company B is not on the most downstream side, the CDL base control unit 910B extracts the data ID of the registration notification and acquires the data ID as the previous data ID. The CDL base control unit 910B generates a JSON format for registration of a horizontal chain including a global block including a data ID of the set previous data ID = registration notification and a copy of a local block accompanying a block of the copy source data ID. The copy of the local block includes a vertical chain ID. By using the generated JSON format for registration of the horizontal chain, the CDL base control unit 910B executes a registration API for the CDL base 920B.

(51-8) The CDL base 920B accepts the JSON format for registration of the horizontal chain via the registration API. The CDL base 920B generates a new data ID, and sets the new data ID in the accepted JSON format for registration. The CDL base 920B calculates a hash value related to the global block and a hash value related to the local block in the JSON format for registration of the horizontal chain, and sets the hash values to the global block.

After that, the CDL base 920B adds the JSON format for registration of the horizontal chain to the lineage. In this manner, in the CDL base 920B, the different blocks of the horizontal chain may share the vertical chain. The CDL base 920B transmits a response including the generated data ID to the CDL base control unit 910B.

(51-9) Upon accepting the response including the data ID, the CDL base control unit 910B determines that merging is represented in the lineage. The CDL base control unit 910B acquires the data ID included in the response. The CDL base control unit 910B transmits a registration notification including the acquired own-company ID, own-company product ID, ordering destination ID, ordering destination product ID, and data ID to the subsequent CDL base control unit 910C.

(51-10) The CDL base control unit 910C accepts the registration notification from the previous CDL base control unit 910B. The registration notification includes an own-company ID, an own-company product ID, an ordering destination ID, an ordering destination product ID, and a data ID related to the block added to the horizontal chain. By using the ordering destination product ID of the registration notification as a key, the CDL base control unit 910C searches the registration-completion list for a product ID that coincides with the ordering destination product ID of the registration notification.

When the product ID that coincides with the ordering destination product ID of the registration notification is not found, the CDL base control unit 910C outputs an alarm to a user of the company C. On the other hand, when the CDL base control unit 910C finds a product ID that coincides with the ordering destination product ID of the registration notification, the CDL base control unit 910C determines to generate a copy of the existing block so as to represent merging, and continues the process without outputting an alarm to the user of the company C. Here, it is assumed that the CDL base control unit 910C finds the product ID that coincides with the ordering destination product ID of the registration notification.

(51-11) The CDL base control unit 910C reads and acquires a copy source data ID, an own-company product ID, an ordering destination ID, and an ordering destination product ID, from the registration-completion list by using the found product ID as a key. The copy source data ID is a data ID corresponding to the found product ID. The own-company product ID is the found product ID. The ordering destination ID is a notification destination organization ID corresponding to the found product ID. The ordering destination product ID is a notification destination product ID corresponding to the found product ID. The CDL base control unit 910C acquires the own-company ID.

(51-12) Since the company C is not on the most downstream side, the CDL base control unit 910C extracts the data ID of the registration notification and acquires the data ID as the previous data ID. The CDL base control unit 910C generates a JSON format for registration of a horizontal chain including a global block including a data ID of the set previous data ID = registration notification and a copy of a local block accompanying a block of the copy source data ID. The copy of the local block includes a vertical chain ID. By using the generated JSON format for registration of the horizontal chain, the CDL base control unit 910C executes a registration API for the CDL base 920C.

(51-13) The CDL base 920C accepts the JSON format for registration of the horizontal chain via the registration API. The CDL base 920C generates a new data ID, and sets the new data ID in the accepted JSON format for registration. The CDL base 920C calculates a hash value related to the global block and a hash value related to the local block in the JSON format for registration of the horizontal chain, and sets the hash values to the global block.

After that, the CDL base 920C adds the JSON format for registration of the horizontal chain to the lineage. In this manner, in the CDL base 920C, the different blocks of the horizontal chain may share the vertical chain. The CDL base 920C transmits a response including the generated data ID to the CDL base control unit 910C.

(51-14) Upon accepting the response including the data ID, the CDL base control unit 910C determines that merging is represented in the lineage. The CDL base control unit 910C acquires the data ID included in the response. The CDL base control unit 910C transmits a registration notification including the acquired own-company ID, own-company product ID, ordering destination ID, ordering destination product ID, and data ID to the subsequent CDL base control unit 910D (not illustrated).

In this manner, even when it is difficult to directly represent merging of branches in a lineage, the information processing system 200 may represent the merging of the branches, in a pseudo manner. Therefore, with the information processing system 200, it is possible to flexibly update a CDL. The information processing system 200 may represent the merging of the branches without outputting an alarm to a user of the company B and a user of the company C. Therefore, the information processing system 200 may reduce an operation load on the user.

### (Copy Registration Process Procedure)

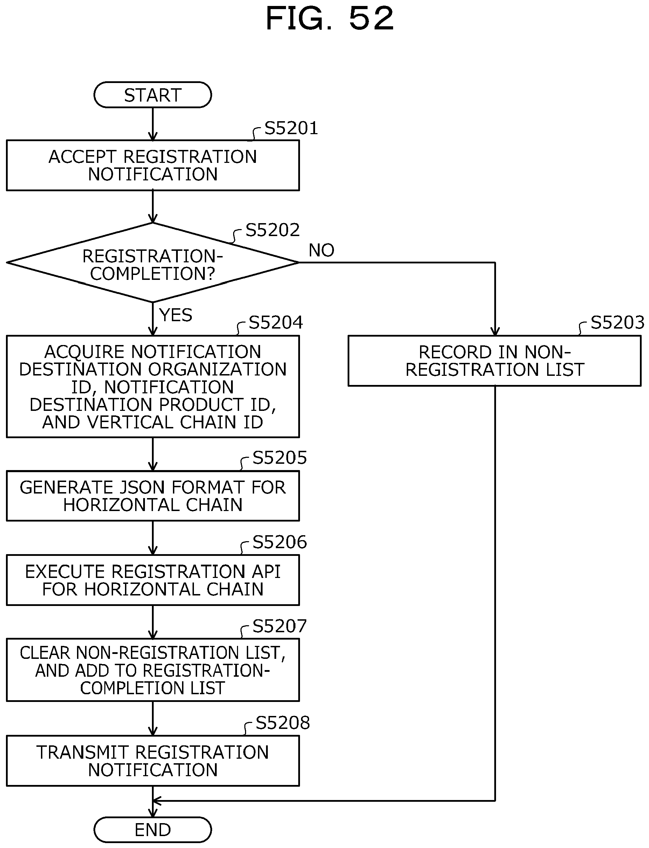

Next, an example of a copy registration process procedure executed by the CDL base control unit 910 will be described with reference to FIG. 52. For example, a copy registration process is realized by the CPU 701 illustrated in FIG. 7, a storage region such as the memory 702 or the recording medium 705, and the network I/F 703.

FIG. 52 is a flowchart illustrating an example of a copy registration process procedure in the second specific example. In FIG. 52, the CDL base control unit 910 accepts a registration notification from the previous CDL base control unit 910 (step S5201). The registration notification includes an own-company ID, an own-company product ID, an ordering destination ID, an ordering destination product ID, and a data ID.

Next, the CDL base control unit 910 refers to a registration-completion list to determine whether or not the data ID of the registration notification is registered (step S5202). In a case where the data ID of the registration notification is not registered (No in step S5202), the CDL base control unit 910 proceeds to the process in step S5203. On the other hand, in a case where the data ID of the registration notification is already registered (Yes in step S5202), the CDL base control unit 910 proceeds to the process in step S5204.

At step S5203, the CDL base control unit 910 records the data ID of the registration notification in a non-registration list (step S5203). For example, the CDL base control unit 910 records and manages the own-company ID, the own-company product ID, the data ID, and the like of the registration notification in the non-registration list. The CDL base control unit 910 ends the copy registration process.

At step S5204, the CDL base control unit 910 acquires a notification destination organization ID, a notification destination product ID, and a vertical chain ID of a registration-completion product ID from the registration-completion list (step S5204).

Next, the CDL base control unit 910 copies a local portion of a horizontal chain, and generates a JSON format for registration of the horizontal chain (step S5205). By using the JSON format for registration of the horizontal chain, the CDL base control unit 910 executes a registration API for the horizontal chain (step S5206).

After that, the CDL base control unit 910 acquires a response to the registration API, clears the non-registration list, and adds a data ID of the response to the registration-completion list (step S5207). The CDL base control unit 910 generates a registration notification including the own-company ID, the own-company product ID, the ordering destination ID, the ordering destination product ID, and the data ID of the response, and transmits the registration notification to the subsequent CDL base control unit 910 (step S5208). After that, the CDL base control unit 910 ends the copy registration process.

As described above, with the information processing apparatus 100, it is possible to accept a first request of newly coupling a second block before a first block managed by the information processing apparatus 100 among a plurality of blocks. With the information processing apparatus 100, in a case where the first request is accepted, it is possible to control the plurality of blocks such that a copy of the first block is added to the plurality of blocks and coupled after the second block. Thus, the information processing apparatus 100 may flexibly update the plurality of blocks. Even in a case where it is difficult to directly couple another block immediately before a block, the information processing apparatus 100 may couple the another block immediately before the block in a pseudo manner.

With the information processing apparatus 100, in a case where the first request is accepted, it is possible to control the plurality of blocks such that the copy of the first block including a copy flag indicating the copy of the first block is added to the plurality of blocks and is coupled after the second block. Thus, the information processing apparatus 100 may distinguish between the first block and the copy of the first block. The information processing apparatus 100 is capable of displaying the first block and the copy of the first block to be distinguishable from each other by a user.

With the information processing apparatus 100, it is possible to accept a display request for all or some of the plurality of blocks. With the information processing apparatus 100, in a case where the display request is accepted, it is possible to specify the copy of the first block based on the copy flag when all or some of the plurality of blocks are displayed. With the information processing apparatus 100, it is possible to display the copy of the first block as an original first block or to display a correspondence with the original first block in a distinguishable manner. Thus, the information processing apparatus 100 is capable of displaying the first block and the copy of the first block to be intuitively distinguishable from each other by the user.

With the information processing apparatus 100, it is possible to accept the first request of coupling the second block included in the plurality of blocks before the first block. Thus, the information processing apparatus 100 may couple the existing second block before the existing first block.

With the information processing apparatus 100, it is possible to generate a second block and control the plurality of blocks such that the generated second block is added to the plurality of blocks. Thus, the information processing apparatus 100 may couple the new second block before the existing first block.

With the information processing apparatus 100, it is possible to accept a second request of invalidating a third block managed by the information processing apparatus 100 among the plurality of blocks. With the information processing apparatus 100, in a case where the second request is accepted, it is possible to control the plurality of blocks such that a fourth block indicating that the third block is to be invalidated is added to the plurality of blocks and is coupled after the third block. Thus, even in a case where it is difficult to directly delete a block, the information processing apparatus 100 may represent that the block is invalidated.

With the information processing apparatus 100, it is possible to accept a display request for all or some of the plurality of blocks. With the information processing apparatus 100, in a case where the display request is accepted, it is possible to specify the third block based on the fourth block when all or some of the plurality of blocks are displayed. With the information processing apparatus 100, it is possible to exclude the third block from display targets or display the third block in a display mode corresponding to the invalidation. Thus, the information processing apparatus 100 enables the user to intuitively recognize a state in which the block is invalidated.

With the information processing apparatus 100, it is possible to realize the plurality of blocks with a hash chain. Thus, the information processing apparatus 100 may ensure tamper resistance of the plurality of blocks.

With the information processing apparatus 100, it is possible to control the plurality of blocks such that a copy of an accompanying block that is coupled to the first block and includes related data related to data of the first block is coupled to a copy of the first block. Thus, the information processing apparatus 100 may appropriately copy the related data.

With the information processing apparatus 100, it is possible to control the plurality of blocks such that a copy of an accompanying block that is coupled to the first block and includes an identifier of the related data related to the data of the first block is coupled to the copy of the first block. Thus, the information processing apparatus 100 may suppress an increase in memory use amount for storing the related data.

With the information processing apparatus 100, it is possible to accept a request of invalidating the first block managed by the information processing apparatus 100 among the plurality of blocks formed such that each block includes identifiers of other blocks coupled before and after the block. With the information processing apparatus 100, in a case where the request is accepted, it is possible to control the plurality of blocks such that the second block indicating that the first block is to be invalidated is added to the plurality of blocks and is coupled after the first block. Thus, the information processing apparatus 100 may flexibly update the plurality of blocks. Even in a case where it is difficult to directly delete a block, the information processing apparatus 100 may represent that the block is invalidated.

The information processing method described in the present embodiment may be realized by executing a program prepared in advance by a computer, such as a PC or a workstation. The information processing program described in the present embodiment is recorded on a computer-readable recording medium. The information processing program is read from the recording medium by the computer and is executed by the computer. The recording medium is a hard disc, a flexible disc, a compact disc (CD)-ROM, a magneto optical (MO) disc, a Digital Versatile Disc (DVD), or the like. The information processing program described in the present embodiment may be distributed via a network, such as the Internet.

In relation to the embodiment described above, appendices below are further disclosed.

## Claims

1. An information processing program comprising instructions which, when executed by a computer, cause the computer to execute processing comprising:
accepting a first request of newly coupling a second block before a first block managed by the computer, among a plurality of blocks formed to include identifiers of other blocks coupled before and after each block in the block; and
controlling, in a case where the first request is accepted, the plurality of blocks such that a copy of the first block is added to the plurality of blocks and coupled after the second block.

2. The information processing program according to claim 1,
wherein the controlling includes controlling, in a case where the first request is accepted, the plurality of blocks such that the copy of the first block that includes a copy flag which indicates the copy of the first block is added to the plurality of blocks and is coupled after the second block.

3. The information processing program according to claim 2,
the processing further comprising:
accepting a display request for all or some of the plurality of blocks; and
specifying, when the all or some of the plurality of blocks are displayed in a case where the display request is accepted, the copy of the first block based on the copy flag, and displaying the copy of the first block as the original first block or a correspondence with the original first block in a distinguishable manner.

4. The information processing program according to any one of claims 1 to 3,
the processing further comprising:
accepting a second request of invalidating a third block managed by the computer, among the plurality of blocks; and
controlling, in a case where the second request is accepted, the plurality of blocks such that a fourth block which indicates that the third block is to be invalidated is added to the plurality of blocks and coupled after the third block.

5. The information processing program according to claim 4,
the processing further comprising:
accepting a display request for all or some of the plurality of blocks; and
specifying, when the all or some of the plurality of blocks are displayed in a case where the display request is accepted, the third block based on the fourth block, and excluding the third block from a display target or displaying the third block in a display mode which corresponds to the invalidation.

6. The information processing program according to any one of claims 1 to 3,
wherein an accompanying block that includes related data related to data of each of the blocks is coupled to the block, and
the controlling includes controlling, in a case where the first request is accepted, the plurality of blocks such that the copy of the first block is added to the plurality of blocks and coupled after the second block, and a copy of the accompanying block coupled to the first block is coupled to the copy of the first block.

7. The information processing program according to any one of claims 1 to 3,
wherein an accompanying block that includes an identifier of related data related to data of each of the blocks is coupled to the block, and
the controlling includes controlling, in a case where the first request is accepted, the plurality of blocks such that the copy of the first block is added to the plurality of blocks and coupled after the second block, and a copy of the accompanying block coupled to the first block is coupled to the copy of the first block.

8. An information processing method implemented by a computer, the information processing method comprising:
accepting a first request of newly coupling a second block before a first block managed by the computer, among a plurality of blocks formed to include identifiers of other blocks coupled before and after each block in the block; and
controlling, in a case where the first request is accepted, the plurality of blocks such that a copy of the first block is added to the plurality of blocks and coupled after the second block.

9. An information processing apparatus comprising a control unit configured to perform processing including:
accepting a first request of newly coupling a second block before a first block managed by the computer, among a plurality of blocks formed to include identifiers of other blocks coupled before and after each block in the block; and
controlling, in a case where the first request is accepted, the plurality of blocks such that a copy of the first block is added to the plurality of blocks and coupled after the second block.

10. An information processing program comprising instructions which, when executed by a computer, cause the computer to execute processing comprising:
accepting a request of invalidating a first block managed by the computer, among a plurality of blocks formed to include identifiers of other blocks coupled before and after each block in the block; and
controlling, in a case where the request is accepted, the plurality of blocks such that a second block which indicates that the first block is to be invalidated is added to the plurality of blocks and coupled after the first block.

11. An information processing method implemented by a computer, the information processing method comprising:
accepting a request of invalidating a first block managed by the computer, among a plurality of blocks formed to include identifiers of other blocks coupled before and after each block in the block; and
controlling, in a case where the request is accepted, the plurality of blocks such that a second block which indicates that the first block is to be invalidated is added to the plurality of blocks and coupled after the first block.

12. An information processing apparatus comprising a control unit configured to perform processing including:
accepting a request of invalidating a first block managed by the computer, among a plurality of blocks formed to include identifiers of other blocks coupled before and after each block in the block; and
controlling, in a case where the request is accepted, the plurality of blocks such that a second block which indicates that the first block is to be invalidated is added to the plurality of blocks and coupled after the first block.

13. The information processing program according to claim 1, the processing further comprising:
accepting a second request of invalidating the first block; and
controlling, in a case where the second request is accepted, the plurality of blocks such that a third block which indicates that the first block is to be invalidated is added to the plurality of blocks and coupled after the first block.
